# EUROPEAN PATENT APPLICATION

(11) **EP 1 854 538 A1**
(43) Date of publication of application: **14.11.2007**
(21) Application number: 06714015.2
(22) Date of filing: 17.02.2006
(51) Int. Cl.: B01J 23/58, B01D 53/94, B01J 23/89, F01N 3/10

(54) **CATALYST COMPOSITION**

(30) Priority: 04.03.2005 JP 2005061008; 16.06.2005 JP 2005177047
(71) Applicant: Daihatsu Motor Co., Ltd., Ikeda-shi, Osaka 563-8651 (JP); Cataler Corporation, Kakegawa-shi Shizuoka 437-1492 (JP)
(72) Inventor: TANAKA, Hirohisa, DAIHATSU MOTOR CO. LTD., Gamo-gun, Shiga 520-2593 (JP); MITSUMORI, Kiyotomi, DAIHATSU MOTOR CO. LTD., Gamo-gun, Shiga 520-2593 (JP); TAN, Isao, DAIHATSU MOTOR CO. LTD., Gamo-gun, Shiga 520-2593 (JP); TAKAHASHI, Ichiro, DAIHATSU MOTOR CO. LTD., Gamo-gun, Shiga 520-2593 (JP); UENISHI, Mari, DAIHATSU MOTOR CO. LTD., Gamo-gun, Shiga 520-2593 (JP); KAJITA, Nobuhiko, DAIHATSU MOTOR CO. LTD., Gamo-gun, Shiga 520-2593 (JP); TANIGUCHI, Masashi, DAIHATSU MOTOR CO. LTD., Gamo-gun, Shiga 520-2593 (JP); NAITO, Kazuya, DAIHATSU MOTOR CO. LTD., Gamo-gun, Shiga 520-2593 (JP); KIMURA, Mareo, Kakegawa-shi, Shizuoka 437-1492 (JP); NARITA, Keiichi, Kakegawa-shi, Shizuoka 437-1492 (JP); HIRAI, Akimasa, Kakegawa-shi, Shizuoka 437-1492 (JP); SUZUKI, Hiromasa, Kakegawa-shi, Shizuoka 437-1492 (JP); MATSUEDA, Satoshi, Kakegawa-shi, Shizuoka 437-1492 (JP); NAGASHIMA, Hiroki, Kakegawa-shi, Shizuoka 437-1492 (JP); ISHII, Yoshinori, Kakegawa-shi, Shizuoka 437-1492 (JP); AONO, Norihiko, Kakegawa-shi, Shizuoka 437-1492 (JP)
(74) Representative: Schwabe - Sandmair - Marx
(86) International application number: PCT/JP2006/302874
(87) International publication number: WO 2006/095557

(57) **Abstract**

An object of the present invention is to provide a catalyst composition containing a perovskite-type composite oxide which exhibits a satisfactory catalytic performance over a long time even in a high temperature atmosphere and has a stable quality in which Rh and/or Pt dissolves to form a solid solution at a high rate.

To achieve the object described above, in the present invention the catalyst composition is prepared to comprise an Rh-containing perovskite-type composite oxide represented by the following general formula (I) and/or a Pt-containing perovskite-type composite oxide represented by the following general formula (II) and a thermostable oxide optionally containing a noble metal.

A¹ₓA²_{w}B¹_{1-(y+z)}B²_{y}Rh_{z}O_{3±δ} (I)

A³ᵣA⁴ₛB³₁₋₍ₜ₊ᵤ₎B⁴ₜPtᵤO_{3±δ'} (II)

## Description

### Technical Field

The present invention relates to a catalyst composition. More particularly, it relates to a catalyst composition comprising an Rh-containing perovskite-type composite oxide and/or a Pt-containing perovskite-type composite oxide.

### Background Art

Noble metals such as Rh (rhodium), Pt (platinum), and Pd (palladium) show high catalytic activities and have been widely used as catalytic components of three-way catalysts that can simultaneously clean up carbon monoxide (CO), hydrocarbons (HC), and nitrogen oxides (NOx) contained in exhausted gas.

Of these noble metals, Rh satisfactorily reduces NOx but exhibits insufficient thermostability. For improving the thermostability, Rh is supported by perovskite-type composite oxides represented by a general formula ABO₃ on their surfaces.

Of these noble metals, Pt satisfactorily oxidizes CO even at low temperatures but exhibits insufficient thermostability. For improving the thermostability, Pt is also supported by the perovskite-type composite oxide represented by the general formula ABO₃ on their surfaces.

Additionally, by allowing Rh or Pt to coordinate (dissolve to form a solid solution) on the B site of the perovskite-type composite oxides represented by the general formula ABO₃, the thermostability and a exhaust gas purifying capability can be more improved than by the supporting of Rh or Pt on surface. For example, La_{0.8}Ba_{0.2}Ni_{0.48}Co_{0.50}Rh_{0.02}O₃ (see following Patent Document 1) and La_{0.4}Sr_{0.6}Co_{0.95}Rh_{0.05}O₃ (see following Patent Document 2) have been proposed as such perovskite-type composite oxides to which Rh coordinates. Likewise, La_{0.2}Ba_{0.7}Y_{0.1}Cu_{0.48}Cr_{0.48}Pt_{0.04}O₃ (see following Patent Document 1) and La_{0.4}Sr_{0.6}Co_{0.95}Pt_{0.05}O₃ (see following Patent Document 2), for example, have been proposed as such perovskite-type composite oxides to which Pt coordinates.

Following Patent Document 3 proposes an exhaust gas purifying catalyst containing an alumina supporting rhodium and platinum, a zirconium composite oxide supporting rhodium and platinum, and a cerium composite oxide supporting platinum.
Patent Document 1: Japanese Published Unexamined Patent Publication No. 8-217461
Patent Document 2: Japanese Published Unexamined Patent Publication No. 5-76762
Patent Document 3: Japanese Published Unexamined Patent Publication No. 2003-1109

### Disclosure of the Invention

### Problems to be Solved by the Invention

Rhodium and platinum, however, are expensive and there has been a industrial desire to produce an exhaust gas purifying catalyst that requires smallest possible quantities of rhodium and platinum for effectively developing the gas purifying capability.

An object of the present invention is to provide a catalyst composition containing perovskite-type composite oxides which effectively utilizes the high catalytic activity of Rh and/or Pt, prevents the activity from deteriorating due to grain growth in a long-term use, exhibits satisfactory catalytic performance over a long time even in the high-temperature atmosphere, and has stable quality in which Rh and/or Pt dissolves to form a solid solution at a high rate.

### Means for Solving the Problems

To achieve the above object, the present invention provides:
(1) a catalyst composition comprising an Rh-containing perovskite-type composite oxide represented by the following general formula (I) and/or a Pt-containing perovskite-type composite oxide represented by the following general formula (II), and a thermostable oxide optionally containing a noble metal,

   A¹ₓA²_{w}B¹_{1-(y+z)}B²_{y}Rh₂O_{3±δ} (I)

   wherein A¹ represents at least one element selected from alkaline earth metals; A² represents at least one element selected from rare earth elements; B¹ represents at least one element selected from Ti, Zr, Hf, and tetravalent rare earth elements; B² represents at least one element selected from Al and transition elements (excluding tetravalent rare earth elements, Ti, Zr, Hf, and Rh); x and w represent atomic ratios satisfying the following conditions: 0.8 ≤ (x + w) ≤ 1.3 (0.6 ≤ x ≤ 1.3, and 0 ≤ w ≤ 0.4); y represents an atomic ratio satisfying the following condition: 0 ≤ y < 0.5; z represents an atomic ratio satisfying the following condition: 0 < z ≤ 0.5; δ represents an oxygen excess or an oxygen deficiency,

   A³ᵣA⁴ₛB³₁₋₍ₜ₊ᵤ₎B⁴ₜPtᵤO_{3±δ'} (II)

   wherein A³ represents at least one element selected from alkaline earth metals; A⁴ represents at least one element selected from rare earth elements; B³ represents at least one element selected from Ti, Zr, Hf, and tetravalent rare earth elements; B⁴ represents at least one element selected from Al and transition elements (excluding tetravalent rare earth elements, Ti, Zr, Hf, and Pt); r and s represent atomic ratios satisfying the following conditions: 0.8 ≤ (r + s) ≤ 1.3 (0.6 ≤ r ≤ 1.3, and 0 ≤ s ≤ 0.4); t represents an atomic ratio satisfying the following condition: 0 ≤ t < 0.5; u represents an atomic ratio satisfying the following condition: 0 < u ≤ 0.5; and δ' represents an oxygen excess or an oxygen deficiency;
(2) the catalyst composition described in (1), wherein the atomic ratio z in the general formula (I) satisfies the following condition: 0 < z ≤ 0.2;
(3) the catalyst composition described in (1), wherein the atomic ratio u in the general formula (II) satisfies the following condition: 0 < u ≤ 0.2;
(4) the catalyst composition described in (1), wherein the thermostable oxide optionally containing a noble metal comprises a Pd-containing perovskite-type composite oxide represented by the following general formula (III),

   A⁵ₚB⁵ (1-q) Pd_{q}O_{3±δ"} (III)

   wherein A⁵ represents at least one element selected from rare earth elements and alkaline earth metals; B⁵ represents at least one element selected from Al, Si, and transition elements (excluding rare earth elements and Pd); p represents an atomic ratio satisfying the following condition: p ≥ 0.8; q represents an atomic ratio satisfying the following condition: 0 < q ≤ 0.5; and δ" represents an oxygen excess or an oxygen deficiency;
(5) the catalyst composition described in (4), wherein the atomic ratio q in the general formula (III) satisfies the following condition: 0 < q ≤ 0.2;
(6) the catalyst composition described in (1), wherein the thermostable oxide optionally containing a noble metal comprises a zirconia composite oxide represented by the following general formula (IV),

   Zr₁₋₍ₖ₊ₘ₎A⁶ₖNₘO₂₋ₙ (IV)

   wherein A⁶ represents at least one element selected from rare earth elements, alkaline earth elements, Al, and Si; N represents at least one noble metal selected from Rh, Pt, and Pd; k represents an atomic ratio satisfying the following condition: 0.01 < k < 0.8; m represents an atomic ratio satisfying the following condition: 0 < m ≤ 0.2; and n represents an oxygen deficiency;
(7) the catalyst composition described in (6), wherein the atomic ratio m in the general formula (IV) satisfies the following condition: 0 < m ≤ 0.05;
(8) the catalyst composition described in (1), wherein the thermostable oxide optionally containing a noble metal comprises a zirconia composite oxide represented by the following general formula (V),

   Zr₁-(a+b)CeₐR_{b}O_{2-c} (V)

   wherein R represents an alkaline earth metal and/or a rare earth element (excluding Ce); a represents an atomic ratio satisfying the following condition: 0.1 ≤ a ≤ 0.65; b represents an atomic ratio satisfying the following condition: 0 ≤ b ≤ 0.55; [1-(a+ b)] represents an atomic ratio of Zr satisfying the following condition: 0.35 ≤ [1-(a + b)] ≤ 0.9; c represents an oxygen deficiency;
(9) the catalyst composition described in (1), wherein the thermostable oxide optionally containing a noble metal comprises a ceria composite oxide represented by the following general formula (VI),

   Ce_{1-(d+e)}Zr_{d}LₑO_{2-f} (VI)

   wherein L represents an alkaline earth metal and/or a rare earth element (excluding Ce); d represents an atomic ratio satisfying the following condition: 0.2 ≤ d ≤ 0.7; e represents an atomic ratio satisfying the following condition: 0 ≤ e ≤ 0.2; [1-(d + e)] represents an atomic ratio satisfying the following condition: 0.3 ≤ [1-(d + e) ] ≤ 0.8; and f represents an oxygen deficiency;
(10) the catalyst composition described in (1), wherein the thermostable oxide optionally containing a noble metal comprises an alumina;
(11) the catalyst composition described in (10), wherein the alumina comprises a theta-alumina;
(12) the catalyst composition described in (10), wherein the alumina comprises an alumina represented by the following general formula (VII),

   (Al_{1-g}D_{g})₂O₃ (VII)

   wherein D represents La and/or Ba; and g represents an atomic ratio satisfying the following condition: 0 ≤ g ≤ 0.5;
(13) the catalyst composition described in (1), which further comprises at least one salt selected from sulfates, carbonates, nitrates, and acetates of Ba, Ca, Sr, Mg, or La;
(14) the catalyst composition described in (1), wherein the Rh-containing perovskite-type composite oxide and/or Pt-containing perovskite-type composite oxide is further coated with a noble metal;
(15) the catalyst composition described in (4), wherein the Pd-containing perovskite-type composite oxide is further coated with a noble metal;
(16) the catalyst composition described in (1), which comprises a coating layer supported on a catalyst carrier, the coating layer comprises at least an outer layer as a surface layer and an inner layer arranged inside the outer layer, and the Rh-containing perovskite-type composite oxide and/or Pt-containing perovskite-type composite oxide, and the thermostable oxide optionally containing a noble metal are contained at least one of the outer layer and the inner layer;
(17) the catalyst composition described in (16), wherein at least one layer other than the outer layer comprises the Pd-containing perovskite-type composite oxide;
(18) the catalyst composition described in (17), wherein the Rh-containing perovskite-type composite oxide and/or Pt-containing perovskite-type composite oxide is contained in at least one layer other than the layer comprising the Pd-containing perovskite-type composite oxide;
(19) the catalyst composition described in (17), wherein the Rh-containing perovskite-type composite oxide and/or Pt-containing perovskite-type composite oxide is arranged outside the layer comprising the Pd-containing perovskite-type composite oxide,;
(20) the catalyst composition described in (17), wherein the layer comprising the Pd-containing perovskite-type composite oxide further comprises at least one salt selected from sulfates, carbonates, nitrates, and acetates of Ba, Ca, Sr, Mg, or La;
(21) the catalyst composition described in (16), which further comprises a covering layer containing a noble metal and being arranged on the outer layer;
(22) the catalyst composition described in (17), wherein the coating layer comprises an intermediate layer arranged between the layer comprising the Pd-containing perovskite-type composite oxide and the layer comprising the Rh-containing perovskite-type composite oxide, and the intermediate layer comprises a ceria composite oxide;
(23) the catalyst composition described in (1), which is an exhaust gas purifying catalyst;
(24) the catalyst composition described in (23), which is an exhaust gas purifying catalyst for gasoline engines;, and
(25) the catalyst composition described in (23), which is an exhaust gas purifying catalyst for diesel engines.

### Effects of the Invention

The catalyst composition of the present invention can maintain the catalytic activities of Rh and/or Pt at high level over a long time even in an atmosphere of high temperature exceeding 900°C to 1000°C and exhibit excellent catalytic activities.

### Brief Description of the Drawings

FIG. 1 is a time chart showing steps of one cycle of an endurance test at 1050°C.

FIG. 2 is a time chart showing steps of one cycle of an endurance test at 1150°C.

### Embodiments of the Invention

The catalyst composition of the present invention comprises an Rh-containing perovskite-type composite oxide represented by the following general formula (I) and/or a Pt-containing perovskite-type composite oxide represented by the following general formula (II), and a thermostable oxide optionally containing a noble metal:

A¹ₓA²_{w}B¹_{1-(y+z)}B²_{y}Rh_{z}O_{3±δ} (I)

wherein A¹ represents at least one element selected from alkaline earth metals; A² represents at least one element selected from rare earth elements; B¹ represents at least one element selected from Ti, Zr, Hf, and tetravalent rare earth elements; B² represents at least one element selected from Al and transition elements (excluding tetravalent rare earth elements, Ti, Zr, Hf, and Rh); x and w represent atomic ratios satisfying the following conditions: 0.8 ≤ (x + w) ≤ 1.3 (0.6 ≤ x ≤ 1.3, and 0 ≤ w ≤ 0.4); y represents an atomic ratio satisfying the following condition: 0 ≤ y < 0.5; z represents an atomic ratio satisfying the following condition: 0 < z ≤ 0.5; and δ represents an oxygen excess or an oxygen deficiency,

A³ᵣA⁴ₛB³₁₋₍ₜ₊ᵤ₎B⁴ₜPtᵤO_{3±δ'} (II)

wherein A³ represents at least one element selected from alkaline earth metals; A⁴ represents at least one element selected from rare earth elements; B³ represents at least one element selected from Ti, Zr, Hf, and tetravalent rare earth elements; B⁴ represents at least one element selected from Al and transition elements (excluding tetravalent rare earth elements, Ti, Zr, Hf, and Pt); r and s represent atomic ratios satisfying the following conditions: 0.6 ≤ (r + s) ≤ 1.3 (0.6 ≤ r ≤ 1.3, and 0 ≤ s ≤ 0.4); t represents an atomic ratio satisfying the following condition: 0 ≤ t < 0.5; u represents an atomic ratio satisfying the following condition: 0 < u ≤ 0.5; and δ' represents an oxygen excess or an oxygen deficiency.

The Rh-containing perovskite-type composite oxides represented by the general formula (I) are composite oxides having a perovskite-type crystal structure represented by a general formula ABO₃.

In the perovskite-type composite oxides, the alkaline earth metal represented by A¹ is essentially coordinated and the rare earth element represented by A² is optionally coordinated on the A site.

On the B site, Rh is essentially coordinated; at least one element represented by B¹ and selected from Ti, Zr, Hf and tetravalent rare earth elements is essentially coordinated; and at least one element represented by B² and selected from transition elements (excluding tetravalent rare earth elements, Ti, Zr, Hf, and Rh) and Al is optionally coordinated.

Examples of the alkaline earth metal represented by A¹ in the general formula. (I) are Be (beryllium), Mg (magnesium), Ca (calcium), Sr (strontium), Ba (barium), and Ra (radium), of which Ca, Sr, Ba and the like are preferred. Each of these can be used alone or in combination.

Examples of the rare earth element represented by A² in the general formula (I) are rare earth elements which always are trivalent, such as Sc (scandium), Y (yttrium), La (lanthanum), Nd (neodymium), Pm (promethium), Gd (gadolinium), Dy (dysprosium), Ho (holmium), Er (erbium), and Lu (lutetium); rare earth elements which can be trivalent and tetravalent (hereinafter referred to as "tetravalent rare earth elements"), such as Ce (cerium), Pr (praseodymium), and Tb (terbium); and rare earth elements which can be divalent and trivalent, such as Sm (samarium), Eu (europium), Tm (thulium), and Yb (ytterbium). Each of these can be used alone or in combination.

The rare earth element represented by A² is preferably a rare earth element which always is trivalent and more preferably La, Nd, or Y.

On the A site of the general formula (I), w represents the atomic ratio of A² satisfying the following condition: 0 ≤ w ≤ 0.4; and w preferably satisfies the following condition: 0 ≤ w ≤ 0.05. That is, the rare earth element represented by A² is not contained or contained at an atomic ratio of 0.4 or less, and preferably 0.05 or less on the A site.

On the A site of the general formula (I), the atomic ratio w more preferably represents 0. That is, the A site does not comprise the rare earth element represented by A² but comprises the alkaline earth metal represented by A¹ alone.

On the A site of the general formula (I), x and w represent the atomic ratios satisfying the following conditions: 0.8 ≤ (x + w) ≤ 1.3 (0.6 ≤ x ≤ 1.3, and 0 ≤ w ≤ 0.4). That is, the total atomic ratio (x + w) of the elements to be coordinated on the A site (A¹ and A²) is 0.8 or more and 1.3 or less. When the total atomic ratio (x + w) is 0.8 or more and 1.3 or less, Rh can be dissolved to form stably a solid solution at a higher rate. When the total atomic ratio (x + w) exceeds 1.3, byproducts other than the above-mentioned composite oxides may be formed.

The atomic ratio x satisfies the following condition: 0.6 ≤ x ≤ 1.3. That is, the alkaline earth metal represented by A¹ is essentially contained at an atomic ratio of 0.6 or more and 1.3 or less.

On the other hand, the atomic ratio w satisfies the following condition: 0 ≤ w ≤ 0.4. That is, the rare earth element represented by A² is not contained (w = 0) when the atomic ratio x of the alkaline earth metal represented by A¹ is 1.3 (x = 1.3). The rare earth element represented by A² is optionally contained at an atomic ratio w of 0.4 or less and the total atomic ratio (x + w) of 1.3 or less [0 ≤ w ≤ 0.4 and (x + w) ≤ 1.3] when the atomic ratio x is 0.9 or more and less than 1.3 (0.9 ≤ x < 1.3). It is optionally contained at the atomic ratio w of 0.4 or less (0 ≤ w ≤ 0.4) when x is 0.8 or more and less than 0.9 (0.8 ≤ x < 0.9). It is optionally contained at an atomic ratio w of 0.4 or less and the total atomic ratio (x + w) of 0.8 or more [0 ≤ w ≤ 0.4 and 0.8 ≤ (x + w)] when x is 0.6 or more and less than 0.8 (0.6 ≤ x < 0.8).

The atomic ratio x in the general formula (I) preferably satisfies the condition: 0.8 ≤ x ≤ 1.3; and more preferably the condition: 0.95 ≤ (w + x) ≤ 1.3, and further preferably the condition: 1.00 ≤ (w+x) ≤ 1.30. When the total atomic ratio (x + w) is 1.00, the ratios of the elements to be coordinated on the A site establish a stoichiometric ratio, and the perovskite-type composite oxide is thereby stabilized.

The element represented by B¹ in the general formula (I) is at least one selected from Ti (titanium), Zr (zirconium), Hf (hafnium), and tetravalent rare earth elements Ce (cerium), Pr (praseodymium) and Tb (terbium). Each of Ti, Zr, Hf and tetravalent rare earth elements can be used alone or in combination.

In particular, the element represented by B¹ is preferably at least one of Ti, Zr, and Hf, more preferably Ti or Zr, and further preferably Ti.

The transition elements represented by B² in the general formula (I) are transition elements excluding tetravalent rare earth elements, Ti, Zr, Hf, and Rh. Specific examples thereof are, in the Periodic Table of Elements (IUPAC, 1990), elements having an atomic number of 21 (Sc), atomic numbers of 23 (V) through 30 (Zn), an atomic number of 39 (Y), atomic numbers of 41 (Nb) through 44 (Ru), atomic numbers of 46 (Pd) through 48 (Cd), an atomic number of 57 (La), atomic numbers of 60 (Nd) through 64 (Gd), atomic numbers of 66 (Dy) through 71 (Lu), and atomic numbers of 73 (Ta) through 80 (Hg).

In particular, the transition elements represented by B² are preferably transition elements excluding rare earth elements, Ti, Zr, Hf, Rh and Pd. Examples of such preferred transition elements B² are elements having atomic numbers of 23 (V) through 30 (Zn), an atomic numbers of 41 (Nb) through 44 (Ru), an atomic number of 47 (Ag), atomic number of 48 (Cd), and atomic numbers of 73 (Ta) through 80 (Hg).

More specific examples of the transition elements represented by B² are Cr (chromium), Mn (manganese), Fe (iron), Co (cobalt), Ni (nickel), Cu (copper), and Y (yttrium). Each of these transition elements can be used alone or in combination.

That is, the at least one element represented by B² selected from Al and transition elements is preferably Cr, Mn, Fe, Co, Ni, Cu, Y, Al, and the like.

On the B site of the general formula (I), y represents the atomic ratio of B² satisfying the following condition: 0 ≤ y < 0.5; and preferably satisfying the following condition: 0 ≤ y < 0.3. That is, on the B site, the transition element and/or Al represented by B² is not contained or is contained at an atomic ratio of less than 0.5, and preferably at an atomic ratio of less than 0.3.

On the B site of the general formula (I), z represents the atomic ratio of Rh satisfying the following condition: 0 < z ≤ 0.5. That is, Rh is contained on the B site at an atomic ratio of 0.5 or less. The atomic ratio z preferably satisfies the condition: 0 < z ≤ 0.2.

Accordingly, at least one element selected from Ti, Zr, Hf and tetravalent rare earth elements is contained on the B site at the total atomic ratio of [1- (y + z)]. That is, these elements are contained on the B site at the atomic ratio [1-(y + z)] as a residue of the total atomic ratio (y + z) of the above-mentioned transition element and/or Al represented by B² and Rh.

The atomic ratio y on the B site in the general formula (I) is more preferably 0. Specifically, the B site preferably does not comprise the transition elements and Al represented by B² but comprises only Rh and at least one element represented by B¹ and selected from Ti, Zr, Hf and tetravalent rare earth elements.

In the general formula (I), δ represents an oxygen excess or an oxygen deficiency and is represented by 0 or a positive number. More specifically, it represents an excessive atomic ratio or deficient atomic ratio of oxygen atoms caused by allowing the constitutional elements of the A site to be excessive or deficient to the stoichiometric ratio of a perovskite-type composite oxide of A:B:O = 1:1:3.

A rate of solid solution of Rh in the Rh-containing perovskite-type composite oxide represented by the general formula (I) is not specifically limited, but is preferably 50% or more, and more preferably 80% or more. When the rate of solid solution of Rh is less than 50%, grain growth of Rh may not be effectively inhibited when the catalyst composition of the present invention is used in an atmosphere of high temperature over a long time.

The rate of solid solution to the perovskite-type composite oxides can be determined, for example, using ICP emission spectroscopy.

The Rh-containing perovskite-type composite oxide represented by the general formula (I) can be prepared by any suitable process for preparing composite oxides, such as a coprecipitation process, a citrate complex process, or an alkoxide process.

According to the coprecipitation process, the Rh-containing perovskite-type composite oxide can be prepared, for example, in the following manner. Initially, an aqueous mixed salt solution containing salts (materials for coordinating elements) of elements (hereinafter referred to as "respective elements" in the preparation of the Rh-containing perovskite-type composite oxide) of the above-mentioned coordinating elements other than Rh and other noble metal(s) such as Ru (ruthenium), Pd, Ag (silver), Os (osmium), Ir (iridium), and Pt is prepared so as to establish the above-mentioned stoichiometric ratio of the respective elements. After the aqueous mixed salt solution is coprecipitated by adding a neutralizing agent thereto, the resulting coprecipitate is dried and then subjected to a heat treatment (primary baking). Thereafter, an aqueous solution containing salt(s) of Rh and, if necessary, other noble metals (noble metal materials) is added to and supported by the heat-treated product (primarily-baked article) so that the respective elements and noble metal(s) such as Rh establish the above-mentioned stoichiometric ratio. Thus, a precursor composition is prepared. The resulting precursor composition is then subjected to a heat treatment (secondary baking) to obtain an Rh-containing perovskite-type composite oxide.

Examples of the salts (coordinating element materials) of the respective elements are inorganic salts such as sulfates, nitrates, chlorides, and phosphates; and organic acid salts such as acetates and oxalates. The aqueous mixed salt solution can also be prepared, for example, by adding the salts of the respective elements to water so as to establish the above-mentioned stoichiometric ratio and mixing them with stirring.

Examples of the neutralizing agent are ammonia; organic bases including amines such as triethylamine and pyridine; and inorganic bases such as sodium hydroxide, potassium hydroxide, potassium carbonate, and ammonium carbonate. The neutralizing agent is added to an aqueous mixed salt solution so that the resulting solution has a pH of about 6 to about 10.

The heat treatment (primary baking) of the coprecipitate is carried out, after washing the coprecipitate according to necessity and drying, for example, through vacuum drying or forced-air drying, by heating it, for example, at 300°C to 1200°C, preferably at 500°C to 1100°C, and more preferably at 650°C to 1000°C, for 1 to 48 hours.

Examples of the salts (noble metal materials) of noble metals are inorganic salts such as sulfates, nitrates, chlorides, and phosphates; and organic acid salts such as acetates and oxalates. A noble metal salt solution can be a solution of the above-mentioned salt or can practically be an aqueous nitrate solution, an aqueous dinitrodiammine nitrate solution, or an aqueous chloride solution. More specific examples are rhodium salt solutions such as aqueous rhodium nitrate solution and aqueous rhodium chloride solution; palladium salt solutions such as aqueous palladium nitrate solution and aqueous palladium chloride solution; platinum salt solutions such as aqueous dinitrodiammine platinum nitrate solution, aqueous chloroplatinic acid solution, and aqueous tetraammine solution. Each of these noble metal salt solutions can be used alone or in combination.

Then, the noble metal is supported by the coprecipitate by mixing and impregnating the coprecipitate after the heat treatment (primary baking) with an aqueous noble metal salt solution for 0.5 to 12 hours. An amount of the noble metal supported by the coprecipitate is, for example, 20 parts by weight or less, and preferably 0.1 to 10 parts by weight, to 100 parts by weight of the coprecipitate.

The heat treatment (secondary baking) of the precursor composition is carried out, after washing the resulting precursor composition with water according to necessity and drying, for example, at 50°C to 200°C for 1 to 48 hours or drying, for example, through vacuum drying or forced-air drying, by subjecting it to a heat treatment at, for example, about 500°C to 1200°C, preferably about 600°C to 1100°C, and more preferably about 800°C to 1000°C, for 1 to 48 hour. When the heat treatment temperature in the secondary baking is lower than the above-specified range, the rate of solid solution may be less than 50%. In contrast, when it is higher than the above-specified range, the noble metal may deteriorate to decrease catalytic activity, although the rate of solid solution falls within the above-specified range.

Alternatively, the Rh-containing perovskite-type composite oxide can be prepared according to the coprecipitation process, for example, in the following manner. Initially, an aqueous mixed salt solution containing salts (coordinating element materials) of the respective elements and salts (noble metal materials) of Rh is prepared so as to establish the above-mentioned stoichiometric ratio of the respective elements and the noble metal(s) such as Rh. Then, the aqueous mixed salt solution is coprecipitated by adding a neutralizing agent thereto to obtain a precursor composition. Next, the resulting precursor composition is dried and subjected to a heat treatment to obtain an Rh-containing perovskite-type composite oxide.

According to the citrate complex process, the Rh-containing perovskite-type composite oxide is prepared, for example, in the following manner. Initially, an aqueous citrate-mixed salt solution containing citric acid and (coordinating element materials) salts of the respective elements is prepared so as to establish the above-mentioned stoichiometric ratio of the respective elements. The aqueous citrate-mixed salt solution is evaporated to dryness to form citrate complexes of the respective elements. The resulting citrate complexes are provisionally baked and subjected to a heat treatment (primary baking) to obtain a powder containing the respective elements. Next, an aqueous solution containing salts (noble metal materials) of Rh and, if necessary, other noble metals is added to and supported by the resulting powder containing the respective elements so as to establish the above-mentioned stoichiometric ratio of the respective elements and the noble metal(s) such as Rh. Thus, a precursor composition is prepared. The resulting precursor composition is then subjected to a heat treatment (secondary baking) to obtain an Rh-containing perovskite-type composite oxide.

The salts (coordinating element materials) of the respective elements can be the same salts as listed above.

The aqueous citrate-mixed salt solution can be prepared by preparing an aqueous mixed salt solution through the same procedure of the coprecipitation process and adding an aqueous solution of citric acid to the aqueous mixed salt solution.

The aqueous citrate-mixed salt solution is then evaporated to dryness to form citrate complexes of the respective elements. The evaporation to dryness is carried out to remove fluids immediately at a temperature at which the formed citrate complexes are not decomposed, for example, at room temperature to about 150°C.

A provisional baking of the citrate complexes may be carried out, for example, by heating at 250°C or higher, and preferably 250°C to 350°C, in vacuo or in an inert atmosphere for 1 to 12 hours.

A heat treatment (primary baking) of the citrate complexes is carried out after the provisional baking, for example, by heating through the same procedure of the coprecipitation process.

The noble metal can be supported by the powder after the heat treatment (primary baking) by any process not specifically limited. For example, it can be supported by impregnating the powder with an aqueous noble metal salt by the same procedure as in the coprecipitation process.

A heat treatment (secondary baking) of a precursor composition is carried out, after washing the precursor composition with water according to necessity, by heating in the same manner as the coprecipitation process.

According to the citrate complex process, the Rh-containing perovskite-type composite oxide can also be prepared, for example, in the following manner. An aqueous solution containing salts (coordinating element materials) of the respective elements and salts (noble metal materials) of Rh and, if necessary, other noble metals is prepared as an aqueous citrate-mixed salt solution so as to establish the above-mentioned stoichiometric ratio of the respective elements and noble metal(s) such as Rh. The aqueous citrate-mixed salt solution is evaporated to dryness to form citrate complexes of the respective elements with noble metal(s) such as Rh thereby to obtain a precursor composition. Next, the resulting precursor composition is provisionally baked and subjected to a heat treatment. Thus, the Rh-containing perovskite-type composite oxide can be obtained.

According to the alkoxide process, the Rh-containing perovskite-type composite oxide can be prepared, for example, in the following manner. A mixed alkoxide solution containing alkoxides (coordinating element materials) of the respective elements is prepared so as to establish the above-mentioned stoichiometric ratio of the respective elements. The mixed alkoxide solution is precipitated on hydrolysis by adding water, and the resulting precipitate is dried and subjected to a heat treatment (primary baking) to obtain a powder containing the respective elements. Next, the powder containing the respective elements is allowed to support Rh and, if necessary, other noble metals by adding an aqueous solution containing salts (noble metal materials) of Rh and, if necessary, other noble metals so as to establish the above-mentioned stoichiometric ratio of the respective elements and noble metal(s) such as Rh thereby to obtain a precursor composition. The resulting precursor composition is subjected to a heat treatment (secondary baking) to obtain the Rh-containing perovskite-type composite oxide.

Examples of the alkoxides (coordinating element materials) of the respective elements are alcholates each comprising the respective elements and an alkoxy such as methoxy, ethoxy, propoxy, isopropoxy or butoxy; and alkoxyalcholates of the respective elements represented by the following general formula (VIII),

E[OCH(R¹)-(CH₂)ᵢ-OR2]ⱼ (VIII)

wherein E represents the respective element; R¹ represents a hydrogen atom or an alkyl group having 1 to 4 carbon atoms; R² represents an alkyl group having 1 to 4 carbon atoms; i represents an integer of 1 to 3; j represents an integer of 2 to 4 (preferably 2 or 3).

More specific examples of the alkoxyalcholates are methoxyethylate, methoxypropylate, methoxybutylate, ethoxyethylate, ethoxypropylate, propoxyethylate, and butoxyethylate.

The mixed alkoxide solution can be prepared, for example, by adding alkoxides of the respective elements to an organic solvent so as to establish the above-mentioned stoichiometric ratio and mixing them with stirring.

The organic solvent is not specifically limited, as long as it can dissolve the alkoxides of the respective elements. Examples of such organic solvents are aromatic hydrocarbons, aliphatic hydrocarbons, alcohols, ketones, and esters, of which aromatic hydrocarbons such as benzene, toluene, and xylenes are preferred.

The resulting precipitate is washed with water according to necessity, filtrated, dried, for example, by vacuum drying or forced-air drying, and heated, for example, in the same manner as in the coprecipitation process.

Examples of the aqueous solution containing salts of Rh and, if necessary, other noble metals are aqueous nitrate solutions, aqueous chloride solutions, aqueous hexaammine chloride solutions, aqueous dinitrodiammine nitrate solutions, aqueous hexachloro acid hydrate solutions, and aqueous potassium cyanide salt solutions.

The powder after the heat treatment (primary baking) is impregnated with an aqueous noble metal salt solution to support the elements by the same procedure of the coprecipitation process.

The precursor composition is washed with water according to necessity and subjected to a heat treatment (secondary baking), for example, by the same procedure of the coprecipitation process.

Alternatively, the Rh-containing perovskite-type composite oxide may be prepared according to the alkoxide process, for example, in the following manner. The mixed alkoxide solution is mixed with an aqueous solution containing salts (noble metal materials) of Rh and, if necessary, other noble metals so as to establish the above-mentioned stoichiometric ratio of the respective elements and the noble metal (s) such as Rh. The resulting mixture is precipitated on hydrolysis to obtain a precursor composition. The precursor composition is dried and subjected to a heat treatment thereby to obtain the Rh-containing perovskite-type composite oxide.

Further alternatively, the Rh-containing perovskite-type composite oxide can be prepared according to the alkoxide process, for example, in the following manner. The mixed alkoxide solution is combined with organometallic salts (noble metal materials) of Rh and, if necessary, other noble metals to obtain a homogeneous mixed solution which establishes the above-mentioned stoichiometric ratio of the respective elements and the noble metal(s) such as Rh. This solution is precipitated by adding water, and the resulting precipitate is dried and subjected to a heat treatment to obtain the Rh-containing perovskite-type composite oxide.

Examples of the organometallic salts of Rh and, if necessary, other noble metals are carboxylic acid salts of the noble metals formed from such as acetates and propionates; and metal chelate complexes of the noble metals formed, for example, from β-diketone compounds or β-ketoester compounds represented by the following general formula (IX) and/or β-dicarboxylic acid ester compounds represented by the following general formula (X),

R³COCHR⁵COR⁴ (IX)

wherein R³ represents an alkyl group having 1 to 6 carbon atoms, a fluoroalkyl group having 1 to 6 carbon atoms, or an aryl group; R⁴ represents an alkyl group having 1 to 6 carbon atoms, a fluoroalkyl group having 1 to 6 carbon atoms, an aryl group, or an alkoxy group having 1 to 4 carbon atoms; and R⁵ represents a hydrogen atom or an alkyl group having 1 to 4 carbon atoms,

R⁷CH (COOR⁶) ₂ (X)

wherein R⁶ represents an alkyl group having 1 to 6 carbon atoms; and R⁷ represents a hydrogen atom or an alkyl group having 1 to 4 carbon atoms.

In the general formulas (IX) and (X), the alkyl groups having 1 to 6 carbon atoms as R³, R⁴ and R⁶ include methyl, ethyl, propyl, isopropyl, n-butyl, s-butyl, t-butyl, t-amyl, and t-hexyl, for example. The alkyl groups having 1 to 4 carbon atoms as R⁵ and R⁷ include methyl, ethyl, propyl, isopropyl, n-butyl, s-butyl, and t-butyl, for example.

In the general formula (IX), the fluoroalkyl groups having 1 to 6 carbon atoms as R³ and R⁴ include trifluoromethyl, for example. The aryl groups as R³ and R⁴ include phenyl, for example. The alkoxy group having 1 to 4 carbon atoms as R³ includes methoxy, ethoxy, propoxy, isopropoxy, n-butoxy, s-butoxy, and t-butoxy, for example.

Examples of the β-diketone compounds are 2,4-pentanedione, 2,4-hexanedione, 2,2-dimethyl-3,5-hexanedione, 1-phenyl-1,3-butanedione, 1-trifluoromethyl-1,3-butanedione, hexafluoroacetylacetone, 1,3-diphenyl-1,3-propanedione, and dipivaloylmethane.

Specific examples of the β-ketoester compounds are methyl acetoacetate, ethyl acetoacetate, and t-butyl acetoacetate.

Specific examples of the β-dicarboxylic acid ester compounds are dimethyl malonate and diethyl malonate.

The Rh-containing perovskite-type composite oxide may be covered by a noble metal by preparing the Rh-containing perovskite-type composite oxide through the coprecipitation process, citrate complex process, or alkoxide process so as to establish the above-mentioned stoichiometric ratio and allowing the resulting perovskite-type composite oxide to support the noble metal such as Rh.

The Rh-containing perovskite-type composite oxide can be allowed to support or be covered by a noble metal such as Rh using any conventional procedure. For example, a solution of salts containing noble metal (s) such as Rh is prepared, and the Rh-containing perovskite-type composite oxide is impregnated in the resulting salt-containing solution and is then baked.

Solutions containing the above-listed salts can be used as the salt-containing solution. Practical examples thereof are aqueous nitrate solutions, aqueous dinitrodiammine nitrate solutions, and aqueous chloride solutions.

More specific examples are rhodium salt solutions such as aqueous rhodium nitrate solution and aqueous rhodium chloride solution; palladium salt solutions such as aqueous palladium nitrate solution, aqueous palladium chloride solution, aqueous dinitrodiammine palladium nitrate solution, and aqueous tetraammine nitrate solution; and platinum salt solutions such as aqueous dinitrodiammine platinum nitrate solution, aqueous chloroplatinic acid solution, and aqueous platinum tetraammine solution.

After impregnating the perovskite-type composite oxide with the noble metal, the perovskite-type composite oxide is dried, for example, at 50°C to 200°C for 1 to 48 hours and then baked at 350°C to 1000°C for 1 to 12 hours.

Alternatively, the Rh-containing perovskite-type composite oxide represented by the general formula (I) may be produced using a zirconia composite oxide represented by the general formula (V) mentioned bellow or a ceria composite oxide represented by the general formula (VI) mentioned bellow.

That is, the Rh-containing perovskite-type composite oxide can be prepared, for example, in the following manner. An aqueous solution containing salts (noble metal materials) of Rh and, if necessary, other noble metals are prepared so as to establish the above-mentioned stoichiometric ratio. This aqueous solution is mixed with and supported on the zirconia composite oxide represented by the general formula (V) or the ceria composite oxide represented by the general formula (VI) and is subjected to a heat treatment (primary baking) to obtain a Rh-containing thermostable oxide. Next, an aqueous mixed salt solution is prepared so as to contain such salts (coordinating element materials) of the above-mentioned coordinating elements that are elements (respective elements) other than Rh and other noble materials and can form a perovskite-type composite oxide, whereby to establish a stoichiometric ratio at which the respective elements can form a perovskite-type composite oxide. This aqueous mixed salt solution is mixed with and supported on the thermostable oxide after the heat treatment (primary baking) to obtain a precursor composition. The resulting precursor composition is then subjected to a heat treatment (secondary baking) to obtain an Rh-containing perovskite-type composite oxide.

In this case, the Rh-containing perovskite-type composite oxide may be obtained as a mixed phase with a Rh-supporting fluorite-type zirconia composite oxide and a Rh-supporting fluorite-type ceria composite oxide.

The heat treatment (primary baking) of the zirconia composite oxide and ceria composite oxide supporting the noble metal materials is performed by drying it, for example, at 50 to 200°C for 1 to 48 hours, or through vacuum drying or forced-air drying, and then heating it at 350 to 1000°C for 1 to 48 hours.

The salts (coordinating element materials) of the respective elements can be the same salts as listed above.

The heat treatment (secondary baking) of the precursor composition is performed in the following manner. The resulting precursor composition is washed if necessary, dried, for example, at 50 to 100°C for 1 to 48 hours, or through vacuum drying or forced-air drying, and then heated at 350 to 1000°C, preferably at 600 to 1000°C, more preferably at 700 to 1000°C, for 1 to 48 hours. When the temperature of the secondary baking is lower than this range, a forming ratio of the Rh-containing perovskite-type composite oxide may decrease. When the temperature of the secondary baking is higher than this range, the noble metals may be deteriorated to cause catalyst activities to be reduced.

Alternatively, the Rh-containing perovskite-type composite oxide can be prepared, for example, in the following manner. An aqueous mixed salt solution is prepared so as to contain salts (noble metal materials) of Rh and, if necessary, other noble metals and such salts (coordinating element materials) of the above-mentioned coordinating elements that are other than Rh and other noble materials (respective elements) and can make a perovskite-type composite oxide, whereby to establish a stoichiometric ratio at which the noble metals such as Rh and the above-mentioned respective elements can form a perovskite-type composite oxide. This aqueous mixed salt solution is mixed with and supported on the zirconia composite oxide represented by the general formula (V) or the ceria composite oxide represented by the general formula (VI) to obtain a precursor composition. Next, the resulting precursor composition is dried and then subjected to a heat treatment to obtain an Rh-containing perovskite-type composite oxide.

The Pt-containing perovskite-type composite oxides represented by the general formula (II) are composite oxides having a perovskite-type crystal structure represented by the general formula ABO₃.

On the A site of this perovskite-type composite oxides, the alkaline earth metal represented by A³ is essentially coordinated, and the rare earth element represented by A⁴ is optionally coordinated.

On the B site, Pt is essentially coordinated; at least one element represented by B¹ and selected from Ti, Zr, Hf and tetravalent rare earth elements is essentially coordinated; and at least one element represented by B² and selected from transition elements (excluding tetravalent rare earth elements, Ti, Zr, Hf, and Pt) and Al is optionally coordinated.

In the general formula (II), the alkaline earth metal represented by A³ includes the same elements as the alkaline earth metals represented by A¹ in the general formula (I). Each of these alkaline earth metals can be used alone or in combination.

The rare earth element represented by A⁴ in the general formula (II) includes the same elements as the rare earth elements represented by A² in the general formula (I). Each of these rare earth elements can be used alone or in combination.

The rare earth element represented by A⁴ preferably includes rare earth elements being always trivalent, of which La, Nd, or Y is more preferred.

On the A site in the general formula (II), s represents the atomic ratio of A⁴ satisfying the following condition: 0 ≤ s ≤ 0.4. Preferably, the atomic ratio s satisfies the condition: 0 ≤ s ≤ 0.05. That is, the rare earth element represented by A⁴ is not contained or is contained at an atomic ratio of 0.4 or less, preferably at an atomic ratio of 0.05 or less, on the A site.

The atomic ratio s on the A site in the general formula (II) is more preferably 0. That is, it is preferred that the A site does not comprise the rare earth element represented by A⁴ but comprises the alkaline earth metal represented by A³.

On the A site in the general formula (II), r and s represent atomic ratios satisfying the following conditions: 0.8 ≤ (r + s) ≤ 1.3 (0.6 ≤ r ≤ 1.3, and 0 ≤ s ≤ 0.4). That is, the total atomic ratio (r + s) of the elements to be coordinated on the A site (A³ and A⁴) is 0.8 or more and 1.3 or less. When the total atomic ratio (r + s) is 0.8 or more and 1.3 or less, Pt can be dissolved to form stably a solid solution at a higher rate. When the total atomic ratio (r + s) exceeds 1.3, byproducts other than the composite oxides may be formed.

The atomic ratio r satisfies the condition: 0.6 ≤ x ≤ 1.3. That is, the alkaline earth metal represented by A³ is essentially contained at an atomic ratio of 0.6 or more and 1.3 or less.

On the other hand, the atomic ratio s satisfies the condition: 0 ≤ S ≤ 0.4. That is, the rare earth element represented by A⁴ is not contained (s = 0) when the atomic ratio r of the alkaline earth metal represented by A³ is 1.3 (r = 1.3). It is optionally contained at an atomic ratio s of 0.4 or less and a total atomic ratio (r + s) of 1.3 or less [0 ≤ s ≤ 0.4 and (r + s) ≤ 1.3] when the atomic ratio r is 0.9 or more and less than 1.3 (0.9 ≤ r < 1.3); is optionally contained at an atomic ratio s of 0.4 or less (0 ≤ s ≤ 0.4) when the atomic ratio r is 0.8 or more and less than 0.9 (0.8 ≤ r < 0.9); and is optionally contained at an atomic ratio s of 0.4 or less and a total atomic ratio (r + s) of 0.8 or more [0 ≤ s ≤ 0.4 and 0.8 ≤ (r + s)] when r is 0.6 or more and less than 0.8 (0.6 ≤ r < 0.8).

The atomic ratio r in the general formula (II) preferably satisfies the condition: 0.8 ≤ r ≤ 1.3, more preferably satisfies the condition: 0.95 ≤ (r + s) ≤ 1.3, and further more preferably 1.00 ≤ (r + s) ≤ 1.30. When the total atomic ratio (r + s) is 1.00, proportions of the elements to be coordinated on the A site establish the stoichiometric ratio, and the perovskite-type composite oxide is stabilized.

The elements represented by B³ in the general formula (II) can be any element listed as the elements represented by B¹ in the general formula (I). Each of these elements can be used alone or in combination.

Among them, the element represented by B³ is preferably any of Ti, Zr, Hf and Ce, more preferably Ti, Zr or Ce.

The transition element represented by B⁴ in the general formula (II) is a transition element excluding the tetravalent rare earth elements, Ti, Zr, Hf, and Pt. Specific examples thereof are, in the Periodic Table of Elements (IUPAC, 1990), elements having an atomic number of 21 (Sc), atomic numbers of 23 (V) through 30 (Zn), atomic number of 39 (Y), atomic numbers of 41 (Nb) through 48 (Cd), atomic number of 57 (La), atomic numbers of 60 (Nd) through 64 (Gd), atomic numbers of 66 (Dy) through 71 (Lu), atomic numbers of 73 (Ta) through 77 (Ir), atomic number of 79 (Au), and atomic number of 80 (Hg).

More specific examples of the transition element represented by B⁴ are Cr, Mn, Fe, Co, Ni, Cu, and Y. Each of these transition elements can be used alone or in combination.

That is, the at least one element represented by B⁴ and selected from transition elements and Al is preferably Cr, Mn, Fe, Co, Ni, Cu, Y, and Al.

On the B site in the general formula (II), t represents the atomic ratio of B⁴ satisfying the following condition: 0 ≤ t < 0.5; preferably satisfying the following condition: 0 ≤ t < 0.3. That is, on the B site the transition element and/or Al represented by B⁴ is not contained or is contained at an atomic ratio of less than 0.5 and preferably at an atomic ratio of less than 0.3.

The atomic ratio u on the B site in the general formula (II) represents the atomic ratio of Pt satisfying the following condition: 0 < u ≤ 0.5. That is, Pt is contained on the B site at an atomic ratio of 0.5 or less. The atomic ratio z preferably satisfies the condition: 0 < u ≤ 0.2.

Accordingly, Ti, Zr, Hf, and/or tetravalent rare earth elements are contained on the B site at a total atomic ratio [1-(t + u)]. That is, these elements are contained on the B site at an atomic ratio as the residue [1-(t + u)] of the total atomic ratio (t + u) of the transition element and/or A1 represented by B⁴ and Pt.

The atomic ratio t on the B site in the general formula (II) is more preferably 0. That is, the B site does not comprise the transition elements and A1 represented by B⁴ but only comprises Pt and at least one element represented by B³ and selected from Ti, Zr, Hf, and tetravalent rare earth elements.

In the general formula (II), δ' represents an oxygen excess or an oxygen deficiency and is represented by O or a positive number. More specifically, it represents the excessive atomic ratio or deficient atomic ratio of oxygen atom caused by allowing the constitutional elements of the A site to be excessive or deficient to the stoichiometric ratio of a perovskite-type composite oxide of A:B:O = 1:1:3.

A rate of solid solution of Pt in the Pt-containing perovskite-type composite oxide represented by the general formula (II) is not specifically limited but is preferably 50% or more, and more preferably 80% or more. When the rate of solid solution of Pt is less than 50%, the grain growth of Pt may not be effectively inhibited when the catalyst composition of the present invention is used in an atmosphere of high temperature over a long time.

A rate of solid solution to the perovskite-type composite oxides can be determined, for example, using ICP emission spectroscopy.

The Pt-containing perovskite-type composite oxide represented by the general formula (II) can be prepared by any suitable process for preparing composite oxides, such as a coprecipitation process, a citrate complex process, or an alkoxide process.

According to the coprecipitation process, the Pt-containing perovskite-type composite oxide can be prepared, for example, in the following manner. Initially, an aqueous mixed salt solution containing salts (coordinating element materials) of, of the above-mentioned coordinating elements, other elements (hereinafter referred to as "respective elements" in a production process of the Pt-containing perovskite-type composite oxide) than Pt and other noble metals (Ru, Rh, Pd, Ag, Os, and Ir) is prepared so as to establish the above-mentioned stoichiometric ratio of the respective elements. The aqueous mixed salt solution is coprecipitated by adding a neutralizing agent, and the resulting coprecipitate is dried and then subjected to a heat treatment (primary baking). An aqueous solution containing salt(s) (noble metal materials) of Pt and, if necessary, other noble metals is added to and thereby supported by the resulting heat-treated product (primarily-baked article) so that the respective elements and noble metals such as Pt establish the above-mantioned stoichiometric ratio. Thus, a precursor composition is prepared. The precursor composition is then subjected to a heat treatment (secondary baking) to obtain the Pt-containing perovskite-type composite oxide.

Either of the salts (coordinating element materials) of the respective elements, aqueous mixed salt solution, neutralizing agent, salts (noble metal materials) of noble metals, and noble metal salt solution can be the same as listed in the production method of the Rh-containing perovskite-type composite oxide.

Either of the heat treatment (primary baking) of the coprecipitate, supporting of noble metals after the heat treatment (primary baking), and heat treatment (secondary baking) of the precursor composition can be carried out by the same procedures as in the Rh-containing perovskite-type composite oxide.

Alternatively, the Pt-containing perovskite-type composite oxide can also be prepared according to the coprecipitation process, for example, in the following manner. Initially, an aqueous mixed salt solution containing salts (coordinating element materials) of the respective elements and salts (noble metal materials) of Pt and, if necessary, other noble metals is prepared so as to establish the above-mentioned stoichiometric ratio of the respective elements and other noble metals such as Pt. The aqueous mixed salt solution is coprecipitated by adding a neutralizing agent to obtain a precursor composition. Next, the precursor composition is dried and subjected to a heat treatment thereby to obtain the Pt-containing perovskite-type composite oxide.

According to the citrate complex process, the Pt-containing perovskite-type composite oxide is prepared, for example, in the following manner. Initially, an aqueous citrate-mixed salt solution containing citric acid and salts(coordinating element materials) of the respective elements is prepared so as to establish the above-mentioned stoichiometric ratio of the respective elements. The aqueous citrate-mixed salt solution is evaporated to dryness to form citrate complexes of the respective elements, then the citrate complexes are provisionally baked and subjected to a heat treatment (primary baking) thereby to obtain a powder containing the respective elements. Next, an aqueous solution containing salts of Pt and, if necessary, other noble metals (noble metal materials) is added to and supported by the resulting powder containing the respective elements so as to establish the above-mentioned stoichiometric ratio of the respective elements and the noble metal such as Pt. Thus, a precursor composition is prepared. The precursor composition is then subjected to a heat treatment (secondary baking) to obtain the Pt-containing perovskite-type composite oxide.

Either of the salts (coordinating element materials) of the respective elements and the aqueous citrate-mixed salt solution can be the same as in the production method of the Rh-containing perovskite-type composite oxide.

The evaporation to dryness, provisional baking and heat treatment (primary baking) of the citrate complexes of respective elements, supporting of noble metals after the heat treatment (primary baking), and heat treatment (secondary baking) of the precursor composition can be carried out by the same procedures as in the Rh-containing perovskite-type composite oxide.

According to the citrate complex process, the Pt-containing perovskite-type composite oxide can also be prepared, for example, in the following manner. An aqueous solution containing salts (coordinating element materials) of the respective elements and salts (noble metal materials) of Pt and, if necessary, other noble metals is prepared as an aqueous citrate-mixed salt solution so as to establish the above-mentioned stoichiometric ratio of the respective elements and noble metal(s) such as Pt. The aqueous citrate-mixed salt solution is evaporated to dryness to form citrate complexes of the respective elements with noble metal(s) such as Pt thereby to obtain a precursor composition. Next, the resulting precursor composition is provisionally baked and subjected to a heat treatment thereby to obtain the Pt-containing perovskite-type composite oxide.

According to the alkoxide process, the Pt-containing perovskite-type composite oxide is prepared, for example, in the following manner. A mixed alkoxide solution containing alkoxides (coordinating element materials) of the respective elements is prepared so as to establish the above-mentioned stoichiometric ratio of the respective elements. The mixed alkoxide solution is precipitated on hydrolysis by adding water, and the resulting precipitate is dried and heated (primary baking) to obtain a powder containing the respective elements. Next, the powder containing the respective elements is allowed to support Pt and, if necessary, other noble metals by adding an aqueous solution containing salts (noble metal materials) of Pt and, if necessary, other noble metals so as to establish the above-mentioned stoichiometric ratio of the respective elements and other noble metals such as Pt, thereby to obtain a precursor composition. The resulting precursor composition is subjected to a heat treatment (secondary baking) to obtain the Pt-containing perovskite-type composite oxide.

The alkoxides (coordinating element materials) of the respective elements and the mixed alkoxide solution can be as listed in the production method of the Rh-containing perovskite-type composite oxide.

The aqueous solution containing salts of Pt and, if necessary, other noble metals can similar to the above-mentioned aqueous solutions containing salts of Pt and, if necessary, other noble metals.

The heat treatment (primary baking) of the precipitate, supporting of noble metals after the heat treatment (primary baking), and the heat treatment (secondary baking) of the precursor composition can be carried out by the same procedures as in the Rh-containing perovskite-type composite oxide.

Alternatively, the Pt-containing perovskite-type composite oxide may be prepared according to the alkoxide process, for example, in the following manner. The mixed alkoxide solution is mixed with an aqueous solution containing salts (noble metal materials) of Pt and, if necessary, other noble metals so as to establish the the above-mentioned stoichiometric ratio of the respective elements and the noble metal(s) such as Pt. The resulting mixture is precipitated on hydrolysis to obtain a precursor composition. The precursor composition is dried and subjected to a heat treatment thereby to obtain the Pt-containing perovskite-type composite oxide.

Further alternatively, the Pt-containing perovskite-type composite oxide can be prepared according to the alkoxide process, for example, in the following manner. The mixed alkoxide solution is combined with organometallic salts (noble metal materials) of Pt and, if necessary, other noble metals so as to establish the above-mentioned stoichiometric ratio of the respective elements and the noble metal(s) such as Pt to obtain a homogeneous mixed solution. This solution is precipitated by adding water, then the resulting precipitate is dried and subjected to a heat treatment to obtain the Pt-containing perovskite-type composite oxide.

The organometallic salts of Pt and, if necessary, other noble metals can be the same salts to those listed in the production method of the Rh-containing perovskite-type composite.

The Pt-containing perovskite-type composite oxide may be covered with the noble metal by preparing a Pt-containing perovskite-type composite oxide in the above-mentioned stoichiometric ratio through the coprecipitation process, citrate complex process, or alkoxide process and then by allowing the resulting perovskite-type composite oxide to support the noble metal such as Pt.

The Pt-containing perovskite-type composite oxide can be allowed to support or be covered by a noble metal such as Pt using any conventional procedure without particular limitations. For example, after a solution of salts containing noble metal(s) such as Pt is prepared, the Pt-containing perovskite-type composite oxide is impregnated with the salt-containing solution and is then baked.

The salt-containing solution can be the same solutions to those listed in the production method of the Rh-containing perovskite-type composite oxide.

After impregnating the perovskite-type composite oxide with the noble metal, the perovskite-type composite oxide is dried, for example, at 50°C to 200°C for 1 to 48 hours and baked at 350°C to 1000°C for 1 to 12 hours.

Alternatively, the Pt-containing perovskite-type composite oxide represented by the general formula (II) can be produced using a zirconia composite oxide represented by general formula (V) mentioned bellow or a ceria composite oxide represented by the general formula (VI) mentioned bellow.

That is, the Pt-containing perovskite-type composite oxide can be prepared, for example, in the following manner. An aqueous solution containing salts (noble metal materials) of Pt and, if necessary, other noble metals are prepared so as to establish the above-mentioned stoichiometric ratio. This aqueous solution is mixed with and supported on the zirconia composite oxide represented by the general formula (V) or the ceria composite oxide represented by the general formula (VI) and then is subjected to a heat treatment (primary baking) to obtain a Pt-containing thermostable oxide. Next, an aqueous mixed salt solution is prepared so as to contain such salts (coordinating element materials) of the above-mentioned coordinating elements that are elements (respective elements) other than Pt and other noble materials and can form a perovskite-type composite oxide, whereby to establish a stoichiometric ratio at which the respective elements can form a perovskite-type composite oxide. This aqueous mixed salt solution is mixed with and supported on the thermostable oxide after the heat treatment (primary baking) to obtain a precursor composition. The resulting precursor composition is then subjected to a heat treatment (secondary baking) to obtain a Pt-containing perovskite-type composite oxide.

In this case, the Pt-containing perovskite-type composite oxide may be obtained as a mixed phase with a Pt-supporting fluorite-type zirconia composite oxide and a Pt-supporting fluorite-type ceria composite oxide.

The heat treatment (primary baking) of the zirconia composite oxide or the ceria composite oxide supporting the noble metal materials is performed by drying it, for example, at 50 to 100°C for 1 to 48 hours, or through vacuum drying or forced-air drying, and then heating it at 350 to 1000°C for 1 to 48 hours.

The salts (coordinating element materials) of the respective elements can be the same salts as listed above.

The heat treatment (secondary baking) of the precursor composition is performed, for example, in the following manner. The resulting precursor composition is washed if necessary, dried, for example, at 50 to 200°C for 1 to 48 hours, or through vacuum drying or forced-air drying, and then heated at 350 to 1000°C, preferably at 600 to 1000°C, more preferably at 700 to 1000°C, for 1 to 48 hours. When the temperature of the secondary baking is lower than this range, a forming ratio of the Pt-containing perovskite-type composite oxide may decrease. When the temperature of the secondary baking is higher than this range, the noble metals may be deteriorated to cause catalyst activities to be reduced.

Alternatively, the Pt-containing perovskite-type composite oxide can be prepared, for example, in the following manner. An aqueous mixed salt solution is prepared so that it contains salts (noble metal materials) of Pt and, if necessary, other noble metals and such salts (coordinating element materials) of the above-mentioned coordinating elements that are elements (respective elements) other than Pt and other noble materials and can form a perovskite-type composite oxide, whereby to establish a stoichiometric ratio at which the noble metals such as Pt and the above-mentioned respective elements can form a perovskite-type composite oxide. This aqueous mixed salt solution is mixed with and supported on the zirconia composite oxide represented by the general formula (V) or the ceria composite oxide represented by the general formula (VI) to obtain a precursor composition. Next, the resulting precursor composition is dried and then subjected to a heat treatment to obtain a Pt-containing perovskite-type composite oxide.

The catalyst composition of the present invention can comprise one or both of the Rh-containing perovskite-type composite oxide represented by the general formula (I) and the Pt-containing perovskite-type composite oxide represented by the general formula (II). When the catalytic composition comprises both of them, the resulting composition can be an exhaust gas purifying catalyst having excellent durability while exhibiting exhaust gas purification actions of Rh and Pt, respectively.

The catalyst composition of the present invention preferably comprise a thermostable oxide optionally containing a noble metal.

Examples of the thermostable oxide optionally containing a noble metal are Pd-containing perovskite-type composite oxides represented by the following general formula (III), zirconia composite oxides represented by the following general formula (IV), zirconia composite oxides represented by the following general formula (V), ceria composite oxides represented by the following general formula (VI), and alumina.

A⁵ₚB⁵_{(1-q)}Pd_{q}O_{3±δ"} (III)

In the formula (III), A⁵ represents at least one element selected from rare earth elements and alkaline earth metals; B⁵ represents at least one element selected from Al, Si, and transition elements (excluding rare earth elements and Pd); p represents an atomic ratio satisfying the following condition: p ≥ 0.8; q represents an atomic ratio satisfying the following condition: 0 < q ≤ 0.5; and δ" represents an oxygen excess or an oxygen deficiency.

Zr₁₋₍ₖ₊ₘ₎A⁶ₖNₘO₂₋ₙ (IV)

In the formula (IV), A⁶ represents at least one element selected from rare earth elements, alkaline earth elements, Al, and Si; N represents at least one noble metal selected from Rh, Pt, and Pd; k represents an atomic ratio satisfying the following condition: 0.01 < k < 0.8; m represents an atomic ratio satisfying the following condition: 0 < m ≤ 0.2; and n represents an oxygen deficiency.

Zr_{1-(a+b)}CeₐR_{b}O_{2-c} (V)

In the formula (V), R represents an alkaline earth metal and/or a rare earth element (excluding Ce); a represents an atomic ratio satisfying the following condition: 0.1 ≤ a ≤ 0.65; b represents an atomic ratio satisfying the following condition: 0 ≤ b ≤ 0.55; [1-(a + b)] represents the atomic ratio of Zr satisfying the following condition: 0.35 ≤ [1-(a + b)] ≤ 0.9; and c represents an oxygen deficiency.

Ce_{1-(d+e)}Zr_{d}LeO_{2-f} (VI)

In the formula (VI), L represents an alkaline earth metal and/or a rare earth element (excluding Ce); d represents an atomic ratio satisfying the following condition: 0.2 ≤ d ≤0.7; e represents an atomic ratio satisfying the following condition: 0 ≤ e ≤ 0.2; [1-(d + e)] represents an atomic ratio satisfying the following condition: 0.3 ≤ [ 1- (d + e)] ≤ 0.8; and f represents an oxygen deficiency.

The Pd-containing perovskite-type composite oxides represented by the general formula (III) are composite oxides having a perovskite-type crystal structure represented by the general formula ABO₃.

In these perovskite-type composite oxides, the rare earth element and/or alkaline earth metal represented by A⁵ is essentially coordinated on the A site.

On the B site, Pd and at least one element represented by B⁵ and selected from Al, Si, and transition elements (excluding rare earth elements, Rh, and Pd) are essentially coordinated.

The rare earth elements represented by A⁵ in the general formula (III) can be the same elements as listed as A² in the general formula (I), of which rare earth elements being always trivalent are preferred, La, Nd, or Y is more preferred, and La is further preferred. Each of these rare earth elements can be used alone or in combination.

The alkaline earth metal represented by A⁵ in the general formula (III) includes the same elements as listed as A¹ in the general formula (I). Each of these alkaline earth metals can be used alone or in combination.

The alkaline earth metal is preferably contained on the A site in the general formula (III) at an atomic ratio of 0.5 or less to the rare earth element. That is, the element represented by A⁵ on the A site preferably comprises at least one rare earth element alone, or comprises at least one rare earth element and at least one alkaline earth element at an atomic ratio of the alkaline earth element to the rare earth element of 0.5 or less.

On the A site in the general formula (III), p represents the atomic ratio of A⁵ satisfying the following condition: p ≥ 0.8. That is, the atomic ratio p on the A site should be 0.8 or more and is preferably 1.0 or more. When the atomic ratio p is 1.0, the proportions of elements to be coordinated on the A site establish the stoichiometric ratio, and the perovskite-type composite oxides are thereby stabilized. When the atomic ratio p exceeds 1.0, the atomic ratio of elements to be coordinated on the A site is 1.0 or more, and Pd can be more stably dissolved to form a solid solution at a higher rate. The atomic ratio p more preferably satisfies the following condition: 1.00 < p ≤ 1.50, and further preferably satisfies the following condition: 1.00 ≤ p ≤ 1.30. If the atomic ratio p exceeds 1.50, byproducts other than the perovskite-type composite oxides may be formed. In contrast, if the atomic ratio p is less than 0.8, it is difficult to dissolve Pd to form stably a solid solution at a high rate.

The transition elements represented by B⁵ in the general formula (III) are transition elements excluding rare earth elements and Pd. Specific examples thereof are, in the Periodic Table of Elements (IUPAC, 1990), elements having atomic numbers of 22 (Ti) through 30 (Zn), atomic numbers of 40 (Zr) through 45 (Rh), an atomic number of 47 (Ag), an atomic number of 48 (Cd), and atomic numbers of 72 (Hf) through 80 (Hg). Each of these transition elements can be used alone or in combination. Among them, the transition elements represented by B⁵ are preferably transition elements excluding rare earth elements, Rh, Pd, and Pt.

The transition element represented by B⁵ is preferably selected from Cr, Mn, Fe, Co, Ni, Cu, and Al (aluminum), more preferably selected from Mn, Fe, Co, and Al, and is further preferably Fe.

The atomic ratio q on the B site in the general formula (III) represents the atomic ratio of Pd satisfying the following condition: 0 < q ≤ 0.5. That is, Pd is contained on the B site at an atomic ratio of 0.5 or less. If the atomic ratio of Pd exceeds 0.5, Pd may not be satisfactorily dissolved to form a solid solution, and the cost inevitably increases. The atomic ratio q preferably satisfies the following condition: 0 < q ≤ 0.2.

On the B site in the general formula (II), the element represented by B⁵ other than Pd, namely, at least one element selected from transition elements (excluding rare earth elements and Pd), Al and Si is contained at an atomic ratio of (1-q). That is, the at least one element is contained at an atomic ratio as a residue (1-q) of Pd on the B site.

In the general formula (III), δ" represents an oxygen excess or an oxygen deficiency and is represented by 0 or a positive number. More specifically, it represents the excessive atomic ratio or deficient atomic ratio of oxygen atom caused by allowing the constitutional elements of the A site to be excessive or deficient to the stoichiometric ratio of a perovskite-type composite oxide of A:B:O = 1:1:3.

The rate of solid solution of Pd in the Pd-containing perovskite-type composite oxides represented by the general formula (III) is not specifically limited but is preferably 50% or more, and more preferably 80% or more. If the rate of solid solution of Pd is less than 50%, the grain growth of Pd may not be effectively inhibited when the catalyst composition of the present invention is used in an atmosphere of high temperature over a long time.

The rate of solid solution to the perovskite-type composite oxides can be determined, for example, using ICP emission spectroscopy.

The Pd-containing perovskite-type composite oxides represented by the general formula (III) can be prepared without particular limitations by any suitable process for preparing composite oxides, such as a coprecipitation process, a citrate complex process, or an alkoxide process.

According to the coprecipitation process, the Pd-containing perovskite-type composite oxides can be prepared, for example, in the following manner. Initially, an aqueous mixed salt solution containing salts (coordinating element materials) of, of the above-mentioned coordinating elements, other elements (hereinafter referred to as "respective elements" in the production process of the Pd-containing perovskite-type composite oxides) than Pd and other noble metals (Rh, Pt, Ru, Ag, Os, and Ir) is prepared so as to establish the above-mentioned stoichiometric ratio of the respective elements. After the aqueous mixed salt solution is coprecipitated by adding a neutralizing agent, the resulting coprecipitate is dried and then subjected to a heat treatment (primary baking). Next, an aqueous solution containing salt(s) of Pd and, if necessary, other noble metals (noble metal materials) is added to and supported by the resulting heat-treated product (primarily-baked article) so that the respective elements and noble metals such as Pd establish the above-mentioned stoichiometric ratio. Thus, a precursor composition is prepared. The precursor composition is then subjected to a heat treatment (secondary baking) to obtain the Pd-containing perovskite-type composite oxides.

Any of the salts (coordinating element materials) of the respective elements, aqueous mixed salt solution, neutralizing agent, salts (noble metal materials) of noble metals, and noble metal salt solution can be the same as those listed in the production method of the Rh-containing perovskite-type composite oxides.

Any of the heat treatment (primary baking) of the coprecipitate, supporting of the noble metal after the heat treatment (primary baking), and heat treatment (secondary baking) of the precursor composition can be carried out by the same procedures as in the Rh-containing perovskite-type composite oxides.

Alternatively, the Pd-containing perovskite-type composite oxides can be prepared according to the coprecipitation process, for example, in the following manner. Initially, an aqueous mixed salt solution containing salts of the respective elements (coordinating element materials) and salts of Pd and, if necessary, other noble metals (noble metal materials) is prepared so as to establish the above-mentioned stoichiometric ratio of the respective elements and other noble metals such as Pd. The aqueous mixed salt solution is coprecipitated by adding a neutralizing agent to obtain a precursor composition. Next, the precursor composition is dried and subjected to a heat treatment to obtain the Pd-containing perovskite-type composite oxides.

According to the citrate complex process, the Pd-containing perovskite-type composite oxides are prepared, for example, in the following manner. Initially, an aqueous citrate-mixed salt solution containing citric acid and salts (coordinating element materials) of the respective elements is prepared so as to establish the above-mentioned stoichiometric ratio of the respective elements. After the aqueous citrate-mixed salt solution is evaporated to dryness to form citrate complexes of the respective elements, the citrate complexes are provisionally baked and subjected to a heat treatment (primary baking) thereby to obtain a powder containing the respective elements. Next, an aqueous solution containing salts of Pd and, if necessary, other noble metals (noble metal materials) is added to and supported by the resulting powder containing the respective elements so as to establish the above-mentioned stoichiometric ratio of the respective elements and other noble metals such as Pd. Thus, a precursor composition is prepared. The precursor composition is then subjected to a heat treatment (secondary baking) to obtain the Pd-containing perovskite-type composite oxides.

The salts (coordinating element materials) of the respective elements and the aqueous citrate-mixed salt solution can be the same as those listed in the production method of the Rh-containing perovskite-type composite oxide.

The evaporation to dryness, provisional baking and heat treatment (primary baking) of the citrate complexes of respective elements, supporting of noble metals after the heat treatment (primary baking), and heat treatment (secondary baking) of the precursor composition can be carried out by the same procedures as in the Rh-containing perovskite-type composite oxides.

According to the citrate complex process, the Pd-containing perovskite-type composite oxides can also be prepared, for example, in the following manner. An aqueous solution containing salts (coordinating element materials) of the respective elements and salts (noble metal materials) of Pd and, if necessary, other noble metals is prepared as an aqueous citrate-mixed salt solution so as to establish the above-mentioned stoichiometric ratio of the respective elements and other noble metals such as Pd. The aqueous citrate-mixed salt solution is evaporated to dryness to form citrate complexes of the respective elements with noble metals such as Pd thereby to obtain a precursor composition. Next, the precursor composition is provisionally baked and subjected to a heat treatment thereby to obtain the Pd-containing perovskite-type composite oxides.

According to the alkoxide process, the Pd-containing perovskite-type composite oxides are prepared, for example, in the following manner. A mixed alkoxide solution containing alkoxides (coordinating element materials) of the respective elements is prepared so as to establish the above-mentioned stoichiometric ratio of the respective elements. After the mixed alkoxide solution is precipitated on hydrolysis by adding water, the resulting precipitate is dried and heated (primary baking) to obtain a powder containing the respective elements. Next, the powder containing the respective elements is allowed to support Pd and, if necessary, other noble metals by adding an aqueous solution containing salts (noble metal materials) of Pd and, if necessary, other noble metals so as to establish the above-mentioned stoichiometric ratios of the respective elements and noble metals such as Pd thereby to obtain a precursor composition. The precursor composition is subjected to a heat treatment (secondary baking) to obtain the Pd-containing perovskite-type composite oxides.

The alkoxides (coordinating element materials) of the respective elements and the mixed alkoxide solution can be similar to those listed in the production method of the Rh-containing perovskite-type composite oxide.

The aqueous solution containing salts of Pd and, if necessary, other noble metals can be the same as the above-mentioned aqueous solutions containing salts of Pd and, if necessary, other noble metals.

Any of the heat treatment (primary baking) of the precipitate, supporting of noble metals after the heat treatment (primary baking), and heat treatment (secondary baking) of the precursor composition can be carried out by the same procedures as in the Rh-containing perovskite-type composite oxide.

Alternatively, the Pd-containing perovskite-type composite oxides can also be prepared according to the alkoxide process, for example, in the following manner. The mixed alkoxide solution is mixed with an aqueous solution containing salts (noble metal materials) of Pd and, if necessary, other noble metals so as to establish the above-mentioned stoichiometric ratio of the respective elements and noble metals such as Pd. The resulting mixture is precipitated on hydrolysis to obtain a precursor composition. Then, the precursor composition is dried and subjected to a heat treatment thereby to obtain the Pd-containing perovskite-type composite oxides.

Further alternatively, the Pd-containing perovskite-type composite oxides can be prepared according to the alkoxide process, for example, in the following manner. The mixed alkoxide solution is combined with organometallic salts (noble metal materials) of Rh and, if necessary, other noble metals so as to establish the above-mentioned stoichiometric ratio of the respective elements and noble metals such as Pd to obtain a homogeneous mixed solution. After this solution is precipitated by adding water, the resulting precipitate is dried and subjected to a heat treatment to obtain the Pd-containing perovskite-type composite oxides.

The organometallic salts of Pd and, if necessary, other noble metals can be the same salts to those listed in the production method of the Rh-containing perovskite-type composite.

The Pd-containing perovskite-type composite oxides may be covered with the noble metal by preparing Pd-containing perovskite-type composite oxides through the coprecipitation process, citrate complex process, or alkoxide process so as to establish the above-mentioned stoichiometric ratio and then by allowing the resulting perovskite-type composite oxides to support the noble metal such as Pd.

The Pd-containing perovskite-type composite oxides can be allowed to support or be covered by a noble metal such as Pd without particular limitations using any conventional procedure. For example, after a solution of salts containing Pd and other noble metals is prepared, the Pd-containing perovskite-type composite oxides are impregnated in the resulting salt-containing solution and then baked.

The salt-containing solution can be the same solutions to those listed in the production method of the Rh-containing perovskite-type composite oxide.

After impregnating the perovskite-type composite oxide with the noble metal, the perovskite-type composite oxide is dried, for example, at 50°C to 200°C for 1 to 48 hours and baked at 350°C to 1000°C for 1 to 12 hours.

When the catalyst composition of the present invention comprises a thermostable oxide optionally containing a noble metal, and the thermostable oxide comprises a Pd-containing perovskite-type composite oxide represented by the general formula (III), the resulting catalyst composition can be exhaust gas purifying catalysts having further more excellent durability while exhibiting exhaust gas purification actions of Rh and/or Pt, and Pd.

In the zirconia composite oxides represented by the general formula (IV), the rare earth elements represented by A⁶ can be the same elements as listed as A² in the general formula (I), of which rare earth elements being always trivalent are preferred, La, Nd and Y are more preferred, and La and Nd are further preferred. Each of these rare earth elements can be used alone or in combination.

The alkaline earth metals represented by A⁶ in the general formula (IV) include the same elements as listed as A in the general formula (I). Each of these alkaline earth metals can be used alone or in combination.

The coordinating element represented by A⁶ in the general formula (IV) is preferably at least one rare earth element.

The noble metals represented by N in the general formula (IV) include Pt, Rh and Pd, of which Rh and Pd are preferred, and Rh is more preferred. Each of these noble metals can be used alone or in combination.

In the general formula (IV), k represents an atomic ratio satisfying the following condition: 0.01 < k < 0.8. The atomic ratio k preferably satisfies the following condition: 0.01 < k < 0.4, and more preferably satisfies the following condition: 0.05 < k < 0.2.

The atomic ratio m in the general formula (IV) is the atomic ratio of N satisfying the following condition: 0 < m ≤ 0.2. It preferably satisfies the following condition: 0 < m ≤ 0.05.

In the general formula (IV), n represents an oxygen deficiency is represented by 0 or a positive number and the oxygen deficiency means a rate of vacancy in an oxide crystal structure.

The zirconia composite oxides represented by the general formula (IV) preferably have a cubic or tetragonal fluorite-type crystal structure.

The zirconia composite oxides represented by the general formula (IV) can be prepared without particular limitations by any suitable process for preparing composite oxides, including the above-listed processes such as a coprecipitation process, a citrate complex process, or an alkoxide process. That is, they can be prepared in the following manner. Initially, materials for the coordinating elements including zirconia are prepared and subjected to a heat treatment (primary baking). The resulting heat-treated product (primarily-baked article) is combined with a noble metal material containing one or more noble metals to obtain a precursor composition, and the precursor composition is subjected to a heat treatment (secondary baking) thereby to obtain the zirconia composite oxides represented by the general formula (IV).

The alkaline earth metals represented by R in the zirconia composite oxides represented by the general formula (V) include, for example, Be, Mg, Ca, Sr, Ba, and Ra, of which Mg, Ca, Sr, and Ba are preferred.

The rare earth elements represented by R in the general formula (V) are rare earth elements excluding Ce, such as Sc, Y, La, Pr, Nd, Pm, Sm, Eu, Gd, Tb, Dy, Ho, Er, Tm, Yb, and Lu. Among them, Sc, Y, La, Pr, and Nd are preferred, and La is more preferred. Each of these alkaline earth metals and rare earth elements can be used alone or in combination.

The atomic ratio a in the general formula (V) represents an atomic ratio of Ce satisfying the following condition: 0.1 ≤ a ≤ 0.65. When the atomic ratio a is less than 0.1, the crystal phase may become unstable and be decomposed in an oxidation-reduction atmosphere of high temperature, resulting in decreased catalytic performance. In contrast, when the atomic ratio a exceeds 0.65, a specific surface area may decrease and sufficient catalytic performance may not be exhibited. The atomic ratio a preferably satisfies the following condition: 0.1 ≤ a ≤ 0.5.

The atomic ratio b in the general formula (V) represents an atomic ratio of R satisfying the following condition: 0 ≤ b ≤ 0.55. That is, the element R in the general formula (V) is not an essential component but an optional component to be optionally contained at an atomic ratio of 0.55 or less. The atomic ratio b exceeding 0.55 may cause phase separation and/or formation of other composite oxide phases.

The value [1-(a + b)] in the general formula (V) represents an atomic ratio of Zr satisfying the following condition: 0.35 ≤ [1 - (a + b)] ≤ 0.9. The atomic ratio [1 - (a + b)] preferably satisfies the following condition: 0.5 ≤ [1-(a + b)] ≤ 0.9; and more preferably satisfies the following condition: 0.6 ≤ [1-(a + b)] ≤ 0.9.

When the catalyst composition of the present invention comprises a zirconia composite oxide represented by the general formula (V) in combination with a ceria composite oxide represented by the general formula (VI) mentioned below, the atomic ratio of Zr [1-(a + b)] in the zirconia composite oxide represented by the general formula (V) is preferably greater than the atomic ratio d of Zr in the ceria composite oxide represented by the general formula (VI).

In the general formula (V), c represents an oxygen deficiency and is represented by 0 or a positive number. The oxygen deficiency means a rate of vacancy in an oxide crystal structure.

The zirconia composite oxides represented by the general formula (V) preferably have a cubic or tetragonal fluorite-type crystal structure.

The zirconia composite oxides represented by the general formula (V) can be prepared without specific limitations by any suitable process for preparing composite oxides.

They can be prepared, for example, by adding water to a zirconium oxide powder and/or zirconia hydroxide powder to form a slurry; adding to the slurry an aqueous solution containing a cerium salt, and an alkaline earth metal salt and/or a salt of rare earth element (hereinafter briefly referred to as "rare earth element") excluding Ce in a predetermined stoichiometric ratio; fully stirring them; and subjecting the mixture to a heat treatment.

Commercially available zirconium oxide powders and zirconia hydroxide powders can be used herein. Such powders preferably have large specific surface areas. The slurry is prepared by adding about 10 to 50 parts by weight of water to 1 part by weight of the zirconium oxide powder and/or zirconia hydroxide powder.

Examples of the cerium salt, alkaline earth metal salt and/or rare earth element salt are inorganic salts such as sulfates, nitrates, hydrochlorides, and phosphate; and organic acid salts such as acetates and oxalates, of which nitrates are preferred. By dissolving 1 part by weight of each of the zirconium salt, alkaline earth metal salt and/or rare earth element salt in 0.1 to 10 weight of water in a stoichiometric ratio within the above-mentioned predetermined atomic ratios, an aqueous mixed solution is obtained.

The aqueous mixed solution is added to the slurry and fully blended with stirring, and the resulting mixture is subjected to a heat treatment. In the heat treatment, the mixture is initially dried under reduced pressure, for example, using a vacuum dryer, and further dried preferably at 50°C to 200°C for 1 to 48 hours to obtain a dried product. The resulting dried product is baked at 400°C to 1000°C, and preferably at 650°C to 1000°C for 1 to 12 hours, and preferably for 2 to 4 hours.

In the baking, at least part of the zirconia composite oxide preferably forms a solid solution thereby to improve thermostability of the zirconia composite oxide. Preferable baking conditions to form such a solid solution are determined as appropriate according to composition and proportion of the zirconia composite oxide.

The zirconia composite oxides can also be prepared by preparing a solution of salts containing zirconium, cerium, alkaline earth metal and/or rare earth element in a predetermined stoichiometric ratio; adding the solution to a basic aqueous solution or an aqueous solution of organic acid thereby to coprecipitate salts containing zirconium, cerium, and the alkaline earth metal and/or rare earth element; and subjecting the resulting coprecipitate to a heat treatment.

The zirconium salt herein used is preferably a water-soluble zirconium oxychloride (zirconyl chloride). Examples of the cerium salt, alkaline earth metal salt and/or rare earth element salt are inorganic salts such as sulfates, nitrates, hydrochlorides, and phosphate; and organic acid salts such as acetates and oxalates, of which nitrates are preferred. Examples of the alkaline aqueous solution are aqueous solutions of salts of alkaline metals such as sodium and potassium, ammonia, and ammonium carbonate; and known suitable buffers. The basic aqueous solution, if added, is preferably prepared so that the resulting mixture after the addition has a pH of about 8 to about 11. Examples of the aqueous solution of organic acid are aqueous solutions of oxalic acid and citric acid.

The heat treatment can be carried out by the above procedure after filtrating and washing the coprecipitate.

Alternatively, the zirconia composite oxides can be prepared by preparing a mixed alkoxide solution containing zirconium, cerium, an alkaline earth metal and/or rare earth element in a predetermined stoichiometric ratio; coprecipitating or hydrolyzing the mixed alkoxide solution through adding the same to deionized water; and subjecting the resulting coprecipitate or hydrolysate to a heat treatment.

In this case, the mixed alkoxide solution can be prepared by mixing alkoxides of zirconium, cerium, the alkaline earth metal and/or rare earth element with an organic solvent. Examples of alkoxy moieties constituting the each alkoxide are alkoxys such as methoxy, ethoxy, propoxy, isopropoxy, and butoxy; and alkoxyalcholates such as methoxyethylate, methoxypropylate, methoxybutylate, ethoxyethylate, ethoxypropylate, propoxyethylate, and butoxyethylate.

The organic solvent includes, for example, aromatic hydrocarbons, aliphatic hydrocarbons, alcohols, ketones, and esters, of which aromatic hydrocarbons such as benzene, toluene, and xylenes are preferred.

After filtrating and washing the coprecipitate or hydrolysate, a heat treatment can be carried out by the above procedure.

Examples of the alkaline earth metal and/or rare earth element represented by L in the ceria composite oxides represented by the general formula (VI) are the same as the above-mentioned alkaline earth metals and rare earth elements represented by R. The alkaline earth metals are preferably Mg, Ca, Sr, and Ba. The rare earth elements are preferably Sc, Y, La, Pr, and Nd, of which Y is more preferred. Each of these alkaline earth metals and rare earth elements can be used alone or in combination.

In the general formula (VI), d represents an atomic ratio of Zr satisfying the following condition: 0.2 ≤ d ≤ 0.7. When the atomic ratio d is less than 0.2, the specific surface area may decrease and sufficient catalytic performance may not be exhibited. In contrast, when the atomic ratio d exceeds 0.7, sufficient catalytic performance may not be exhibited due to a decreased oxygen-occlusion capability. The atomic ratio d preferably satisfies the following condition: 0.2 ≤ d ≤ 0.5.

The atomic ratio e in the general formula (VI) represents an atomic ratio of L satisfying the following condition: 0 ≤ e ≤ 0.2. That is, L in the general formula (VI) is not an essential component but an optional component to be optionally contained at an atomic ratio of 0.2 or less. The atomic ratio e exceeding 0.2 may cause phase separation and/or formation of other composite oxide phases.

The value [1-(d+ e)] in the general formula (VI) represents an atomic ratio of Ce satisfying the following condition: 0.3 ≤ [1-(d + e)] ≤ 0.8. The atomic ratio [1-(d + e)] preferably satisfies the following condition: 0.4 ≤ [1- (d + e)] ≤ 0.6.

When the catalyst composition of the present invention comprises a ceria composite oxide represented by the general formula (VI) in combination with a zirconia composite oxide represented by the general formula (V), the atomic ratio of Ce [1-(d + e)] in the ceria composite oxide represented by the general formula (VI) is preferably greater than the atomic ratio a of Ce in the zirconia composite oxide represented by the general formula (V).

In the general formula (VI), f represents an oxygen deficiency and is represented by 0 or a positive number. The oxygen deficiency means a rate of vacancy in an oxide crystal structure.

The ceria composite oxides represented by the general formula (VI) preferably have a cubic or tetragonal fluorite-like crystal structure.

The ceria composite oxides represented by the general formula (VI) can be prepared by the same procedure as in the production processes of the zirconia composite oxides represented by the general formula (V).

When a zirconia composite oxide or ceria composite oxide practically used has atomic. ratios which fall both in the atomic ratios of the respective elements in zirconia composite oxides represented by the general formula (V) and in the atomic ratios of the respective elements in ceria composite oxides represented by the general formula (VI), the composite oxide can be classified as either of the two oxides. For example, when a plurality of zirconia composite oxides and/or ceria composite oxides are used, the classification can be determined as appropriate according to formulation (composition) to be supported or admixed. When a noble metal is supported, for example, a ceria composite oxide can be distinguished from a zirconia composite oxide by allowing the ceria composite oxide to support not Rh but Pt alone.

Alternatively, the zirconia composite oxide represented by the general formula (V) and containing Rh, Pt or other noble metals and the ceria composite oxide represented by the general formula (VI) and containing Rh, Pt or other noble metals may further support such elements (respective elements) of the above-mentioned coordinating elements other than Rh, Pt and other noble metals.

Examples of the alumina as the thermostable oxide optionally containing a noble metal are alpha-alumina, theta-alumina, and gamma-alumina, of which theta-alumina is preferred.

Alpha-alumina has an alpha phase as a crystal phase and can be available as, for example, AKP-53 (trade name, high-purity alumina, manufactured by Sumitomo Chemical Co., Ltd.).

Such alpha-alumina can be prepared, for example, by an alkoxide process, a sol-gel process, or a coprecipitation process.

Theta-alumina has a theta phase as a crystal phase and is one of intermediate (transitional) aluminas before transition to alpha-alumina. It can be obtained, for example, by heating a commercially available activated alumina (gamma-alumina) at 900°C to 1100°C in the air for 1 to 10 hours.

Such theta-alumina can be obtained, for example, by heating SPHERALITE 531P (trade name, gamma-alumina, manufactured by PROCATALYSE Co.) at 1000°C in the air for 1 to 10 hours.

Gamma-alumina has a gamma phase as a crystal phase, is not specifically limited, and includes conventional gamma-aluminas used, for example, in exhaust gas purifying catalysts.

The alumina may comprise La and/or Ba. That is, an alumina represented by the following general formula (VII) is preferably used.

(Al_{1-g}D_{g})₂O₃ (VII)

wherein D represents La and/or Ba; and g represents an atomic ratio satisfying the following condition: 0 ≤ g ≤ 0.5.

D represents La and/or Ba. The atomic ratio g represents an atomic ratio of D satisfying the following condition: 0 ≤ g ≤ 0.5. That is, La and Ba are not essential components but optional components to be optionally contained at an atomic ratio of 0.5 or less. When a total atomic ratio of La and Ba exceeds 0.5, a crystal phase may not exist as a theta phase and/or alpha phase.

Such alumina containing La and/or Ba can be prepared, for example, by subjecting an aluminum oxide, salts of La and/or Ba or alkoxides to the same preparation procedure as in the production processes of the zirconia composite oxides while appropriately controlling the baking temperature. Alternatively, it can be prepared, for example, by impregnating alumina with an aqueous solution of salts of La and/or Ba, and then drying and baking the resulting impregnated article.

Such alumina preferably has a specific surface area of 5 m²/g or more, and more preferably 10 m²/g or more. Specifically, the theta-alumina preferably has a specific surface area of 50 to 150 m²/g, and more preferably 70 to 130 m²/g. Plural aluminas having different atomic ratios of La and Ba can be used in combination.

When the catalyst composition of the present invention comprises a thermostable oxide optionally containing a noble metal and the thermostable oxide comprises an alumina, the resulting perovskite-type composite oxides can have markedly increased thermostability by an action of the alumina while Rh and/or Pt (or Rh and/or Pt, and Pd) can be stably present in the perovskite-type composite oxides. Consequently, Rh and/or Pt (or Rh and/or Pt, and Pd) can be finely and highly dispersed in each of the perovskite-type composite oxides and the catalyst composition can maintain high catalytic activities even in an atmosphere of high temperature over a long time. Additionally, such catalytic activities can be achieved even when an amount of Rh and/or Pt (or Rh and/or Pt, and Pd) is significantly reduced.

Furthermore, the Rh (or Rh and Pd)-containing perovskite-type composite oxides have increased thermostability by the action of alumina, and thereby the grain growth of the perovskite-type composite oxides can be inhibited in an atmosphere of high temperature of, for example, 900°C to 1000°C, or further exceeding 1050°C to prevent decrease in a specific surface area. Consequently, the catalyst composition can maintain the catalytic activity of Rh (or Rh and Pd) at a high level even in an atmosphere of high temperature exceeding 900°C to 1000°C over a long time.

Examples of the thermostable oxide optionally containing a noble metal are, in addition to those listed above, ZrLaNd oxides such as Zr_{0.80}La_{0.05} Nd_{0.15} oxide; SrZrO₃; and LaAlO₃.

When the thermostable oxide optionally containing a noble metal comprises a thermostable oxide supporting a noble metal, the catalytic activity and the catalytic performance can further be improved, in addition to the activity of Rh (or Rh and Pd) contained in the Rh-containing perovskite-type composite oxide (or Rh-containing perovskite-type composite oxide and Pd-containing perovskite-type composite oxide).

Examples of the noble metal are as above. Each of such noble metals can be used alone or in combination.

Of the above-mentioned thermostable oxides optionally containing the noble metal, the other thermostable oxides than Pd-containing perovskite-type composite oxides represented by the general formula (III) can be allowed to support a noble metal without particular limitations by any conventional procedure. For example, the noble metal can be supported by preparing a solution of salt containing the noble metal, impregnating a thermostable oxide with the resulting salt-containing solution, and baking the resulting article.

The salt-containing solution can be any of the above-listed salt solutions. Practical examples of such solutions are aqueous nitrate solutions, aqueous dinitrodiammine nitrate solutions, and aqueous chloride solutions. More specific examples thereof are palladium salt solutions such as aqueous palladium nitrate solution, aqueous dinitrodiammine palladium nitrate solution, and aqueous tetraammine nitrate solution; rhodium salt solutions such as aqueous rhodium nitrate solution and aqueous rhodium chloride solution; and platinum salt solutions such as aqueous dinitrodiammine platinum nitrate solution, aqueous chloroplatinic acid solution, and aqueous tetraammine solution.

After impregnating the thermostable oxide with a noble metal, the resulting article is dried, for example, at 50°C to 200°C for 1 to 48 hours and then baked at 350°C to 1000°C for 1 to 12 hours.

Alternatively, the thermostable oxide can be allowed to support a noble metal in the following manner. When the thermostable oxide is one of the zirconia composite oxides represented by the general formula (IV) and general formula (V) and the ceria composite oxides represented by the general formula (VI), for example, a noble metal can be supported by adding a solution of a noble metal salt to coprecipitation or hydrolysis of the salts solution or mixed alkoxide solution containing zirconium, cerium and alkaline earth metal and/or rare earth element thereby to coprecipitate the noble metal with the respective components of the zirconia composite oxide or the ceria composite oxide, and baking the resulting article.

When the thermostable oxide is alpha-alumina, theta-alumina or gamma-alumina, a noble metal can be supported, for example, by adding a solution of a noble metal salt to precipitation of alumina formed from an aqueous aluminum salt solution using such as ammonia in a production process of the alumina thereby to coprecipitate the noble metal with the alumina, and baking the resulting article.

When two or more different noble metals are to be supported, they can be simultaneously supported in one process or sequentially supported in plural processes.

An amount of the noble metal to be supported is determined as appropriate according to a purpose and use thereof and is, for example, 0.01 to 3.0% by weight, and preferably 0.05 to 1.0% by weight, to the thermostable oxides (total amount).

The zirconia composite oxides supporting the noble metal preferably support Pt and/or Rh as a noble metal. In this case, an amount of supported Pt and/or Rh is 0.01 to 2.0% by weight, and preferably 0.05 to 1.0% by weight, to the zirconia composite oxides.

The ceria composite oxides supporting the noble metal preferably support Pt as a noble metal. In this case, an amount of supported Pt is 0.01 to 2.0% by weight, and preferably 0.05 to 1.0% by weight, to the ceria composite oxides.

The theta-alumina supporting the noble metal preferably supports Pt and/or Rh as a noble metal. In this case, an amount of supported Pt and/or Rh is 0.01 to 2.0% by weight, and preferably 0.05 to 1.0% by weight, to the theta-alumina.

The gamma-alumina supporting the noble metal preferably supports Pt and/or Rh as a noble metal. In this case, an amount of supported Pt and/or Rh is 0.01 to 2.0% by weight, and preferably 0.05 to 1.0% by weight, to the gamma-alumina.

Of these thermostable oxides supporting noble metals, ceria composite oxides supporting noble metals are preferred. By using ceria composite oxides supporting noble metals, oxygen storage capability can be increased.

In the thermostable oxides, all thermostable oxide components may support noble metals as a whole, or they may be a mixture of thermostable oxides supporting noble metals and thermostable oxides not supporting noble metals.

As is described above, the catalyst composition of the present invention preferably comprises an Rh-containing perovskite-type composite oxide and/or a Pt-containing perovskite-type composite oxide, and a thermostable oxide optionally containing a noble metal such as a Pd-containing perovskite-type composite oxide represented by the general formula (III) , a zirconia composite oxide represented by the general formula (IV), a zirconia composite oxides represented by the general formula (V), a ceria composite oxides represented by the general formula (VI), and/or an alumina.

The catalyst composition comprising the two components can include an embodiment in which the Rh-containing perovskite-type composite oxide and/or Pt-containing perovskite-type composite oxide is supported by the thermostable oxide optionally containing a noble metal; and/or an embodiment in which the Rh-containing perovskite-type composite oxide and/or Pt-containing perovskite-type composite oxide is mixed with the thermostable oxide optionally containing a noble metal.

When the catalyst composition of the present invention comprises a thermostable oxide optionally containing a noble metal, and the thermostable oxide comprises a Pd-containing perovskite-type composite oxide represented by the general formula (III), the catalyst composition comprising the two components can also include an embodiment in which the Rh-containing perovskite-type composite oxide and/or Pt-containing perovskite-type composite oxide and the Pd-containing perovskite-type composite oxide are supported by the thermostable oxide optionally containing a noble metal [excluding the Pd-containing perovskite-type composite oxide represented by the general formula (III)]; and/or an embodiment in which the Rh-containing perovskite-type composite oxide and/or Pt-containing perovskite-type composite oxide, and the Pd-containing perovskite-type composite oxide are mixed with the thermostable oxide optionally containing a noble metal [excluding the Pd-containing perovskite-type composite oxides represented by the general formula (III)].

In the embodiment in which the Rh-containing perovskite-type composite oxide and/or Pt-containing perovskite-type composite oxide is supported by the thermostable oxide optionally containing a noble metal (hereinafter occasionally referred to as "supporting embodiment"), an amount of the Rh-containing perovskite-type composite oxide and/or Pt-containing perovskite-type composite oxide to be supported by the thermostable oxide optionally containing a noble metal is not specifically limited and is, for example, such that an amount of the thermostable oxide optionally containing a noble metal is 0.5 to 30 parts by weight, and preferably 0.5 to 20 parts by weight, to 1 part by weight of the Rh-containing perovskite-type composite oxide and/or Pt-containing perovskite-type composite oxide. When the amount of the thermostable oxide optionally containing a noble metal is less than the above-specified range, the Rh-containing perovskite-type composite oxide and/or Pt-containing perovskite-type composite oxide may not be sufficiently dispersed, and grain growth in an atmosphere of high temperature may not be inhibited. When it exceeds the range, the cost and production may become disadvantageous.

The Rh-containing perovskite-type composite oxide and/or Pt-containing perovskite-type composite oxide can be supported by the thermostable oxide optionally containing a noble metal by any process not limited. For example, the thermostable oxide optionally containing a noble metal may be incorporated during the production of the Rh-containing perovskite-type composite oxide and/or Pt-containing perovskite-type composite oxide, and subjected to a heat treatment. This allows the thermostable oxide optionally containing a noble metal to support the noble metal-containing perovskite-type composite oxide(s).

More specifically, the supporting can be carried out in the following manner. A powder of the thermostable oxide optionally containing a noble metal is mixed, for example, with a mixed solution containing elementary components constituting the Rh-containing perovskite-type composite oxide and/or Pt-containing perovskite-type composite oxide or with the resulting precipitate, and the resulting mixture is subjected to a heat treatment.

For example, when a perovskite-type composite oxide constitutionally comprising Rh and/or the perovskite-type composite oxide constitutionally comprising Pt is produced by the coprecipitation process, the supporting can be carried out by adding powder of the thermostable oxide optionally containing a noble metal to such as the prepared aqueous mixed salt solution, the resulting coprecipitate, and the resulting dried article, and subjecting the resulting mixture to a heat treatment.

When the perovskite-type composite oxide constitutionally comprising Rh and/or the perovskite-type composite oxide constitutionally comprising Pt is produced by the citrate complex process, for example, the supporting can be carried out by adding powder of the thermostable oxide optionally containing a noble metal to such as the prepared aqueous citrate-mixed salt solution, the resulting citrate complex, and the resulting provisionally baked product, and subjecting the resulting mixture to a heat treatment.

When the perovskite-type composite oxide constitutionally comprising Rh and/or the perovskite-type composite oxide constitutionally comprising Pt is produced by the alkoxide process, the supporting can be carried out by adding powder of the thermostable oxide optionally containing a noble metal to such as the prepared mixed alkoxide solution or homogeneous mixed solution, the resulting precipitate, and/or the dried article, and subjecting the resulting mixture to a heat treatment.

Of these processes, preferred is the process of adding powder of the thermostable oxide optionally containing a noble metal in the course of the production of the perovskite-type composite oxide constitutionally comprising Rh and/or perovskite-type composite oxide constitutionally comprising Pt by the alkoxide process and subjecting the resulting mixture to a heat treatment.

In the embodiment in which the Rh-containing perovskite-type composite oxide and/or Pt-containing perovskite-type composite oxide is mixed with the thermostable oxide optionally containing a noble metal (hereinafter occasionally referred to as "mixing embodiment"), a weight proportion of the Rh-containing perovskite-type composite oxide and/or Pt-containing perovskite-type composite oxide to be mixed with the thermostable oxide optionally containing a noble metal is not specifically limited and is, for example, such that an amount of the thermostable oxide optionally containing a noble metal is 0.5 to 30 parts by weight, and preferably 0.5 to 20 parts by weight, to 1 part by weight of the Rh-containing perovskite-type composite oxide and/or Pt-containing perovskite-type composite oxide. When the amount of the thermostable oxide optionally containing a noble metal is less than the above-specified range, the Rh-containing perovskite-type composite oxide and/or Pt-containing perovskite-type composite oxide may not be sufficiently dispersed, and the grain growth in an atmosphere of high temperature may not be inhibited. When it exceeds the range, the cost and production may become disadvantageous.

The mixing procedure of the Rh-containing perovskite-type composite oxide and/or Pt-containing perovskite-type composite oxide with the thermostable oxide optionally containing a noble metal is not specifically limited, as long as the Rh-containing perovskite-type composite oxide and/or Pt-containing perovskite-type composite oxide is physically mixed with the thermostable oxide optionally containing a noble metal. For example, a powder of the Rh-containing perovskite-type composite oxide and/or Pt-containing perovskite-type composite oxide and a powder of the thermostable oxide optionally containing a noble metal may be mixed by dry mixing or wet mixing.

The catalyst composition of the present invention may further comprise sulfates, carbonates, nitrates, and/or acetates of Ba, Ca, Sr, Mg, and/or La. Incorporation of the sulfates, carbonates, nitrates, and/or acetates can prevent poisoning of Pd, for example, by hydrocarbons (HC) thereby to inhibit decrease in a catalytic activity. Of these salts, BaSO₄ is preferably used.

The catalyst composition of the present invention can be formed, for example, as a coating layer on a catalyst carrier. The catalyst carrier includes, but is not specifically limited to, known catalyst carriers such as honeycomb monolithic carriers, for example, comprising cordierite.

The catalyst composition can be applied as a coating layer to a catalyst carrier, for example, in the following manner. Initially, water is added to the Rh-containing perovskite-type composite oxide and/or Pt-containing perovskite-type composite oxide and the thermostable oxide optionally containing a noble metal (either of the supporting embodiment and the mixing embodiment will do) to obtain a slurry, then the slurry is applied to the catalyst carrier, dried at 50°C to 200°C for 1 to 48 hours, and baked at 350°C to 1000°C for 1 to 12 hours to obtain the coating layer. Alternatively, the coating layer can be prepared in the following manner. After water is added to each of the above-mentioned individual components to obtain slurries, these slurries are mixed, and the resulting slurry mixture is applied to the catalyst carrier, dried at 50°C to 200°C for 1 to 48 hours, and baked at 350°C to 1000°C for 1 to 12 hours to obtain the coating layer.

The coating layer can have a multilayer structure comprising at least an outer layer as a surface layer and a inner layer arranged inside the outer layer.

In this case, it is preferred that at least one of the outer layer and the inner layer comprises the Rh-containing perovskite-type composite oxide and/or Pt-containing perovskite-type composite oxide and the thermostable oxide optionally containing a noble metal (either of the supporting embodiment and the mixing embodiment will do), and at least one of the layers other than the outer layer comprises the Pd-containing perovskite-type composite oxide.

By incorporating the Pd-containing perovskite-type composite oxide into a layer other than the outer layer, poisoning of Pd and thermal degradation of the Pd-containing layer can be prevented thereby to improve the catalytic performance and durability.

The Rh-containing perovskite-type composite oxide and/or Pt-containing perovskite-type composite oxide is preferably contained in a layer other than a layer containing Pd-containing perovskite-type composite oxide. By incorporating the Rh-containing perovskite-type composite oxide and/or Pt-containing perovskite-type composite oxide into a layer other than a layer containing the Pd-containing perovskite-type composite oxide, alloying of Pd with Rh and/or Pt and a resulting decreased catalytic activity can be prevented.

When the coating layer has a multilayer structure, the inner layer may be formed by applying a slurry comprising the individual components to a catalyst carrier, and drying and baking the coated article as in the above procedure. The outer layer (a layer other than the inner layer) may be formed by applying a slurry comprising the individual components to the inner layer formed on the catalyst carrier, and drying and baking the resulting article as in the above procedure.

When the coating layer is arranged as a multilayer, a layer containing the Rh-containing perovskite-type composite oxide and/or Pt-containing perovskite-type composite oxide is preferably arranged outside a layer containing the Pd-containing perovskite-type composite oxide.

When the coating layer is arranged as a multilayer, the noble metal contained in the inner layer (including noble metals contained in perovskite-type composite oxides and noble metals supported by thermostable oxides) is preferably Pd, and the noble metal contained in the outer layer (including noble metals contained in perovskite-type composite oxides and noble metals supported by thermostable oxides) is preferably Rh and/or Pt. This layer configuration can further improve the catalytic performance by the action of Rh and/or Pt contained in the outer layer while preventing the poisoning of Pd.

The coating layer may further comprise sulfates, carbonates, nitrates, and/or acetates of Ba, Ca, Sr, Mg, and/or La. When the coating layer has a multilayer structure, these sulfates, carbonates, nitrates, and/or acetates are preferably contained in a Pd-containing layer. By incorporating sulfates, carbonates, nitrates, and/or acetates, poisoning of Pd caused, for example, by hydrocarbons (HC) can be inhibited thereby to prevent decrease in catalytic activity. Of these salts, BaSO₄ is preferably used.

An amount of the sulfates, carbonates, nitrates, and/or acetates is set as appropriate according to the purpose and use thereof. An inner layer and/or outer layer containing these sulfates, carbonates, nitrates, and/or acetates can be formed, for example, by adding the sulfates, carbonates, nitrates, and/or acetates to a slurry for forming the inner layer and/or outer layer.

The coating layer comprises an intermediate layer between a layer containing the Pd-containing perovskite-type composite oxide and a layer containing the Rh-containing perovskite-type composite oxide and/or Pt-containing perovskite-type composite oxide, and the intermediate layer preferably comprises a ceria composite oxide. More preferably, the intermediate layer comprises the ceria composite oxide supporting Rh and/or Pt.

The outer layer preferably has, on its surface, a covering layer containing noble metal according, to the purpose and use thereof.

The noble metal constituting the covering layer is not specifically limited, but is preferably Rh and/or Pt among the above-mentioned noble metals.

The covering layer can be formed, for example, by adding water to a salt of the noble metal to obtain a slurry, immersing the catalyst carrier having the coating layer in the slurry, drying it at 50°C to 200°C for 1 to 48 hours, and baking it at 350°C to 1000°C for 1 to 12 hours.

The noble metal herein can be any of those mentioned above. Each of these noble metals can be used alone or in combination.

The noble metal salt (noble metal material) is as mentioned above. Practical examples thereof are aqueous nitrate solutions, aqueous dinitrodiammine nitrate solutions, and aqueous chloride solutions. More specific examples are rhodium salt solutions such as aqueous rhodium nitrate solution and aqueous rhodium chloride solution; palladium salt solutions such as aqueous palladium nitrate solution and aqueous palladium chloride solution; and platinum salt solutions such as aqueous dinitrodiammine platinum nitrate solution, aqueous chloroplatinic acid solution, and aqueous platinum tetraammine solution. Each of these noble metal salt solutions can be used alone or in combination.

The catalyst composition of the present invention can be used in a variety of industrial fields not specifically limited. The perovskite-type composite oxides according to the present invention can be suitably and advantageously used as a catalyst composition because of high catalytic activities and self-regeneration capabilities of Rh, Pt and Pd.

The catalyst composition of the present invention can be used alone or in combination with one or more other components as appropriate according to the purpose and use thereof. The use is not specifically limited, and the catalyst composition can be widely used in fields in which Pd is used as catalysts, for such as organic synthesis reaction catalysts, reduction reaction catalysts, hydrogenation catalysts, hydrogenolysis catalysts, or exhaust gas purifying catalysts for internal combustion engines.

Particularly, when they are used as exhaust gas purifying catalysts for internal combustion engines, the resulting catalysts can maintain high catalytic activities over a long time and exhibit excellent exhaust gas purifying capabilities due to the high catalytic activities and the self-regenerative functions of Rh, Pt and Pd. Examples of the exhaust gas purifying catalysts for internal combustion engines are exhaust gas purifying catalysts for automobiles having gasoline engines and diesel engines.

### Examples

The present invention will be illustrated in further detail by way of the following Examples and Comparative Examples, which by no means limit the scope of the present invention.

### Reference Example 1

### (Production of Ca_{1.020}Ti_{0.985}Rh_{0.015}O_{3+δ} powder)

A mixed alkoxide solution was prepared by charging 0.102 mol, in terms of Ca, of calcium isopropoxide [Ca^{II}(OCH(CH₃)₂)₂] and 0.0985 mol, in terms of Ti, of titanium isopropoxide [Ti^{IV}(OCH(CH₃)₂)₄] in a 500 mL round-bottomed flask, and dissolving them in 200 mL of toluene with stirring. The mixed alkoxide solution was hydrolyzed by adding dropwise 200 mL of deionized water to obtain a white viscous precipitate. Toluene was distilled off from the mixed alkoxide solution to obtain an aqueous slurry, and the aqueous slurry was mixed with 0.0015 mol, in terms of Rh, of an aqueous rhodium nitrate solution and stirred at room temperature for 1 hour.

Next, the resulting mixture was evaporated to dryness by distilling off water under reduced pressure to obtain a precursor. The precursor was subjected to a heat treatment (baking) in an electric furnace at 950°C in the air for 2 hours to obtain a brown powder of Rh-containing perovskite-type composite oxide having the composition of Ca_{1.020}Ti_{0.985}Rh_{0.015}O_{3+δ}. The composite oxide has an Rh content of 1.12% by weight.

### Reference Example 2

### (Production of Ca_{1.00}Ti_{0.98}Rh_{0.02}O₃ powder)

An aqueous slurry was prepared by the same procedure of Reference Example 1, except for charging 0.100 mol, in terms of Ca, of calcium isopropoxide and 0.098 mol, in terms of Ti, of titanium isopropoxide in a 500 mL round-bottomed flask. The aqueous slurry was mixed with 0.002 mol, in terms of Rh, of an aqueous rhodium nitrate solution and stirred at room temperature for 1 hour.

Next, the resulting mixture was evaporated to dryness by distilling off water under reduced pressure to obtain a precursor. The precursor was subjected to a heat treatment (baking) in an electric furnace at 800°C in the air for 1 hour to obtain a brown powder of Rh-containing perovskite-type composite oxide having the composition of Ca_{1.00}Ti_{0.98}Rh_{0.02}O₃· The composite oxide has an Rh content of 1.50% by weight.

### Reference Example 3

### (Production of Sr_{1.00}Ti_{0.97}Rh_{0.03}O₃ powder)

An aqueous mixed salt solution was prepared by charging 0.100 mol, in terms of Sr, of strontium nitrate [SrNO₃)₂] and 0.097 mol, in terms of Ti, of an aqueous titanium chloride solution in a 500 mL round-bottomed flask and dissolving them in 200 mL of deionized water with stirring. At room temperature the aqueous mixed salt solution was added dropwise with 0.50 mol, in terms of NaOH, of a 10% by weight aqueous sodium hydroxide solution to obtain a coprecipitate. The aqueous solution containing the coprecipitate was further stirred for 2 hours, filtrated, and fully washed with deionized water.

The resulting coprecipitate was placed in a 500 mL round-bottomed flask, mixed with 0.003 mol, in terms of Rh, of an aqueous rhodium nitrate solution and 100 mL of deionized water, and stirred at room temperature.

Next, the resulting mixture was evaporated to dryness by distilling off water under reduced pressure to obtain a precursor. The precursor was further subjected to a heat treatment (baking) in an electric furnace at 800°C in the air for 2 hours to obtain a brown powder of Rh-containing perovskite-type composite oxide having the composition of Sr_{1.00}Ti_{0.97}Rh_{0.03}O₃. The composite oxide has an Rh content of 1.67% by weight.

### Reference Example 4

### (Production of Ba_{1.000}Ti_{0.975}Rh_{0.025}O₃ powder)

A coprecipitate was prepared by the same procedure of Reference Example 3, except for charging 0.100 mol, in terms of Ba, of an aqueous barium nitrate solution and 0.0975 mol, in terms of Ti, of an aqueous titanium chloride solution in a 500 mL round-bottomed flask.

The resulting coprecipitate was placed in a 500 mL round-bottomed flask, was combined with 0.0025 mol, in terms of Rh, of an aqueous rhodium nitrate solution and 100 mL of deionized water, and stirred at room temperature.

Next, after a precursor was prepared by the procedure of Reference Example 3, the precursor was subjected to a heat treatment (baking) under the same condition as in Reference Example 3 to obtain a brown powder of Rh-containing perovskite-type composite oxide having the composition of Ba_{1.000}Ti_{0.975}Rh_{0.025}O₃. The composite oxide has an Rh content of 1.0% by weight.

### Reference Example 5

### (Production of La_{1.00}Fe_{0.95}Pd_{0.05}O₃ powder)

A mixed alkoxide solution was prepared by charging 0.100 mol, in terms of La, of lanthanum ethoxyethylate [La(OC₂H₄OEt)₃] and 0.095 mol, in terms of Fe, of iron ethoxyethylate [Fe(OC₂H₄OEt)₃] in a 500 mL round-bottomed flask and dissolving them in 200 mL of toluene with stirring. In 100 mL of toluene, 0.005 mol, in terms of Pd, of palladium acetylacetonate [Pd^{II}(acac)₂] was dissolved, and the resulting solution was added to the mixed alkoxide solution in the round-bottomed flask to obtain a homogeneous mixed solution containing La, Fe, and Pd.

The homogeneous mixed solution in the round-bottomed flask was hydrolyzed by adding dropwise 200 mL of deionized water over about 15 minutes to obtain a brown viscous precipitate. Then, the solution containing the viscous precipitate was further stirred at room temperature for 2 hours.

Next, toluene and water were distilled off under reduced pressure to obtain a precursor of LaFePd composite oxide. The precursor was transferred to a Petri dish, dried under air flow at 60°C for 24 hours, and subjected to a heat treatment (baking) in an electric furnace at 800°C in the air for 1 hour to obtain a dark brown powder of Pd-containing perovskite-type composite oxide having the composition of La_{1.00}Fe_{0.95}Pd_{0.05}O₃. The composite oxide has a Pd content of 2.17% by weight.

### Reference Example 6

### (Production of Rh/Zr_{0.80}La_{0.05}Nd_{0.15} oxide powder)

A mixed alkoxide solution was prepared by mixing 0.160 mol, in terms of Zr, of zirconium methoxypropylate, 0.010 mol, in terms of La, of lanthanum methoxypropylate, and 0.030 mol, in terms of Nd, of neodymium methoxypropylate in 200 mL of toluene and dissolving them with stirring. The mixed alkoxide solution was hydrolyzed by adding dropwise 80 mL of deionized water.

Next, toluene and deionized water were distilled off from the hydrolyzed solution and evaporated to dryness to obtain a precursor. The precursor was forcedly air-dried at 60°C for 24 hours, and subjected to a heat treatment (baking) in an electric furnace at 450°C for 3 hours to obtain a powder of thermostable oxide having the composition of Zr_{0.80}La_{0.05}Nd_{0.15} oxide.

The resulting Zr_{0.80}La_{0.05}Nd_{0.15} oxide powder was impregnated with an aqueous rhodium nitrate solution, dried, and then subjected to a heat treatment (baking) in an electric furnace at 800°C for 3 hours to obtain an Rh-supporting Zr_{0.80}La_{0.05}Nd_{0.15} oxide powder.

The powder supports 0.2 g of Rh per 40 g of the powder.

### Reference Example 7

### (Production of Zr_{0.78}Ce_{0.16}La_{0.02}Nd_{0.04} oxide powder)

A mixed alkoxide solution was prepared by mixing 0.156 mol, in terms of Zr, of zirconium methoxypropylate, 0.032 mol, in terms of Ce, of cerium methoxypropylate, 0.004 mol, in terms of La, of lanthanum methoxypropylate [La(OCH(CH₃)CH₂OCH₃)₃], and 0.008 mol in terms of Nd of neodymium methoxypropylate [Nd(OCH(CH₃)CH₂OCH₃)₃] in 200 mL of toluene and dissolving them with stirring. The mixed alkoxide solution was hydrolyzed by adding dropwise 80 mL of deionized water.

Next, the hydrolyzed solution was evaporated to dryness by distilling off toluene and deionized water to obtain a precursor. The precursor was subjected to forced-air drying at 60°C for 24 hours and then to a heat treatment (baking) in an electric furnace at 450°C for 3 hours to obtain a powder of thermostable oxide represented by Zr_{0.78}Ce_{0.16}La_{0.02}Nd_{0.04} oxide.

### Reference Example 8

### (Production of Rh/Zr_{0.777}Ce_{0.60}La_{0.020}Nd_{0.040}Rh_{0.003} oxide powder)

A Zr_{0.777}Ce_{0.160}La_{0.020}Nd_{0.040}Rh_{0.003} oxide powder was prepared by impregnating 20 g of the Zr_{0.78}Ce_{0.16}La_{0.02}Nd_{0.04} oxide powder prepared in Reference Example 7 with an aqueous rhodium nitrate solution (0.06 g in terms of Rh), and drying and then heating (baking) it in an electric furnace at 800°C for 3 hours.

Next, 20 g of the powder was impregnated with an aqueous rhodium nitrate solution (0.04 g in terms of Rh), dried, and baked in an electric furnace at 500°C for 3 hours to obtain an Rh-supporting Zr_{0.777}Ce_{0.160}La_{0.020}Nd_{0.40}Rh_{0.003} oxide.

### Reference Example 9

### (Production of Zr_{0.776}Ce₀.₁₅₉La_{0.020}Nd_{0.040}Rh_{0.005} oxide powder)

A Zr_{0.776}Ce_{0.159}La_{0.020}Nd_{0.040}Rh_{0.005} oxide powder was prepared by impregnating 40 g of the Zr_{0.78}Ce_{0.16}La_{0.02}Nd_{0.04} oxide powder prepared in Reference Example 7 with an aqueous rhodium nitrate solution (0.15 g in terms of Rh), drying and then heating (baking) it in an electric furnace at 800°C for 3 hours.

### Reference Example 10

### (Production of Pt-Rh/Zr_{0.78}Ce_{0.16}La_{0.02}Nd_{0.04} oxide powder)

A Pt-supporting Zr_{0.78}Ce_{0.16}La_{0.02}Nd_{0.04} oxide powder was prepared by impregnating the Zr_{0.78}Ce_{0.16}La_{0.02}Nd_{0.04} oxide powder prepared in Reference Example 7 with an aqueous dinitrodiammine platinum nitrate solution, and drying and then heating (baking) it in an electric furnace at 600°C for 3 hours.

Next, the resulting Pt-supporting Zr_{0.78}Ce_{0.16}La_{0.02}Nd_{0.04} oxide powder was impregnated with an aqueous rhodium nitrate solution, dried, and heated (baked) in an electric furnace at 600°C for 3 hours to obtain a Pt-Rh-supporting Zr_{0.78}Ce_{0.16}La_{0.02}Nd_{0.04} oxide powder.

The powder supports 0.15 g of Pt and 0.3 g of Rh per 60 g of the powder.

### Reference Example 11

### (Production of Pt-Rh/Zr_{0.78}Ce_{0.16}La_{0.02}Nd_{0.04} oxide powder)

A Pt-Rh-supporting Zr_{0.78}Ce_{0.16}La_{0.02}Nd_{0.04} oxide powder was prepared by the procedure of Reference Example 10, except for changing the amounts of the aqueous dinitrodiammine platinum nitrate solution and aqueous rhodium nitrate solution to be impregnated.

The powder supports 0.2 g of Pt and 0.2 g of Rh per 60 g of the powder.

### ] Reference Example 12

### (Production of Pt-Rh/Zr_{0.78}Ce_{0.16}La_{0.02}Nd_{0.04} oxide powder)

A Pt-Rh-supporting Zr_{0.78}Ce_{0.16}La_{0.02}Nd_{0.04} oxide powder was prepared by the procedure of Reference Example 10, except for changing the amounts of the aqueous dinitrodiammine platinum nitrate solution and aqueous rhodium nitrate solution to be impregnated.

The powder supports 0.2 g of Pt and 0.1 g of Rh per 45 g of the powder.

### Reference Example 13

### (Production of Zr_{0.80}Ce_{0.16}La_{0.04} oxide powder)

A mixed alkoxide solution was prepared by mixing 0.16 mol, in terms of Zr, of zirconium methoxypropylate, 0.032 mol, in terms of Ce, of cerium methoxypropylate, and 0.008 mol, in terms of La, of lanthanum methoxypropylate in 200 mL of toluene dissolving them with stirring. The mixed alkoxide solution was hydrolyzed by adding dropwise 80 mL of deionized water.

Next, the hydrolyzed solution was evaporated to dryness by distilling off toluene and deionized water to obtain a precursor. The precursor was subjected to forced-air drying at 60°C for 24 hours, then to a heat treatment (baking) in an electric furnace at 450°C for 3 hours to obtain a thermostable oxide powder represented by Zr_{0.80}Ce_{0.16}La_{0.04} oxide.

### Reference Example 14

### (Production of Pt-Rh/Zr_{0.80}Ce_{0.16}La_{0.04} oxide powder)

A Pt-Rh-supporting Zr_{0.80}Ce_{0.16}La_{0.04} oxide powder was prepared by impregnating the Zr_{0.80}Ce_{0.16}La_{0.04} oxide powder prepared in Reference Example 13 with an aqueous dinitrodiammine platinum nitrate solution and an aqueous rhodium nitrate solution, and drying and then heating (baking) them in an electric furnace at 600°C for 3 hours.

The powder supports 0.25 g of Pt and 0.25 g of Rh per 50 g of the powder.

### Reference Example 15

### (Production of Pt-Rh/Zr_{0.80}Ce_{0.16}La_{0.04} oxide powder)

A Pt-Rh-supporting Zr_{0.80}Ce_{0.16}La_{0.04} oxide powder was prepared by the same procedure of Reference Example 14, except for changing the amounts of the aqueous dinitrodiammine platinum nitrate solution and aqueous rhodium nitrate solution to be impregnated.

The powder supports 0.6 g of Pt and 0.6 g of Rh per 60 g of the powder.

### Reference Example 16

### (Production of Ce_{0.50}Zr_{0.45}Y_{0.05} oxide powder)

A mixed alkoxide solution was prepared by mixing 0.1 mol, in terms of Ce, of cerium methoxypropylate [Ce(OCH(CH₃)(CH₃OCH₃)₃], 0.09 mol, in terms of Zr, of zirconium methoxypropylate [Zr(OCH(CH₃)CH₂OCH₃)₃], and 0.01 mol, in terms of Y, of yttrium methoxypropylate [Y(OCH(CH₃)CH₂OCH₃)₃] in 200 mL of toluene and dissolving them with stirring. The mixed alkoxide solution was hydrolyzed by adding dropwise 80 mL of deionized water.

Next, the hydrolyzed solution was evaporated to dryness by distilling off toluene and deionized water to obtain a precursor. The precursor was subjected to forced-air drying at 60°C for 24 hours, then to a heat treatment (baking) in an electric furnace at 450°C for 3 hours to obtain a powder of thermostable oxide represented by Ce_{0.50}Zr_{0.45}Y_{0.05} oxide.

### Reference Example 17

### (Production of Pt/Ce_{0.50}Zr_{0.45}Y_{0.05} oxide powder)

A Pt-supporting Ce_{0.50}Zr_{0.45}Y_{0.05} oxide powder was prepared by impregnating the Ce_{0.50}Zr_{0.45}Y_{0.05} oxide powder prepared in Reference Example 16 with an aqueous dinitrodiammine platinum nitrate solution, drying and then heating (baking) them in an electric furnace at 600°C for 3 hours.

The powder supports 0.3 g of Pt per 90 g of the powder.

### Reference Example 18

### (Production of Pt/Ce_{0.50}Zr_{0.45}/Y_{0.50} oxide powder)

A Pt-supporting Ce_{0.50}Zr_{0.45}Y_{0.05} oxide powder was prepared by the same procedure of Reference Example 17, except for changing the amount of the aqueous dinitrodiammine platinum nitrate solution to be impregnated.

The powder supports 0.15 g of Pt per 40 g of the powder.

### Reference Example 19

### (Production of Pt/Ce_{0.50}Zr_{0.45}Y_{0.05} oxide powder)

A Pt-supporting Ce_{0.50}Zr_{0.45}Y_{0.05} oxide powder was prepared by the same procedure of Reference Example 17, except for changing the amount of the aqueous dinitrodiammine platinum nitrate solution to be impregnated.

The powder supports 0.3 g of Pt per 30 g of the powder.

### Reference Example 20

### (Production of Pt/Ce_{0.50}Zr_{0.45}Y_{0.05} oxide powder)

A Pt-supporting Ce_{0.50}Zr_{0.45}Y_{0.05} oxide powder was prepared by the same procedure of Reference Example 17, except for changing the amount of the aqueous dinitrodiammine platinum nitrate solution to be impregnated.

The powder supports 0.4 g of Pt per 60 g of the powder.

### Reference Example 21

### (Production of Pt/Ce_{0.50}Zr_{0.45}Y_{0.05} oxide powder)

A Pt-supporting Ce_{0.50}Zr_{0.45}Y_{0.05} oxide powder was prepared by the same procedure of Reference Example 17, except for changing the amount of the aqueous dinitrodiammine platinum nitrate solution to be impregnated.

The powder supports 0.15 g of Pt per 30 g of the powder.

### Reference Example 22

### (Production of Pd/gamma-Al₂O₃ powder)

A Pd-supporting gamma-alumina powder was prepared by impregnating gamma-alumina with an aqueous dinitrodiammine palladium nitrate solution, drying and then heating (baking) it in an electric furnace at 600°C for 3 hours.

The powder supports 0.5 g of Pd per 60 g of the powder.

### Reference Example 23

### (Production of Pt-Rh/θ-Al₂O₃ powder)

A Pt-supporting theta-alumina powder was prepared by impregnating theta-alumina with an aqueous dinitrodiammine platinum nitrate solution, drying and then heating (baking) it in an electric furnace at 600°C for 3 hours.

Next, the resulting Pt-supporting theta-alumina powder was impregnated with an aqueous rhodium nitrate solution, dried, and subjected to a heat treatment (baking) in an electric furnace at 600°C for 3 hours to obtain a Pt-Rh-supporting theta-alumina powder.

The powder supports 0.3 g of Pt and 0.2 g of Rh per 60 g of the powder.

### Reference Example 24

### (Production of Pt-Rh/θ-Al₂O₃ powder)

A Pt-Rh-supporting theta-alumina powder was prepared by impregnating theta-alumina with an aqueous dinitrodiammine platinum nitrate solution and an aqueous rhodium nitrate solution, drying and then heating (baking) it in an electric furnace at 600°C for 3 hours.

The powder supports 0.2 g of Pt and 0.1 g of Rh per 60 g of the powder.

### Reference Example 25

### (Production of Pt-Rh/γ-Al₂O₃ powder)

A Pt-supporting gamma-alumina powder was prepared by impregnating gamma-alumina with an aqueous dinitrodiammine platinum nitrate solution, drying and then heating (baking) it in an electric furnace at 600°C for 3 hours.

Next, the resulting Pt-supporting gamma-alumina powder was impregnated with an aqueous rhodium nitrate solution, dried, and subjected to a heat treatment (baking) in an electric furnace at 600°C for 3 hours to obtain a Pt-Rh-supporting gamma-alumina powder.

The powder supports 0.15 g of Pt and 0.1 g of Rh per 50 g of the powder.

### Reference Example 26

### (Production of Pt-Rh/theta-Al₂O₃ powder)

A Pt-Rh-supporting theta-alumina powder was prepared by the same procedure of Reference Example 23, except for changing the amounts of the aqueous dinitrodiammine platinum nitrate solution and the aqueous rhodium nitrate solution to be impregnated.

The powder supports 0.4 g of Pt and 0.1 g of Rh per 115 g of the powder.

### Reference Example 27

### (Production of La_{1.02}Fe_{0.95}Pd_{0.05}O_{3+δ"} powder)

A mixed alkoxide solution was prepared by charging 0.102 mol in terms of La of lanthanum ethoxyethylate [La (OC₂H₄OEt)₃] and 0.095 mol in terms of Fe of iron ethoxyethylate [Fe(OC₂H₄OEt)₃] in a 500 mL round-bottomed flask and dissolving them in 200 mL of toluene with stirring. In 100 mL of toluene, 0.005 mol, in terms of, Pd of palladium acetylacetonate [Pd^{II}(acac)₂] was dissolved, and the resulting solution was added to the mixed alkoxide solution in the round-bottomed flask to obtain a homogeneous mixed solution containing La, Fe and Pd.

The mixed solution in the round-bottomed flask was hydrolyzed by adding dropwise 200 mL of deionized water over about 15 minutes to obtain a brown viscous precipitate. The solution containing the viscous precipitate was further stirred at room temperature for 2 hours.

Next, toluene and water were distilled off under reduced pressure to obtain a precursor of LaFePd composite oxide. The precursor was transferred to a Petri dish, dried under air flow at 60°C for 24 hours, and subjected to a heat treatment (baking) in an electric furnace at 800°C in the air for 1 hour to obtain a dark brown powder of Pd-containing perovskite-type composite oxide having the composition of La_{1.02}Fe_{0.95}Pd_{0.05}O_{3+δ}''. The composite oxide has a Pd content of 2.15% by weight.

### Example 1

The Pd-supporting gamma-alumina powder prepared in Reference Example 22 and the Pt-supporting Ce_{0.50}Zr_{0.45}Y_{0.05} oxide powder prepared in Reference Example 17 were mixed and pulverized in a ball mill, and combined with distilled water to obtain a slurry. The slurry was applied to inner surfaces of cells of a monolithic carrier, dried, and then baked at 600°C for 3 hours to obtain an inner layer.

The inner layer was formed so that the monolithic carrier supports, per 1 liter thereof, 60 g of the Pd-supporting gamma-alumina powder (amount of supported Pd: 0.5 g) and 90 g of the Pt-supporting Ce_{0.50}Zr_{0.45}Y_{0.05} oxide powder (amount of supported Pt: 0.3 g), respectively.

Next, the Pt-Rh-supporting Zr_{0.78}Ce_{0.16}La_{0.02}Nd_{0.04} oxide powder prepared in Reference Example 10 and the Ca_{1.020}Ti_{0.985}Rh_{0.015}O_{3+δ} powder prepared in Reference Example 1 were mixed and pulverized in a ball mill, and combined with distilled water to obtain a slurry. The slurry was applied to the surface of the inner layer on the monolithic carrier, dried, and then baked at 600°C for 3 hours to obtain an outer layer.

The outer layer was formed so that the monolithic carrier supports, per 1 liter thereof, 60 g of the Pt-Rh-supporting Zr_{0.78}Ce_{0.16}La_{0.02}Nd_{0.04} oxide powder (amount of supported Pt: 0.15 g; amount of supported Rh: 0. 3 g) and 9 g of the Ca_{1.020}Ti_{0.985}Rh_{0.015}O_{3+δ} powder (amount of supported Rh: 0.1 g), respectively.

Thus, a catalyst composition comprising two layers of coatings was prepared. The amounts of supported Pt, Rh, and Pd of the catalyst composition as a whole are 0.45 g/L, 0.4 g/L, and 0.5 g/L, respectively.

### Example 2

The La_{1.00}Fe_{0.95}Pd_{0.05}O₃ powder prepared in Reference Example 5 and a theta-alumina powder were mixed and pulverized in a ball mill, and combined with distilled water to obtain a slurry. The slurry was applied to inner surfaces of cells of a monolithic carrier, dried, and then baked at 600°C for 3 hours to obtain an inner layer.

The inner layer was formed so that the monolithic carrier supports, per 1 liter thereof, 15 g of the La_{1.00}Fe_{0.95}Pd_{0.05}O₃ powder (amount of supported Pd: 0.3 g) and 100 g of the theta-alumina powder, respectively.

Next, the Pt-Rh-supporting theta-alumina powder prepared in Reference Example 23, the Pt-supporting Ce_{0.50}Zr_{0.45}Y_{0.05} oxide powder prepared in Reference Example 18, and the Ca_{1.00}Ti_{0.98}Rh_{0.02}O₃ powder prepared in Reference Example 2 were mixed and pulverized in a ball mill, and combined with distilled water to obtain a slurry. The slurry was applied to the surface of the inner layer on the monolithic carrier, dried, and then baked at 600°C for 3 hours to obtain an outer layer.

The outer layer was formed so that the monolithic carrier supports, per 1 liter thereof, 60 g of the Pt-Rh-supporting theta-alumina powder (amount of supported Pt: 0.3 g; amount of supported Rh: 0.2 g), 40 g of the Pt-supporting Ce_{0.50}Zr_{0.45}Y_{0.05} oxide powder (amount of supported Pt: 0.15 g), and 10 g of the Ca_{1.00}Ti_{0.98}Rh_{0.02}O₃ powder (amount of supported Rh: 0.15 g), respectively.

Thus, a catalyst composition comprising two layers of coatings was prepared. The amounts of supported Pt, Rh, and Pd of the catalyst composition as a whole are 0.45 g/L, 0.35 g/L, and 0.3 g/L, respectively.

### Example 3

The La_{1.00}Fe_{0.95}Pd_{0.05}O₃ powder prepared in Reference Example 5, theta-alumina powder, the Pt-supporting Ce_{0.50}Zr_{0.45}Y_{0.05} oxide powder prepared in Reference Example 19, and barium sulfate powder were mixed and pulverized in a ball mill, and combined with distilled water to obtain a slurry. The slurry was applied to inner surfaces of cells of a monolithic carrier, dried, and then baked at 600°C for 3 hours to obtain an inner layer.

The inner layer was formed so that the monolithic carrier supports, per 1 liter thereof, 15 g of the La_{1.00}Fe_{0.95}Pd_{0.05}O₃ powder (amount of supported Pd: 0.3 g), 60 g of the theta-alumina powder, 30 g of the Pt-supporting Ce_{0.50}Zr_{0.45}Y_{0.05} oxide powder (amount of supported Pt: 0.3 g), and 30 g of the barium sulfate powder, respectively.

Next, the Pt-Rh-supporting Zr_{0.78}Ce_{0.16}La_{0.02}Nd_{0.04} oxide powder prepared in Reference Example 11, the Ca_{1.020}Ti_{0.985}Rh_{0.015}O_{3+δ} powder prepared in Reference Example 1, and the Ba_{1.000}Ti_{0.975}Rh_{0.025}O₃ powder prepared in Reference Example 4 were mixed and pulverized in a ball mill, and combined with distilled water to obtain a slurry. The slurry was applied to the surface of the inner layer on the monolithic carrier, dried, and then baked at 600°C for 3 hours to obtain an outer layer.

The outer layer was formed so that the monolithic carrier supports, per 1 liter thereof, 60 g of the Pt-Rh-supporting Zr_{0.78}Ce_{0.16}La_{0.02}Nd_{0.04} oxide powder (amount of supported Pt: 0.2 g, amount of supported Rh: 0.2 g), 9 g of the Ca_{1.020}Ti_{0.985}Rh_{0.015}O_{3+δ} powder (amount of supported Pt: 0.1 g), and 10 g of the Ba_{1.000}Ti_{0.975}Rh_{0.025}O₃ powder (amount of supported Rh: 0.05 g), respectively.

Thus, a catalyst composition comprising two layers of coatings was prepared. The amounts of supported Pt, Rh, and Pd of the catalyst composition as a whole are 0.5 g/L, 0.35 g/L, and 0.3 g/L, respectively.

### Example 4

The La_{1.00}Fe_{0.95}Pd_{0.05}O₃ powder prepared in Reference Example 5 and theta-alumina powder were mixed and pulverized in a ball mill, and combined with distilled water to obtain a slurry. The slurry was applied to inner surfaces of cells of a monolithic carrier, dried, and then baked at 600°C for 3 hours to obtain an inner layer.

The inner layer was formed so that the monolithic carrier supports, per 1 liter thereof, 15 g of the La_{1.00}Fe_{0.95}Pd_{0.05}O₃ powder (amount of supported Pd: 0.3 g) and 90 g of the theta-alumina powder, respectively.

Next, the Rh-supporting Zr_{0.80}La_{0.05}Nd_{0.15} oxide powder prepared in Reference Example 6, the Pt-supporting Ce_{0.50}Zr_{0.45}Y_{0.05} oxide powder prepared in Reference Example 20, the Sr_{1.00}Ti_{0.97}Rh_{0.03}O₃ powder prepared in Reference Example 3, and theta-alumina powder were mixed and pulverized in a ball mill, and combined with distilled water to obtain a slurry. The slurry was applied to the surface of the inner layer on the monolithic carrier, dried, and then baked at 600°C for 3 hours to obtain an outer layer.

The outer layer was formed so that the monolithic carrier supports, per 1 liter thereof, 40 g of the Rh-supporting Zr_{0.80}La_{0.05}Nd_{0.15} oxide powder (amount of supported Rh: 0.2 g), 60 g of the Pt-supporting Ce_{0.50}Zr_{0.45}Y_{0.05} oxide powder (amount of supported Pt: 0.4 g), 9 g of the Sr_{1.00}Ti_{0.97}Rh_{0.03}O₃ powder (amount of supported Rh: 0.15 g), and 80 g of the theta-alumina powder, respectively.

Thus, a catalyst composition comprising two layers of coatings was prepared. The amounts of supported Pt, Rh, and Pd of the catalyst composition as a whole are 0.4 g/L, 0.35 g/L, and 0.3 g/L, respectively.

### Example 5

The La_{1.02}Fe_{0.95}Pd_{0.05}O_{3+δ"} powder prepared in Reference Example 27, the Pt-supporting Ce_{0.50}Zr_{0.45}Y_{0.05} oxide powder prepared in Reference Example 17, and theta-alumina powder were mixed and pulverized in a ball mill, and combined with distilled water to obtain a slurry. The slurry was applied to inner surfaces of cells of a monolithic carrier, dried, and then baked at 600°C for 3 hours to obtain an inner layer.

The inner layer was formed so that the monolithic carrier supports, per 1 liter thereof, 15 g of the La_{0.02}Fe_{0.95}Pd_{0.05}O_{3+δ}' ' powder (amount of supported Pd: 0.3 g), 30 g of the Pt-supporting Ce_{0.50}Zr_{0.45}Y_{0.05} oxide powder (amount of supported Pt : 0.1 g), and 90 g of the theta-alumina powder, respectively.

Next, the Rh-supporting Zr_{0.777}Ce_{0.160}La_{0.020}Nd_{0.040}Rh_{0.003} oxide powder prepared in Reference Example 8, the Pt-supporting Ce_{0.50}Zr_{0.45}Y_{0.05} oxide powder prepared in Reference Example 17, the Ca_{1.020}Ti_{0.985}Rh_{0.015}O₃₊₈ powder prepared in Reference Example 1, and the Pt-Rh-supporting theta-alumina powder prepared in Reference Example 24 were mixed and pulverized in a ball mill, and combined with distilled water to obtain a slurry. The slurry was applied to the surface of the inner layer on the monolithic carrier, dried, and then baked at 600°C for 3 hours to obtain an outer layer.

The outer layer was formed so that the monolithic carrier supports, per 1 liter thereof, 20 g of the Rh-supporting Zr_{0.777}Ce_{0.160}La_{0.020}Nd_{0.040}Rh_{0.003} oxide powder (amount of supported Rh: 0.1 g), 30 g of the Pt-supporting Ce_{0.50}Zr_{0.45}Y_{0.05} oxide powder (amount of supported Pt: 0.1 g), 9 g of the CaTi_{0.985}Rh_{0.015}O_{3+δ} powder (amount of supported Rh: 0.1 g), and 60 g of the Pt-Rh-supporting theta-alumina powder (amount of supported Pt: 0.2 g, amount of supported Rh: 0.1 g), respectively.

Thus, a catalyst composition comprising two layers of coatings was prepared. The amounts of supported Pt, Rh, and Pd of the catalyst composition as a whole are 0.4 g/L, 0.3 g/L, and 0.3 g/L, respectively.

### Example 6

The La_{1.00}Fe_{0.95}Pd_{0.05}O₃ powder prepared in Reference Example 5, the Pt-supporting Ce_{0.50}Zr_{0.45}Y_{0.50} oxide powder prepared in Reference Example 17, a barium sulfate powder and a theta-alumina powder were mixed and pulverized in a ball mill, and combined with distilled water to obtain a slurry. The slurry was applied to inner surfaces of cells of a monolithic carrier, dried, and then baked at 600°C for 3 hours to obtain an inner layer.

The inner layer was formed so that the monolithic carrier supports, per 1 liter thereof, 15 g of the La_{1.00}Fe_{0.95}Pd_{0.05}O₃ powder (amount of supported Pd: 0.3 g), 30 g of the Pt-supporting Ce_{0.50}Zr_{0.15}Y_{0.05} oxide powder (amount of supported Pt: 0.1 g), 20 g of the barium sulfate powder, and 90 g of the theta-alumina powder, respectively.

Next, the Zr_{0.776}Ce_{0.159}La_{0.020}Nd_{0.040}Rh_{0.005} oxide powder prepared in Reference Example 9, the Pt-supporting Ce_{0.50}Zr_{0.45}Y_{0.05} oxide powder prepared in Reference Example 17, the Ca_{1.020}Ti_{0.985}Rh_{0.015}O_{3+δ} powder prepared in Reference Example 1, and the Pt-Rh-supporting gamma-alumina powder prepared in Reference Example 25 were mixed and pulverized in a ball mill, and combined with distilled water to obtain a slurry. The slurry was applied to the surface of the inner layer on the monolithic carrier, dried, and then baked at 600°C for 3 hours to obtain an outer layer.

The outer layer was formed so that the monolithic carrier supports, per 1 liter thereof, 40 g of the Zr_{0.776}Ce_{0.159}La_{0.020}Nd_{0.040}Rh_{0.005} oxide powder (amount of supported Rh: 0.15 g), 30 g of the Pt-supporting Ce_{0.50}Zr_{0.45}Y_{0.05} oxide powder (amount of supported Pt: 0.1 g), 4 g of the Ca_{1.020}Ti_{0.985}Rh_{0.015}O_{3+δ} powder (amount of supported Rh: 0.05 g), and 50 g of the Pt-Rh-supporting gamma-alumina powder (amount of supported Pt: 0.15 g, amount of supported Rh: 0.1 g), respectively.

Thus, a catalyst composition comprising two layers of coatings was prepared. The amounts of supported Pt, Rh, and Pd of the catalyst composition as a whole are 0.35 g/L, 0.3 g/L, and 0.3 g/L, respectively.

### Example 7

The La_{1.00}Fe_{0.95}Pd_{0.05}O₃ powder prepared in Reference Example 5, a theta-alumina powder, and a barium sulfate powder were mixed and pulverized in a ball mill, and combined with distilled water to obtain a slurry. The slurry was applied to inner surfaces of cells of a monolithic carrier, dried, and then baked at 600°C for 3 hours to obtain an inner layer.

The inner layer was formed so that the monolithic carrier supports, per 1 liter thereof, 15 g of the La_{1.00}Fe_{0.95}Pd_{0.05}O₃ powder (amount of supported Pd: 0.3 g), 80 g of the theta-alumina powder, and 20 g of the barium sulfate powder, respectively.

Next, the Pt-Rh-supporting Zr_{0.80}Ce_{0.16}La_{0.04} oxide powder prepared in Reference Example 14, the Pt-supporting Ce_{0.50}Zr_{0.45}Y_{0.05} oxide powder prepared in Reference Example 21, the Ca_{1.020}Ti_{0.985}Rh_{0.015}O_{3+δ} powder prepared in Reference Example 1, and a gamma-alumina powder were mixed and pulverized in a ball mill, and combined with distilled water to obtain a slurry. The slurry was applied to the surface of the inner layer on the monolithic carrier, and then dried to obtain an outer layer.

The outer layer was formed so that the monolithic carrier supports, per 1 liter thereof, 50 g of the Pt-Rh-supporting Zr_{0.80}Ce_{0.16}La_{0.04} oxide powder (amount of supported Pt: 0.25 g, amount of supported Rh: 0.25 g), 30 g of the Pt-supporting Ce_{0.50}Zr_{0.45}Y_{0.05} oxide powder (amount of supported Pt: 0.15 g), 9 g of the Ca_{1.020}Ti_{0.985}Rh_{0.015}O_{3+δ} powder (amount of supported Rh: 0.1 g), and 40 g of the gamma-alumina powder, respectively.

Next, the outer layer of the monolithic carrier was impregnated with an aqueous dinitrodiammine platinum nitrate solution and an aqueous rhodium nitrate solution, dried, and then subjected to a heat treatment (baking) in an electric furnace at 600°C for 3 hours to obtain a covering layer.

The covering layer was formed so that the monolithic carrier supports, per 1 liter thereof, 0.1 g of Pt and 0.05 g of Rh.

Thus, a catalyst composition comprising three layers of coatings was prepared. The amounts of supported Pt, Rh, and Pd of the catalyst composition as a whole are 0.5 g/L, 0.4 g/L, and 0.3 g/L, respectively.

### Example 8

The Rh-supporting Zr_{0.777}Ce_{0.160}La_{0.020}Nd_{0.040}Rh_{0.003} oxide powder prepared in Reference Example 8, the Ca_{1.00}Ti_{0.98}Rh_{0.02}O₃ powder prepared in Reference Example 2, the Pt-supporting Ce_{0.50}Zr_{0.45}Y_{0.05} oxide powder prepared in Reference Example 20, and a theta-alumina powder were mixed and pulverized in a ball mill, and combined with distilled water to obtain a slurry. The slurry was applied to the surface of a monolithic carrier, dried, and then baked at 600°C for 3 hour to obtain a coating layer.

The coating layer was formed so that the monolithic carrier supports, per 1 liter thereof, 20 g of the Rh-supporting Zr_{0.777}Ce_{0.160}Nd_{0.040}Rh_{0.003} oxide powder (amount of supported Rh: 0.1 g), 20 g of the Ca_{1.00}Ti_{0.98}Rh_{0.02}O₃ powder (amount of supported Rh: 0.3 g), 60 g of the Pt-supporting Ce_{0.5}Zr_{0.45}Y_{0.05} oxide powder (amount of supported Pt: 0.4 g), and 100 g of the theta-alumina powder, respectively.

### Example 9

The La_{1.02}Fe_{0.95}Pd_{0.05}O_{3+δ"} powder prepared in Reference Example 27 and a theta-alumina powder were mixed and pulverized in a ball mill, and combined with distilled water to obtain a slurry. The slurry was applied to inner surfaces of cells of a monolithic carrier, dried, and then baked at 600°C for 3 hours to obtain an inner layer.

The inner layer was formed so that the monolithic carrier supports, per 1 liter thereof, 15 g of the La_{1.02}Fe_{0.95}Pd_{0.05}O_{3+δ"} powder (amount of supported Pd: 0.3 g) and 90 g of the theta-alumina powder, respectively.

Next, the Pt-supporting Ce_{0.50}Zr_{0.45}Y_{0.05} oxide powder prepared in Reference Example 19 was mixed and pulverized in a ball mill, and combined with distilled water to obtain a slurry. The slurry was applied to the surface of the inner layer on the monolithic carrier, dried, and then baked at 600°C for 3 hours to obtain an intermediate layer.

The intermediate layer was formed so that the monolithic carrier supports, per 1 liter thereof, 60 g of the Pt-supporting Ce_{0.50}Zr_{0.45}Y_{0.05} oxide powder (amount of supported Pt : 0.6 g).

Next, the Rh-supporting Zr_{0.80}La_{0.05}Nd_{0.15} oxide powder prepared in Reference Example 6, the Ca_{1.020}Ti_{0.985}Rh_{0.015}O_{3+δ} powder prepared in Reference Example 1, and a theta-alumina powder were mixed and pulverized in a ball mill, and combined with distilled water to obtain a slurry. The slurry was applied to the surface of the intermediate layer on the monolithic carrier, dried, and then baked at 600°C for 3 hours to obtain an outer layer.

The outer layer was formed so that the monolithic carrier supports, per 1 liter thereof, 40 g of the Rh-supporting Zr_{0.80}La_{0.05}Nd_{0.15} oxide powder (amount of supported Rh: 0.2 g), 18 g of the Ca_{1.020}Ti_{0.985}Rh_{0.015}O_{3+δ} powder (amount of supported Rh: 0.2 g), and 60 g of the theta-alumina powder, respectively.

Thus, a catalyst composition comprising three layers of coatings was prepared. The amounts of supported Pt, Rh, and Pd of the catalyst composition as a whole are 0.6 g/L, 0.4 g/L, and 0.3 g/L, respectively.

### Comparative Example 1

The Pd-supporting gamma-alumina powder prepared in Reference Example 22 and the Ce_{0.50}Zr_{0.45}Y_{0.05} oxide powder prepared in Reference Example 16 were mixed and pulverized in a ball mill, and combined with distilled water to obtain a slurry. The slurry was applied to inner surfaces of cells of a monolithic carrier, dried, and then baked at 600°C for 3 hours to obtain an inner layer.

The inner layer was formed so that the monolithic carrier supports, per 1 liter thereof, 60 g of the Pd-supporting gamma-alumina powder (amount of supported Pd: 0.5 g) and 40 g of the Ce_{0.50}Zr_{0.45}Y_{0.05} oxide powder, respectively.

Next, the Pt-Rh-supporting Zr_{0.80}Ce_{0.16}La_{0.04} oxide powder prepared in Reference Example 15, the Pt-supporting Ce_{0.50}Zr_{0.45}Y_{0.05} oxide powder prepared in Reference Example 17, and a gamma-alumina powder were mixed and pulverized in a ball mill, and combined with distilled water to obtain a slurry. The slurry was applied to the surface of the inner layer on the monolithic carrier, dried, and then baked at 600°C for 3 hours to obtain an outer layer.

The outer layer was formed so that the monolithic carrier supports, per 1 liter thereof, 20 g of the Pt-Rh-supporting Zr_{0.80}Ce_{0.16}La_{0.04} oxide powder (amount of supported Pt: 0.6 g, amount of supported Rh: 0.6 g), 60 g of the Pt-supporting Ce_{0.50}Zr_{0.45}Y_{0.05} oxide powder (amount of supported Pt: 0.2 g), and 60 g of the gamma-alumina powder, respectively.

Thus, a catalyst composition comprising two layers of coatings was prepared. The amounts of supported Pt, Rh, and Pd of the catalyst composition as a whole are 0.8 g/L, 0.6 g/L, and 0.5 g/L, respectively.

### Comparative Example 2

The Pt-Rh-supporting theta-alumina powder prepared in Reference Example 26, the Pt-Rh-supporting Zr_{0.78}Ce_{0.16}La_{0.02}Nd_{0.04} oxide powder prepared in Reference Example 12, and the Pt-supporting Ce_{0.50}Zr_{0.45}Y_{0.05} oxide powder prepared in Reference Example 21 were mixed and pulverized in a ball mill, and combined with distilled water to obtain a slurry. The slurry was applied to inner surfaces of cells of a monolithic carrier, dried, and baked at 600°C for 3 hours to obtain a coating layer.

The coating layer was formed so that the monolithic carrier supports, per 1 liter thereof, 115 g of the Pt-Rh-supporting theta-alumina powder (amount of supported Pt: 0.4 g, amount of supported Rh: 0.1 g), 45 g of the Pt-Rh-supporting Zr_{0.78}Ce_{0.16}La_{0.02}Nd_{0.04} oxide powder (amount of supported Pt : 0.2 g, amount of supported Rh: 0.1 g), 80 g of the Pt-supporting Ce_{0.50}Zr_{0.45}Y_{0.05} oxide powder (amount of supported Pt: 0.4 g), respectively.

### Performance evaluation (Examples 1 to 9, Comparative Examples 1 and 2)

### (1) Endurance test

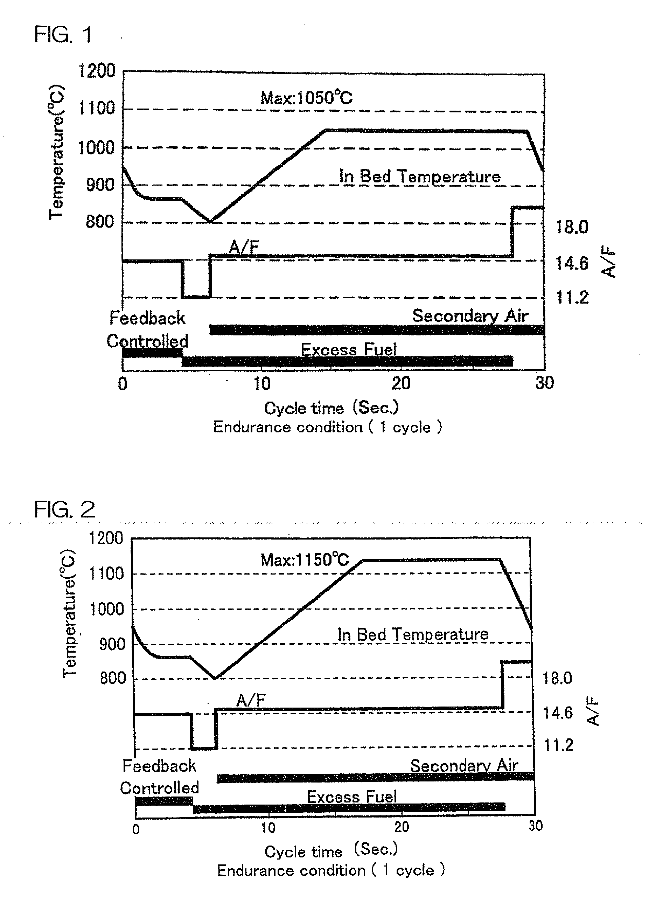

A V-type eight-cylinder gasoline engine of 4 L displacement was located on a work bench of a dynamometer and the monolithic catalysts of Examples 1 to 9 and Comparative Examples 1 and 2 were connected to each bank of the engine (4 cylinders). With a cycle shown in FIG. 1 as a single cycle (30 seconds), the cycle was repeated for 40 hours for an endurance test. The results are shown in Tables 1 and 2.

One cycle was set as shown in FIG. 1. That is, for 0-5 seconds, a mixed gas of gasoline and air which was kept in the stoichiometric state of an amount of theoretical combustion air (A/F = 14.6) under feedback control was fed to the engine and an internal temperature of the exhaust gas purifying catalysts (catalyst bed) was set to be around 850°C. For 5-7 seconds, the feedback was allowed to open and a fuel was injected excessively, so that a fuel-rich mixed gas. (A/F, = 11.2) was fed to the engine. For 7-28 seconds, while an excessive amount of fuel was kept on being fed to the engine with the feedback open, secondary air was introduced from the outside of the engine through an inlet tube upstream of the catalytic parts, to cause the excessive fuel to react with the secondary air in the interior of the catalyst bed, so as to raise the temperature of catalyst bed. In this time period, the highest temperature was 1050°C and the A/F was substantially kept at the amount of theoretical combustion air of 14.8. For the last time period of 28-30 seconds, no fuel was fed but the secondary air was fed to the engine to put the engine into a lean state. The fuel was fed in the condition in which phosphorus compound was added to the gasoline. A total amount of the phosphorus compound was set at 0.41 g in the endurance test in terms of elements of phosphorous. The temperature of the catalyst bed was measured by a thermocouple inserted into a center part of a honeycomb carrier.

### (2) Measurement of CO-NOx cross-point purifying rate

The monolithic catalysts of Examples 10 to 19 and Comparative Examples 3 and 4 were connected to an in-line four-cylinder gasoline engine of 1.5 L displacement. Mixed gas was fed to the engine, while it was varied from its fuel-rich state to its lean state. The exhaust gas produced by the combustion in the engine was fed to the exhaust gas purifying catalysts after the endurance test. Then, rates of purifying CO and NOx in the exhaust gas by the exhaust gas purifying catalysts were measured, respectively. A purifying rate obtained when the purifying rates of CO and NOx were conformed with each other was defined as a CO-NOx cross-point purifying rate. The results are shown in Tables 1 and 2. It is to be noted that the measurement of the purifying rates was performed in the condition of the engine only, rather than in the condition in which the engine was mounted on the automobile. The temperature of the exhaust gas fed to the exhaust gas purifying catalysts was set at 460°C and space velocity SV was set at 90000/h.

### (3) Measurement of HC purifying temperature

A hydrocarbon (HC) purifying rates of the monolithic catalysts after the endurance test (1) were determined using an in-line four-cylinder gasoline engine of 1.5 L displacement by applying an amplitude of Δλ = ±3.4% (ΔA/F = ±0.5A/F) at a frequency of 1 Hz with the theoretical air-fuel ratio (λ = 1) as a center. A space velocity SV was set at 90000/h.

In the measurement, the mixed gas in the stoichiometric state (A/F = 14.6±0.2) was fed to the engine, the exhaust gas exhausted by the combustion of the mixed gas was fed to the respective catalysts while raising the temperature of the exhaust gas at a rate of 30°C/minute, and the temperature at which 50% of hydrocarbons (HC) in the exhaust gas was purified was measured as a purifying temperature (°C).

The results are shown in Tables 1 and 2.

**Table 1**

| No . | Layer | Composition | Amount to be supported (g/L) Pt/Rh/Pd | CO-Nox Purifying rate | HC50% Purifying temperature |
|---|---|---|---|---|---|
| Example 1 | Inner | Pd/gaMMa-Al₂O₃ + Pt/Ce_{0.50}Zr_{0.45}Y_{0.50}Oxide | 0.45/0.4/0.5 | 88.9% | 383°C |
| | Outer | Pt-Rh/Zr_{0.78}Ce_{0.16}La_{0.02}Nd_{0.04}Oxide + Ca_{1.020}Ti_{0.985}Rh_{0.015}O_{3+δ} | | | |
| Example 2 | Inner | La_{1.00}Fe_{0.95}Pd_{0.05}O₃ + theta-Al₂O₃ | 0.45/0.35/0.3 | 90.2% | 349°C |
| | Outer | Pt-Rh/theta-Al₂O₃ + Pt/Ce_{0.50}Zr_{0.45}Y_{0.05}Oxide + Ca_{1.00}Ti_{0.98}Rh_{0.02}O₃ | | | |
| Example 3 | Inner | La_{1.00}Fe_{0.95}Pd_{0.05}O₃ + theta-Al₂O₃ + Pt/Ce_{0.50}Zr_{0.05}Y_{0.05} Oxide + BaSO₄ | 0.5/0.35/03 | 90.4% | 335°C |
| | Outer | Pt-Rh/Zr_{0.78}Ce_{0.16}La_{0.04}Nd_{0.04}Oxide + Ca_{1.020}Ti_{0.985}Rh_{0.015}O₃₊₈ + Ba_{1.000}Ti_{0.975}Rh_{0.025}O₃ | | | |
| Example 4 | Inner | La_{1.00}Fe_{0.95}Pd_{0.05}O₃ + theta-Al₂O₃ | 0.4/0.35/0.3 | 93.5% | 340°C |
| | Outer | Rh/Zr_{0.80}La_{0.05}Nd_{0.15}Oxide + Pt/Ce_{0.50}Zr_{0.45}Y_{0.05}Oxide + theta-Al₂O₃ | | | |
| Example 5 | Inner | La_{1.02}Fe_{0.95}Pd_{0.05}O_{3+δ"} + Pt/Ce_{0.50}Zr_{0.45}Y_{0.05}Oxide + theta-Al₂O₃ | 0.4/0.3/0.3 | 98.0% | 295°C |
| | Outer | Rh/Zr_{0.777}Ce_{0.160}La_{0.020}Nd_{0.040}Rh_{0.003}Oxide+ Pt/Ce_{0.50}Zr_{0.45}Y_{0.05}Oxide + Ca_{1.020}Ti_{0.985}Rh_{0.015}O_{3+δ} + Pt-Rh/theta-Al₂O₃ | | | |
| Example 6 | Inner | La_{1.00}Fe_{0.95}Pd_{0.05}O₃ + Pt/Ce_{0.50}Zr_{0.45}Y_{0.05}Oxide + BaSO₄ + theta-Al₂O₃ | 0.35/0.3/0.3 | 95.3% | 321°C |
| | Outer | Zr_{0.776}Ce_{0.159}La_{0.020}Nd_{0.040}Rh_{0.005}Oxide + Pt/Ce_{0.50}Zr_{0.45}Y_{0.05} Oxide + Ca_{1.020}Ti_{0.985}Rh_{0.015}O_{3+δ} + Pt-Ph/gama-Al₂O₃ | | | |
| Example 7 | Inner | La_{1.00}Fe_{0.95}Pd_{0.05}O₃ + theta-Al₂O₃ + BaSO₄ | + 0.5/0.4/0.3 | 98.2% | 289°C |
| | Outer | Pt-Rh/Zr_{0.80}Ce_{0.16}La_{0.04}Oxide + Pt/Ce_{0.50}Zr_{0.45}Y_{0.05}Oxide Ca_{1.020}Ti_{0.985}Rh_{0.015}O_{3+δ} + gamma-Al₂O₃/impregnated with Pt-Rh (covering layer) | | | |

**Table 2**

| No. | Layer | Composition | Amount to be supported (g/L) Pt/Rh/Pd | CO-Nox Purifying rate | HC50% Purifying temperature |
|---|---|---|---|---|---|
| Example 8 | Single layer | Rh/Zr_{0.777}Ce_{0.160}La_{0.020}Nd_{0.040}Rh_{0.003}Oxide + Ca_{1.00}Ti_{0.98}Rh_{0.02}O₃ + Pt/Ce_{0.50}Zr_{0.45}Y_{0.05}Oxide + theta-Al₂O₃ | 0.4/0.4/- | 86.2% | 395°C |
| Example 9 | Inner | La_{1.02}Fe_{0.95}Pd_{0.05}O_{3+δ}'' + theta-Al₂O₃ | 0.6/0.4/0.3 | 98.4% | 292°C |
| | Intermediate | Pt/Ce_{0.50}Zr_{0.45}Y_{0.05}Oxide | | | |
| | Outer | Rh/Zr_{0.80}La_{0.05}Nd_{0.15}Oxide + Ca_{1.020}Ti_{0.985}Rh_{0.015}O_{3+δ} + theta-A₂O₃ | | | |
| Comparative Example 1 | Inner | Pd/gamma-Al₂O₃ + Ce_{0.50}Zr_{0.45}Y_{0.05}Oxide | 0.8/0.6/0.5 | 82.1% | 446°C |
| | Outer | Pt-Rh/Zr_{0.80}Ce_{0.16}La_{0.04}Oxide + Pt/Ce_{0.50}Zr_{0.45}Y_{0.05} oxide + gamma-Al₂O₃ | | | |
| Comparative Example 2 | Single layer | Pt-Rh/thete-Al₂O₃ + Pt-Rh/Zr_{0.78}Ce_{0.16}La_{0.02}Nd_{0.04} Oxide + Pt/Ce_{0.50}Zr_{0.45}Y_{0.05} Oxide | 1.0/0.2/- | 79.0% | 408°C |

As shown in Table 1 and Table 2, according to the catalyst compositions of Examples 1 to 9, an excellent catalytic activity can be attained at a comparatively low temperature even after subjecting to the endurance test.

### Reference Example 28

### (Production of Ca_{0.01}Ti_{0.99}Pt_{0.01}O_{3+δ'} powder)

A mixed alkoxide solution was prepared by charging 0.101 mol, in terms of Ca, of calcium isopropoxide and 0.099 mol, in terms of Ti, of titanium isopropoxide in a 500 mL round-bottomed flask, and dissolving them in 200 mL of toluene with stirring. The mixed alkoxide solution was hydrolyzed by adding dropwise 200 mL of deionized water to obtain a white viscous precipitate. Toluene was distilled off from the mixed alkoxide solution to obtain an slurry, and the slurry was combined with 0.001 mol, in terms of Pt, of an aqueous dinitrodiammine platinum nitrate solution and stirred at room temperature for 1 hour.

Next, the resulting mixture was evaporated to dryness by distilling off water under reduced pressure to obtain a precursor. The precursor was further subjected to a heat treatment (baking) in an electric furnace at 950°C in the air for 2 hours to obtain a brown powder of Rh-containing perovskite-type composite oxide having the composition of Ca_{1.01}Ti_{0.99}Pt_{0.01}O_{3+δ'}. The composite oxide has a Pt content of 1.42% by weight.

### Reference Example 29

### (Production of Ca_{1.010}Zr_{0.985}Pt_{0.015}O_{3+δ'} powder)

An aqueous slurry was prepared by the same procedure of Reference Example 28, except for charging 0.101 mol, in terms of Ca, of calcium isopropoxide and 0.0985 mol, in terms of Zr, of zirconium isopropoxide in a 500 mL round-bottomed flask. The aqueous slurry was combined with 0.0015 mol, in terms of Pt, of an aqueous dinitrodiammine platinum nitrate solution and stirred at room temperature for 1 hour.

Next, the resulting mixture was evaporated to dryness by distilling off water under reduced pressure to obtain a precursor. The precursor was subjected to a heat treatment (baking) in an electric furnace at 800°C in the air for 1 hour to obtain a brown powder of Pt-containing perovskite-type composite oxide having the composition of Ca_{1.010}Zr_{0.985}Pt_{0.015}O_{3+δ'}. The composite oxide has a Pt content of 1.61% by weight.

### Reference Example 30

### (Production of Ca_{1.00}Ti_{0.98}Pt_{0.02}O₃ powder)

An aqueous slurry was prepared by the same procedure of Reference Example 28, except for charging 0.100 mol, in terms of Ca, of calcium isopropoxide and 0.098 mol, in terms of Ti, of titanium isopropoxide in a 500 mL round-bottomed flask. The aqueous slurry was combined with 0.002 mol, in terms of Pt, of an aqueous dinitrodiammine platinum nitrate solution and stirred at room temperature for 1 hour.

Next, the resulting mixture was evaporated to dryness by distilling off water under reduced pressure to obtain a precursor. The precursor was subjected to a heat treatment (baking) in an electric furnace at 800°C in the air for 1 hour to obtain a brown powder of Pt-containing perovskite-type composite oxide having the composition of Ca_{1.00}Ti_{0.98}Pt_{0.02}O₃. The composite oxide has a Pt content of 2.81% by weight.

### Reference Example 31

### (Production of Ba_{1.00}Ce_{0.98}Pt_{0.02}O₃ powder)

An aqueous slurry was prepared by the same procedure of Reference Example 28, except for charging 0.100 mol, in terms of Ba, of barium isopropoxide and 0.098 mol, in terms of Ce, of cerium isopropoxide in a 500 mL round-bottomed flask. The aqueous slurry was combined with 0.002 mol, in terms of Pt, of an aqueous dinitrodiammine platinum nitrate solution and stirred at room temperature for 1 hour.

Next, the resulting mixture was evaporated to dryness by distilling off water under reduced pressure to obtain a precursor. The precursor was subjected to a heat treatment (baking) in an electric furnace at 800°C in the air for 1 hour to obtain a brown powder of Pt-containing perovskite-type composite oxide having the composition of Ba_{1.00}Ce_{0.98}Pt_{0.02}O₃. The composite oxide has a Pt content of 1.19% by weight.

### Reference Example 32

### (Production of Ca_{0.98}Ti_{0.98}Pt_{0.02}O_{3-δ}' powder)

An aqueous slurry was prepared by the same procedure of Reference Example 28, except for charging 0.098 mol, in terms of Ca, of calcium isopropoxide and 0.098 mol, in terms of Ti, of titanium isopropoxide in a 500 mL round-bottomed flask. The aqueous slurry was combined with 0.002 mol, in terms of Pt, of an aqueous dinitrodiammine platinum nitrate solution and stirred at room temperature for 1 hour.

Next, the resulting mixture was evaporated to dryness by distilling off water under reduced pressure to obtain a precursor. The precursor was subjected to a heat treatment (baking) in an electric furnace at 800°C in the air for 1 hour to obtain a brown powder of Pt-containing perovskite-type composite oxide having the composition of Ca_{0.98}Ti_{0.98}Pt_{0.02}O_{3-δ'}. The composite oxide has a Pt content of 2.83% by weight.

### Reference Example 33

### (Production of Pt-Rh/Zr_{0.78}Ce_{0.16}La_{0.02}Nd_{0.04} oxide powder)

A Pt-Rh-supporting Zr_{0.78}Ce_{0.16}La_{0.02}Nd_{0.04} oxide powder was prepared by the same procedure of Reference Example 10, except for changing the amounts of the aqueous dinitrodiammine platinum nitrate solution and aqueous rhodium nitrate solution to be impregnated.

The powder supports 0.4 g of Pt and 0.4 g of Rh per 45 g of the powder.

### Reference Example 34

### (Production of Ce_{0.60}Zr_{0.30}Y_{0.10} oxide powder)

A mixed alkoxide solution was prepared by combining and dissolving with stirring 0.12 mol, in terms of Ce, of cerium methoxypropylate, 0.06 mol, in terms of Zr, of zirconium methoxypropylate, and 0.02 mol, in terms of Y, of yttrium methoxypropylate in 200 mL of toluene. The mixed alkoxide solution was hydrolyzed by adding dropwise 80 mL of deionized water.

Next, the hydrolyzed solution was evaporated to dryness by distilling off toluene and deionized water to obtain a precursor. The precursor was subjected to forced-air drying at 60°C for 24 hours, then to a heat treatment (baking) in an electric furnace at 450°C for 3 hours to obtain a thermostable oxide powder represented by Ce_{0.60}Zr_{0.30}Y_{0.10} oxide.

### Reference Example 35

### (Production of Pt/Ce_{0.50}Zr_{0.45}Y_{0.05} oxide powder)

A Pt-supporting Ce_{0.50}Zr_{0.45}Y_{0.05} oxide powder was prepared by the same procedure of Reference Example 17, except for changing the amount of the aqueous dinitrodiammine platinum nitrate solution to be impregnated.

The powder supports 0.05 g of Pt per 30 g of the powder.

### Reference Example 36

### (Production of Pt-Rh/θ-Al₂O₃ powder)

A Pt-Rh-supporting theta-alumina powder was prepared by impregnating theta-alumina with an aqueous dinitrodiammine platinum nitrate solution and an aqueous rhodium nitrate solution, drying and heating (baking) it in an electric furnace at 600°C for 3 hours.

The powder supports 0.1 g of Pt and 0.1 g of Rh per 90 g of the powder.

### Reference Example 37

### (Production of Pt-Rh/θ-Al₂O₃ powder)

A Pt-Rh-supporting theta-alumina powder was prepared by the same procedure of Reference Example 35, except for changing the amounts of the aqueous dinitrodiammine platinum nitrate solution and the aqueous rhodium nitrate solution to be impregnated.

The powder supports 0.4 g of Pt and 0.1 g of Rh per 115 g of the powder.

### ] Reference Example 38

### (Production of Ca_{0.980}Ti_{0.985}Rh_{0.015}O_{3-δ}, powder)

An aqueous slurry was prepared by the same procedure of Reference Example 1, except for charging 0.098 mol, in terms of Ca, of calcium isopropoxide and 0.0985 mol, in terms of Ti, of titanium isopropoxide in a 500 mL round-bottomed flask. The aqueous slurry was combined with 0.0015 mol, in terms of Rh, of an aqueous rhodium nitrate solution and stirred at room temperature for 1, hour.

Next, the resulting mixture was evaporated to dryness by distilling off water under reduced pressure to obtain a precursor. The precursor was subjected to a heat treatment (baking) in an electric furnace at 800°C in the air for 1 hour to obtain a brown powder of Rh-containing perovskite-type composite oxide having the composition of Ca_{0.980}Ti_{0.985}Rh_{0.015}O_{3-δ}'. The composite oxide has an Rh content of 1.14% by weight.

### Reference Example 39

### (Production of Ba/Pt/Ce_{0.50}Zr_{0.45}Y_{0.05} oxide powder)

A Pt-supporting Ce_{0.50}Zr_{0.45}Y_{0.05} oxide powder was prepared by impregnating the Ce_{0.50}Zr_{0.45}Y_{0.05} oxide powder prepared in Reference Example 16 with an aqueous dinitrodiammine platinum nitrate solution, drying and heating (baking) it in an electric furnace at 600°C for 3 hours.

Next, the resulting Pt-supporting Ce_{0.50}Zr_{0.45}Y_{0.05} oxide was impregnated with an aqueous barium acetate solution, dried, heated (baked) in an electric furnace at 600°C for 3 hours to obtain a Ba/Pt-supporting Ce_{0.50}Zr_{0.45}Y_{0.05} oxide powder.

The powder supports 0.1 g of Pt per 10 g of the powder.

### Reference Example 40

### (Production of Ba_{1.01}Ce_{0.34}Zr_{0.50}Y_{0.10}Pt_{0.060}O_{3+δ'} powder)

A mixed alkoxide solution was prepared by charging 0.101 mol, in terms of Ba, of barium methoxypropylate, 0.034 mol, in terms of Ce, of cerium methoxypropylate, 0.050 mol, in terms of Zr, of zirconium methoxypropylate and 0.010 mol, in terms of Y, of yttrium methoxypropylate in a 500 mL round-bottomed flask and dissolving them in 250 mL of toluene with stirring. In 100 mL of toluene, 0.006 mol, in terms of Pt, of platinum acetylacetonate was dissolved, and the resulting solution was added to the mixed alkoxide solution in the round-bottomed flask to obtain a homogeneous mixed solution containing Ba, Ce, Zr, Y and Pt.

The mixed solution in the round-bottomed flask was hydrolyzed by adding dropwise 120 mL of deionized water.

Next, toluene and deionized water were distilled off from the hydrolyzed solution and then the solution was evaporated to dryness to obtain a precursor. The precursor was dried under air flow at 60°C for 24 hours, and subjected to a heat treatment (baking) in an electric furnace at 850°C in the air for 4 hours to obtain a powder of Pt-containing perovskite-type composite oxide having the composition of Ba_{1.01}Ce_{0.34}Zr_{0.50}Y_{0.10}Pt_{0.06}O_{3+δ'}. The composite oxide has a Pt content of 3.90% by weight.

### Reference Example 41

### (Production of Ca_{1.00}Zr_{0.96}Pt_{0.04}O₃ powder)

An aqueous slurry was prepared by the same procedure of Reference Example 28, except for charging 0.100 mol, in terms of Ca, of calcium isopropoxide and 0.096 mol, in terms of Zr, of zirconium isopropoxide in a 500 mL round-bottomed flask. The aqueous slurry was combined with 0.004 mol, in terms of Pt, of an aqueous dinitrodiammine platinum nitrate solution and stirred at room temperature for 1 hour.

Next, the resulting mixture was evaporated to dryness by distilling off water under reduced pressure to obtain a precursor. The precursor was subjected to a heat treatment (baking) in an electric furnace at 800°C in the air for 1 hour to obtain a brown powder of Pt-containing perovskite-type composite oxide having the composition of Ca_{1.00}Zr_{0.96}Pt_{0.04}O₃. The composite oxide has a Pt content of 4.25% by weight.

### Reference Example 42

### (Production of Ca_{1.00}Ti_{0.97}Pt_{0.03}O₃ powder)

An aqueous slurry was prepared by the same procedure of Reference Example 28, except for charging 0.100 mol, in terms of Ca, of calcium isopropoxide and 0.097 mol, in terms of Ti, of titanium isopropoxide in a 500 mL round-bottomed flask. The aqueous slurry was combined with 0.003 mol, in terms of Pt, of an aqueous dinitrodiammine platinum nitrate solution and stirred at room temperature for 1 hour.

Next, the resulting mixture was evaporated to dryness by distilling off water under reduced pressure to obtain a precursor. The precursor was subjected to a heat treatment (baking) in an electric furnace at 800°C in the air for 1 hour to obtain a brown powder of Pt-containing perovskite-type composite oxide having the composition of Ca_{1.00}Ti_{0.97}Pt_{0.03}O₃. The composite oxide has a Pt content of 4.17% by weight.

### Example 10

The Pd-supporting gamma-alumina powder prepared in Reference Example 22 and the Pt-supporting Ce_{0.50}Zr_{0.45}Y_{0.05} oxide powder prepared in Reference Example 17 were mixed and pulverized in a ball mill, and combined with distilled water to obtain a slurry. The slurry was applied to an inner surface of each cell of a monolithic carrier, dried, and baked at 600°C for 3 hours to obtain an inner layer.

The inner layer was formed so that the monolithic carrier supports, per 1 liter thereof, 60 g of the Pd-supporting gamma-alumina powder (amount of supported Pd: 0.5 g) and 90 g of the Pt-supporting Ce_{0.50}Zr_{0.45}Y_{0.05} oxide powder (amount of supported Pt: 0.3 g), respectively.

Next, the Pt-Rh-supporting Zr_{0.78}Ce_{0.16}La_{0.02}Nd_{0.04} oxide powder prepared in Reference Example 10 and the Ca_{1.01}Ti_{0.99}Pt_{0.01}O_{3+δ'} powder prepared in Reference Example 28 were mixed and pulverized in a ball mill, and combined with distilled water to obtain a slurry. The slurry was applied to the surface of the inner layer on the monolithic carrier, dried, and baked at 600°C for 3 hours to obtain an outer layer.

The outer layer was formed so that the monolithic carrier supports, per 1 liter thereof, 60 g of the Pt-Rh-supporting Zr_{0.78}Ce_{0.16}La_{0.02}Nd_{0.04} oxide powder (amount of supported Pt: 0.15 g, amount of supported Rh: 0.3 g) and 4 g of the Ca_{1.01}Ti_{0.99}Pt_{0.01}O_{3+δ'} powder (amount of supported Pt: 0.05 g), respectively.

Thus, a catalyst composition comprising two layers of coatings was prepared. Amounts of the supported Pt, Rh, and Pd of the catalyst composition as a whole are 0.5 g/L, 0.3 g/L, and 0.5 g/L, respectively.

### Example 11

The La_{1.00}Fe_{0.95}Pd_{0.05}O₃ powder prepared in Reference Example 5 and a theta-alumina powder were mixed and pulverized in a ball mill, and combined with distilled water to obtain a slurry. The slurry was applied to an inner surface of each cell of a monolithic carrier, dried, and baked at 600°C for 3 hours to obtain an inner layer.

The inner layer was formed so that the monolithic carrier supports, per 1 liter thereof, 15 g of the La_{1.00}Fe_{0.95}Pd_{0.05}O₃ powder (amount of supported Pd: 0.3 g) and 100 g of the theta-alumina powder, respectively.

Next, the Pt-Rh-supporting theta-alumina powder prepared in Reference Example 23, the Pt-supporting Ce_{0.50}Zr_{0.45}Y_{0.05} oxide powder prepared in Reference Example 18, and the Ca_{1.010}ZR_{0.985}Pt_{0.015}O_{3+δ'} powder prepared in Reference Example 29 were mixed and pulverized in a ball mill, and combined with distilled water to obtain a slurry. The slurry was applied to the surface of the inner layer of the monolithic carrier, dried, and baked at 600°C for 3 hours to obtain an outer layer.

The outer layer was formed so that the monolithic carrier supports, per 1 liter thereof, 60 g of the Pt-Rh-supporting theta-alumina powder (amount of supported Pt: 0.3 g, amount of supported Rh: 0.2 g), 40 g of the Pt-supporting Ce_{0.50}Zr_{0.45}Y_{0.05} oxide powder (amount of supported Pt: 0.15 g), and 3 g of the Ca_{1.010}Zr_{0.985}Pt_{0.015}O_{3+δ'} powder (amount of supported Rh: 0.05 g), respectively.

Thus, a catalyst composition comprising two layers of coatings was prepared. Amounts of supported Pt, Rh, and Pd of the catalyst composition as a whole are 0.5 g/L, 0.2 g/L, and 0.3 g/L, respectively.

### Example 12

The La_{1.00}Fe_{0.95}Pd_{0.05}O₃ powder prepared in Reference Example 5, a theta-alumina powder, the Pt-supporting Ce_{0.50}Zr_{0.45}Y_{0.05} oxide powder prepared in Reference Example 19, and a barium sulfate powder were mixed and pulverized in a ball mill, and combined with distilled water to obtain a slurry. The slurry was applied to an inner surface of each cell of a monolithic carrier, dried, and baked at 600°C for 3 hours to obtain an inner layer.

The inner layer was formed so that the monolithic carrier supports, per 1 liter thereof, 15 g of the La_{1.00}Fe_{0.95}Pd_{0.05}O₃ powder (amount of supported Pd: 0.3 g), 60 g of the theta-alumina powder, 30 g of the Pt-supporting Ce_{0.50}Zr_{0.45}Y_{0.005} oxide powder (amount of supported Pt: 0.3 g), and 30 g of the barium sulfate powder, respectively.

Next, the Pt-Rh-supporting Zr_{0.78}Ce_{0.16}La_{0.02}Nd_{0.04} oxide powder prepared in Reference Example 11, the Ca_{1.020}Ti_{0.985}Rh_{0.015}O_{3+δ}, powder prepared in Reference Example 1, the Ca_{1.01}Ti_{0.99}Pt_{0.01}O_{3+δ}, powder prepared in Reference Example 28 and a theta-alumina powder were mixed and pulverized in a ball mill, and combined with distilled water to obtain a slurry. The slurry was applied to the surface of the inner layer of the monolithic carrier, dried, and baked at 600°C for 3 hours to obtain an outer layer.

The outer layer was formed so that the monolithic carrier supports, per 1 liter thereof, 60 g of the Pt-Rh-supporting Zr_{0.78}Ce_{0.16}La_{0.02}Nd_{0.04} oxide powder (amount of supported Pt: 0.2 g, amount of supported Rh: 0.2 g), 9 g of the Ca_{1.020}Ti_{0.985}Rh_{0.015}O_{3+δ'} powder (amount of supported Pt : 0.1 g), 7 g of the Ca_{1.01}Ti_{0.99}Pt_{0.01}O_{3+δ'} powder (amount of supported Rh: 0.1 g) and 60 g of the theta-alumina powder, respectively.

Thus, a catalyst composition comprising two layers of coatings was prepared. Amounts of the supported Pt, Rh, and Pd of the catalyst composition as a whole are 0.6 g/L, 0.3 g/L, and 0.3 g/L, respectively.

### Example 13

The La_{1.00}Fe_{0.95}Pd_{0.05}O₃ powder prepared in Reference Example 5, a theta-alumina powder and the Ca_{1.00}Ti_{0.98}Pt_{0.02}O₃ powder prepared in Reference Example 30 were mixed and pulverized in a ball mill, and combined with distilled water to obtain a slurry. The slurry was applied to an inner surface of each cell of a monolithic carrier, dried, and baked at 600°C for 3 hours to obtain an inner layer.

The inner layer was formed so that the monolithic carrier supports, per 1 liter thereof, 15 g of the La_{1.00}Fe_{0.95}Pd_{0.05}O₃ powder (amount of supported Pd: 0.3 g), 60 g of the theta-alumina powder and 4 g of the Ca_{1.00}Ti_{0.98}Pt_{0.02}O₃ powder (amount of supported Pt: 0.1 g), respectively.

Next, the Rh-supporting Zr_{0.80}La_{0.05}Nd_{0.15} oxide powder prepared in Reference Example 6, the Pt-supporting Ce_{0.50}Zr_{0.45}Y_{0.05} oxide powder prepared in Reference Example 20, the Sr_{1.00}Ti_{0.97}Rh_{0.03}O₃ powder prepared in Reference Example 3 and a theta-alumina powder were mixed and pulverized in a ball mill, and combined with distilled water to obtain a slurry. The slurry was applied to the surface of the inner layer on the monolithic carrier, dried, and baked at 600°C for 3 hours to obtain an outer layer.

The outer layer was formed so that the monolithic carrier supports, per 1 liter thereof, 40 g of the Rh-supporting Zr_{0.80}La_{0.05}Nd_{0.15} oxide powder (amount of supported Rh: 0.2 g), 60 g of the Pt-supporting Ce_{0.50}Zr_{0.45}Y_{0.05} oxide powder (amount of supported Pt: 0.4 g), 6 g of the Sr_{1.00}Ti_{0.97}Rh_{0.03}O₃ powder (amount of supported Rh: 0.1 g) and 50 g of the theta-alumina powder, respectively.

Thus, a catalyst composition comprising two layers of coatings was prepared. The amounts of supported Pt, Rh, and Pd of the catalyst composition as a whole are 0.5 g/L, 0.3 g/L, and 0.3 g/L, respectively.

### Example 14

The La_{1.02}Fe_{0.95}Pd_{0.05}O_{3+δ"} powder prepared in Reference Example 27, the Pt-supporting Ce_{0.50}Zr_{0.45}Y_{0.05} oxide powder prepared in Reference Example 35, and a theta-alumina powder were mixed and pulverized in a ball mill, and combined with distilled water to obtain a slurry. The slurry was applied to an inner surface of each cell of a monolithic carrier, dried, and baked at 600°C for 3 hours to obtain an inner layer.

The inner layer was formed so that the monolithic carrier supports, per 1 liter thereof, 15 g of the La_{1.02}Fe_{0.95}Pd_{0.05}O_{3+δ}^{,,} powder (amount of supported Pd: 0.3 g), 30 g of the Pt-supporting Ce_{0.50}Zr_{0.45}Y_{0.05} oxide powder (amount of supported Pt: 0.05 g) and 90 g of the theta-alumina powder, respectively.

Next, the Rh-supporting Zr_{0.777}Ce_{0.160}La_{0.020}Nd_{0.040}Rh_{0.003} oxide powder prepared in Reference Example 8, the Pt-supporting Ce_{0.50}Zr_{0.45}Y_{0.05} oxide powder prepared in Reference Example 35, the Ca_{1.020}Ti_{0.985}Rh_{0.015}O_{3+δ} powder prepared in Reference Example 1, the Pt-Rh-supporting theta-alumina powder prepared in Reference Example 36, and the Ca_{1.010}Zr_{0.985}Pt_{0.015}0_{3+δ}, powder prepared in Reference Example 29 were mixed and pulverized in a ball mill, and combined with distilled water to obtain a slurry. The slurry was applied to the surface of the inner layer of the monolithic carrier, dried, and baked at 600°C for 3 hours to obtain an outer layer.

The outer layer was formed so that the monolithic carrier supports, per 1 liter thereof, 20 g of Rh-supporting Zr_{0.777}Ce_{0.160}La_{0.020}Nd_{0.040}Rh_{0.003} oxide powder (amount of supported Rh: 0.1 g), 30 g of the Pt-supporting Ce_{0.50}Zr_{0.45}Y_{0.05} oxide powder (amount of supported Pt: 0.05 g), 9 g of the Ca_{1.020}Ti_{0.985}Rh_{0.015}O_{3+δ} powder (amount of supported Rh: 0.1 g), 90 g of the Pt-Rh-supporting theta-alumina powder (amount of supported Pt: 0.1 g, amount of supported Rh: 0.1 g) and 6 g of the Ca_{1.010}Zr_{0.985}Pt_{0.015}O_{3+δ'} powder (amount of supported Pt: 0.1 g), respectively.

Thus, a catalyst composition comprising two layers of coatings was prepared. Amounts of the supported Pt, Rh, and Pd of the catalyst composition as a whole are 0.3 g/L, 0.3 g/L, and 0.3 g/L, respectively.

### Example 15

The La_{1.00}Fe_{0.95}Pd_{0.05}O₃ powder prepared in Reference Example 5, the Ba_{1.00}Ce_{0.98}Pt_{0.02}O₃ powder prepared in Reference Example 31, the Pt-supporting Ce_{0.50}Zr_{0.45}Y_{0.05} oxide powder prepared in Reference Example 17, a barium sulfate powder and a theta-alumina powder were mixed and pulverized in a ball mill, and combined with distilled water to obtain a slurry. The slurry was applied to an inner surface of each cell of a monolithic carrier, dried, and baked at 600°C for 3 hours to obtain an inner layer.

The inner layer was formed so that the monolithic carrier supports, per 1 liter thereof, 15 g of the La_{1.00}Fe_{0.95}Pd_{0.05}O₃ powder (amount of supported Pd: 0.3 g), 4 g of the Ba_{1.00}Ce_{0.98}Pt_{0.02}O₃ powder (amount of supported Pt: 0.05 g), 30 g of the Pt-supporting Ce_{0.50}Zr_{0.45}Y_{0.05} oxide powder (amount of supported Pt: 0.1 g), 20 g of the barium sulfate powder, and 90 g of the theta-alumina powder, respectively.

Next, the Zr_{0.776}Ce_{0.159}La_{0.020}Nd_{0.040}Rh_{0.005} oxide powder prepared in Reference Example 9, the Pt-supporting Ce_{0.50}Zr_{0.45}Y_{0.05} oxide powder prepared in Reference Example 17, the Ca_{1.020}Ti_{0.985}Rh_{0.015}O_{3+δ} powder prepared in Reference Example 1, the Pt-Rh-supporting gamma-alumina powder prepared in Reference Example 25, and the Ba_{1.00}Ce_{0.98}Pt_{0.02}O₃ powder prepared in Reference Example 31 were mixed and pulverized in a ball mill, and combined with distilled water to obtain a slurry. The slurry was applied to the surface of the inner layer on the monolithic carrier, dried, and baked at 600°C for 3 hours to obtain an outer layer.

The outer layer was formed so that the monolithic carrier supports, per 1 liter thereof, 40 g of the Zr_{0.776}Ce_{0.159}La_{0.02}Nd_{0.040}Rh_{0.005} oxide powder (amount of supported Rh: 0.15 g), 30 g of the Pt-supporting Ce_{0.50}Zr_{0.45}Y_{0.05} oxide powder (amount of supported Pt : 0.1 g), 4 g of the Ca_{1.020}Ti_{0.985}Rh_{0.015}O_{3+δ} powder (amount of supported Rh: 0.05 g), 50 g of the Pt-Rh-supporting gamma-alumina, powder (amount of supported Pt: 0.15 g, amount of supported Rh: 0.1 g), and 20 g of the Ba_{1.00}Ce_{0.98}Pt_{0.02}O₃ powder (amount of supported Pt: 0.05 g), respectively.

Thus, a catalyst composition comprising two layers of coatings was prepared. Amounts of the supported Pt, Rh, and Pd of the catalyst composition as a whole are 0.45 g/L, 0.3 g/L, and 0.3 g/L, respectively.

### Example 16

The La_{1.00}Fe_{0.95}Pd_{0.05}O₃ powder prepared in Reference Example 5, a theta-alumina powder, and a barium sulfate powder were mixed and pulverized in a ball mill, and combined with distilled water to obtain a slurry. The slurry was applied to an inner surface of each cell of a monolithic carrier, dried, and baked at 600°C for 3 hours to obtain an inner layer.

The inner layer was formed so that the monolithic carrier supports, per 1 liter thereof, 15 g of the La_{1.00}Fe_{0.95}Pd_{0.05}O₃ powder (amount of supported Pd: 0.3 g), 80 g of the theta-alumina powder, and 20 g of the barium sulfate powder, respectively.

Next, the Pt-Rh-supporting Zr_{0.80}Ce_{0.16}La_{0.04} oxide powder prepared in Reference Example 14, the Pt-supporting Ce_{0.50}Zr_{0.45}Y_{0.05} oxide powder prepared in Reference Example 21, the Ca_{1.020}Ti_{0.985}Rh_{0.015}O_{3+δ} powder prepared in Reference Example 1, the Ca_{0.98}Ti_{0.98}Pt_{0.02}O_{3-δ'} powder prepared in Reference Example 32, and a gamma-alumina powder were mixed and pulverized in a ball mill, and combined with distilled water to obtain a slurry. The slurry was applied to the surface of the inner layer of the monolithic carrier, and dried to obtain an outer layer.

The outer layer was formed so that the monolithic carrier supports, per 1 liter thereof, 50 g of the Pt-Rh-supporting Zr_{0.80}Ce_{0.16}La_{0.04} oxide powder (amount of supported Pt: 0.25 g, amount of supported Rh: 0.25 g), 30 g of the Pt-supporting Ce_{0.50}Zr_{0.45}Y_{0.05} oxide powder (amount of supported Pt: 0.15 g), 9 g of the Ca_{1.020}Ti_{0.985}Rh_{0.015}O_{3+δ} powder (amount of supported Rh: 0.1 g), 4 g of the Ca_{0.98}Ti_{0.98}Pt_{0.02}O_{3+δ} powder (amount of supported Pt: 0.1 g), and 40 g of the gamma-alumina powder, respectively.

Next, the outer layer of the monolithic carrier was impregnated with an aqueous dinitrodiammine platinum nitrate solution and an aqueous rhodium nitrate solution, dried, and subjected to a heat treatment (baking) in an electric furnace at 600°C for 3 hours to obtain a covering layer.

The covering layer was formed so that the monolithic carrier supports, per 1 liter thereof, 0.1 g of Pt and 0.05 g of Rh.

Thus, a catalyst composition comprising three layers of coatings was prepared. The amounts of supported Pt, Rh, and Pd of the catalyst composition as a whole are 0.6 g/L, 0.4 g/L, and 0.3 g/L, respectively.

### Example 17

The La_{1.00}Fe_{0.95}Pd_{0.05}O₃ powder prepared in Reference Example 5 and a theta-alumina powder were mixed and pulverized in a ball mill, and combined with distilled water to obtain a slurry. The slurry was applied to an inner surface of each cell of a monolithic carrier, dried, and baked at 600°C for 3 hours to obtain an inner layer.

The inner layer was formed so that the monolithic carrier supported, per 1 liter thereof, 15 g of the La_{1.00}Fe_{0.95}Pd_{0.05}O₃ powder (amount of supported Pd: 0.3 g) and 100 g of the theta-alumina powder, respectively.

Next, the Pt-Rh-supporting theta-alumina powder obtained in Reference Example 23, the Pt-supporting Ce_{0.50}Zr_{0.45}Y_{0.05} oxide powder obtained in Reference Example 18, and the Ca_{0.98}Zr_{0.98}Pt_{0.02}O_{3-δ'} powder obtained in Reference Example 43 were mixed and pulverized in a ball mill, and combined with distilled water to obtain a slurry. The slurry was applied to the surface of the inner layer on the monolithic carrier, dried, and then baked at 600°C for 3 hours to obtain an outer layer.

The outer layer was formed so that the monolithic carrier supports, per 1 liter thereof, 60 g of the Pt-Rh-supporting theta-alumina powder (amount of supported Pt: 0.3 g; amount of supported Rh: 0.2 g), 40 g of the Pt-supporting Ce_{0.50}Zr_{0.45}Y_{0.05} oxide powder (amount of supported Pt: 0.15 g), and 7 g of the Ca_{0.98}Zr_{0.98}Pt_{0.02}O_{3-δ}' powder (amount of supported Pt: 0.15 g), respectively.

Thus, a catalyst composition comprising two coating layers was prepared. The amounts of supported Pt, Rh, and Pd of the catalyst composition as a whole were 0.6 g/L, 0.2 g/L, and 0.3 g/L, respectively.

### Example 18

The La_{1.02}Fe_{0.95}Pd_{0.05}O_{3+δ''} powder prepared in Reference Example 27, the Ba/Pt-supporting Ce_{0.50}Zr_{0.45}Y_{0.05} oxide powder prepared in Reference Example 39 and a theta-alumina powder were mixed and pulverized in a ball mill, and combined with distilled water to obtain a slurry. The slurry was applied to an inner surface of each cell of a monolithic carrier, dried, and baked at 600°C for 3 hours to obtain an inner layer.

The inner layer was formed so that the monolithic carrier supports, per 1 liter thereof, 15 g of the La_{1.02}Fe_{0.95}Pd_{0.05}O_{3+δ"} powder (amount of supported Pd: 0.3 g), 10 g of the Ba/Pt-supporting Ce_{0.50}Zr_{0.45}Y_{0.05} oxide powder (amount of supported Pt: 0.1 g) and 90 g of the theta-alumina powder, respectively.

Next, the Pt-Rh-supporting Zr_{0.18}Ce_{0.16}La_{0.02}Nd_{0.04} oxide powder prepared in Reference Example 10, Ba/Pt-supporting Ce_{0.50}Zr_{0.45}Y_{0.05} oxide powder prepared in Reference Example 39, the Ca_{1.010}Zr_{0.985}Pt_{0.015}O_{3+δ'} powder prepared in Reference Example 29 and a theta-alumina powder were mixed and pulverized in a ball mill, and combined with distilled water to obtain a slurry. The slurry was applied to the surface of the inner layer of the monolithic carrier, dried and baked at 600°C for 3 hours to obtain an outer layer.

The outer layer was formed so that the monolithic carrier supports, per 1 liter thereof, 60 g of the Pt-Rh-supporting Zr_{0.78}Ce_{0.16}La_{0.02}Nd_{0.04} oxide powder (amount of supported Pt : 0.15 g, amount of supported Rh: 0.3 g), 10 g of the Ba/Pt-supporting Ce_{0.50}Zr_{0.45}Y_{0.05} oxide powder (amount of supported Pt : 0.1 g), 3 g of the Ca_{1.00}Zr_{0.985}Pt_{0.015}O_{3+δ'} powder (amount of supported Pt: 0.05 g), and 90 g of the theta-alumina powder, respectively.

Thus, a catalyst composition comprising two layers of coatings was prepared. Amounts of the supported Pt, Rh, and Pd of the catalyst composition as a whole are 0.4 g/L, 0.3 g/L, and 0.3 g/L, respectively.

### Example 19

The Rh-supporting Zr_{0.777}Ce_{0.160}La_{0.020}Nd_{0.040}Rh_{0.003} oxide powder prepared in Reference Example 8, the Ca_{1.00}Ti_{0.98}Rh_{0.02}O₃ powder prepared in Reference Example 2, the Pt-supporting Ce_{0.50}Zr_{0.45}Y_{0.05} oxide powder prepared in Reference Example 20, the Ca_{1.010}Zr_{0.985}Pt_{0.015}O_{3+δ'} powder prepared in Reference Example 29, and a theta-alumina powder were mixed and pulverized in a ball mill, and combined with distilled water to obtain a slurry. The slurry was applied to the surface of a monolithic carrier, dried, and baked at 600°C for 3 hours to obtain a coating layer.

The coating layer was formed so that the monolithic carrier supports, per 1 liter thereof, 20 g of the Rh-supporting Zr_{0.777}Ce_{0.160}La_{0.020}Nd_{0.040}Rh_{0.003} oxide powder (amount of supported Rh: 0.1 g), 20 g of the Ca_{1.00}Ti_{0.98}Rh_{0.02}O₃ powder (amount of supported Rh: 0.3 g), 60 g of the Pt-supporting Ce_{0.50}Zr_{0.45}Y_{0.05} oxide powder (amount of supported Pt: 0.4 g), 6 g of the Ca_{1.010}Zr_{0.985}Pt_{0.015}O_{3+δ'} powder (amount of supported Pt: 0.1 g), and 100 g of the theta-alumina powder, respectively.

### Example 20

The La_{1.02}Fe_{0.95}Pd_{0.05}O_{3+δ}" powder prepared in Reference Example 27 and a theta-alumina powder were mixed and pulverized in a ball mill, and combined with distilled water to obtain a slurry. The slurry was applied to an inner surface of each cell of a monolithic carrier, dried, and baked at 600°C for 3 hours to obtain an inner layer.

The inner layer was formed so that the monolithic carrier supports, per 1 liter thereof, 15 g of the La_{1.02}Fe_{0.95}Pd_{0.05}O_{3+δ''} powder (amount of supported Pd: 0.3 g) and 70 g of the theta-alumina powder, respectively:

Next, the Ba_{1.00}Ce_{0.98}Pt_{0.02} oxide powder prepared in Reference Example 31, a theta-alumina powder, and Ce_{0.60}Zr_{0.30}Y_{0.10} oxide powder prepared in Reference Example 34 were mixed and pulverized in a ball mill, and combined with distilled water to obtain a slurry. The slurry was applied to the surface of the inner layer of the monolithic carrier, dried, and baked at 600°C for 3 hours to obtain an intermediate layer.

The intermediate layer was formed so that the monolithic carrier supports, per 1 liter thereof, 25 g of the Ba_{1.00}Ce_{0.98}Pt_{0.02} oxide powder (amount of supported Pt: 0.3 g), 20 g of the theta-alumina powder, and 30 g of the Ce_{0.60}Zr_{0.30}Y_{0.10} oxide powder.

Next, the Rh-supporting Zr_{0.80}La_{0.05}Nd_{0.15} oxide powder prepared in Reference Example 6, the Ca_{1.020}Ti_{0.985}Rh_{0.015}O_{3+δ} powder prepared in Reference Example 1, and the theta-alumina powder were mixed and pulverized in a ball mill, and combined with distilled water to obtain a slurry. The slurry was applied to the surface of the intermediate layer of the monolithic carrier, dried, and baked at 600°C for 3 hours to obtain an outer layer.

The outer layer was formed so that the monolithic carrier supports, per 1 liter thereof, 40 g of the Rh-supporting Zr_{0.80}La_{0.05}Nd_{0.15} oxide powder (amount of supported Rh: 0.2g), 18 g of the Ca_{1.020}Ti_{0.985}Rh_{0.015}O_{3+δ} powder (amount of supported Rh: 0.2 g), and 60 g of the theta-alumina powder, respectively.

Thus, a catalyst composition comprising three layers of coatings was prepared. Amounts of the supported Pt, Rh, and Pd of the catalyst composition as a whole are 0.3 g/L, 0.4 g/L, and 0.3 g/L, respectively.

### Comparative Example 3

The Pd-supporting gamma-alumina powder prepared in Reference Example 22 and the Ce_{0.50}Zr_{0.45}Y_{0.05} oxide powder prepared in Reference Example 16 were mixed and pulverized in a ball mill, and combined with distilled water to obtain a slurry. The slurry was applied to an inner surface of each cell of a monolithic carrier, dried, and baked at 600°C for 3 hours to obtain an inner layer.

The inner layer was formed so that the monolithic carrier supports, per 1 liter thereof, 60 g of the Pd-supporting gamma-alumina powder (amount of supported Pd: 0.5 g) and 40 g of the Ce_{0.50}Zr_{0.45}Y_{0.05} oxide powder, respectively.

Next, the Pt-Rh-supporting Zr_{0.80}Ce_{0.16}La_{0.04} oxide powder prepared in Reference Example 15, the Pt-supporting Ce_{0.50}Zr_{0.45}Y_{0.05}, oxide powder prepared in Reference Example 20, and a gamma-alumina powder were mixed and pulverized in a ball mill, and combined with distilled water to obtain a slurry. The slurry was applied to the surface of the inner layer of the monolithic carrier, dried, and baked at 600°c for 3 hours to obtain an outer layer.

The outer layer was formed so that the monolithic carrier supports, per 1 liter thereof, 20 g of the Pt-Rh-supporting Zr_{0.80}Ce_{0.16}La_{0.04} oxide powder (amount of supported Pt: 0.6 g, amount of supported Rh: 0.6 g), 60 g of the Pt-supporting Ce_{0.50}Zr_{0.45}Y_{0.05} oxide powder (amount of supported Pt: 0.4 g), and 60 g of the gamma-alumina powder, respectively.

Thus, a catalyst composition comprising two layers of coatings was prepared. Amounts of the supported Pt, Rh, and Pd of the catalyst composition as a whole were 1.0 g/L, 0.6 g/L, and 0.5 g/L, respectively.

### Comparative Example 4

The Pt-Rh-supporting theta-alumina powder prepared in Reference Example 37, the Pt-Rh-supporting Zr_{0.78}Ce_{0.16}La_{0.02}Nd_{0.04} oxide powder prepared in Reference Example 33, the Pt-supporting Ce_{0.50}Zr_{0.45}Y_{0.05} oxide powder prepared in Reference Example 20, and a theta-alumina powder were mixed and pulverized in a ball mill, and combined with distilled water to obtain a slurry. The slurry was applied to an inner surface of each cell of a monolithic carrier, dried, and baked at 600°C for 3 hours to obtain a coating layer.

The coating layer was formed so that the monolithic carrier supports, per 1 liter thereof 115 g of the Pt-Rh-supporting theta-alumina powder (amount of supported Pt: 0.4 g, amount of supported Rh: 0.1 g), 45 g of the Pt-Rh-supporting Zr_{0.78}Ce_{0.16}La_{0.02}Nd_{0.04} oxide powder (amount of supported Pt: 0.4 g, amount of supported Rh: 0.4 g), 60 g of the Pt-supporting Ce_{0.50}Zr_{0.45}Y_{0.05} oxide powder (amount of supported Pt: 0.4 g), and 30 g of the theta-alumina powder, respectively.

### Example 21

The Ba_{1.01}Ce_{0.34}Zr_{0.50}Y_{0.10}Pt_{0.06}O_{3+δ'} powder prepared in Reference Example 40 and a commercially available gamma-alumina powder (average particle size: 5.0 µm, specific surface area: 200 m²/g) were mixed and pulverized in a ball mill, and combined with distilled water to obtain a slurry. The slurry was applied to the surface of a monolithic carrier having a volume of 2.0 L, dried, and baked at 600°C for 3 hours to obtain a coating layer.

The coating layer was formed so that the monolithic carrier supports, per 1 liter thereof, 51.3 g of the Ba_{1.01}Ce_{0.34}Zr_{0.50}Y_{0.10}Pt_{0.06}O_{3+δ}^{,} powder (amount of supported Pt: 2.0 g/L) and 100 g of the gamma-alumina powder, respectively.

### Example 22

The Ca_{1.00}Zr_{0.96}Pt_{0.04}O₃ powder prepared in Reference Example 41 and a commercially available gamma-alumina powder (average particle size: 5.0 µm, specific surface area: 200 m²/g) were mixed and pulverized in a ball mill, and combined with distilled water to obtain a slurry. The slurry was applied to the surface of a monolithic carrier having a volume of 2.0 L, dried, and baked at 600°C for 3 hours to obtain a coating layer.

The coating layer was formed so that the monolithic carrier supports, per 1 liter thereof, 47 g of the Ca_{1.00}Zr_{0.96}Pt_{0.04}O₃ powder (amount of supported Pt: 2.0 g/L) and 100 g of the gamma-alumina powder, respectively.

### Example 23

The Ca_{1.00}Ti_{0.97}Pt_{0.03}O₃ powder prepared in Reference Example 42 and a commercially available gamma-alumina powder (average particle size: 5.0 µm, specific surface area: 200 m²/g) were mixed and pulverized in a ball mill, and combined with distilled water to obtain a slurry. The slurry was applied to the surface of a monolithic carrier having a volume of 2.0 L, dried, and baked at 600°C for 3 hours to obtain a coating layer.

The coating layer was formed so that the monolithic carrier supports, per 1 liter thereof, 48 g of the Ca_{1.00}Ti_{0.97}Pt_{0.03}O₃ powder (amount of supported Pt: 2.0 g/L) and 100 g of the gamma-alumina powder, respectively.

### Comparative Example 5

A commercially available gamma-alumina powder (average particle size: 5.0 µm, specific surface area: 200 m²/g) was pulverized in a ball mill, and combined with distilled water to obtain a slurry. The slurry was applied to the surface of a monolithic carrier having a volume of 2.0 L, dried, and baked in the air at 600°C for 3 hours to obtain a coating layer. The monolithic carrier coated with the gamma-alumina was immersed in an aqueous dinitrodiammine platinum nitrate solution so that the monolithic carrier supports, per 1 liter thereof, 2.0 g/L of Pt, dried, and baked in the air at 300°C for 3 hours to obtain a Pt-supporting gamma-alumina catalyst.

Performance evaluation of catalyst for gasoline engines (Examples 10 to 20, Comparative Examples 3 and 4)

### (1) Endurance test

In the same manner as in case of the monolithic catalysts of Examples 1 to 9 and Comparative Examples 1 and 2, except that a V-type eight-cylinder gasoline engine of 4 L displacement was located on a dynamometer bench and the monolithic catalysts of Examples 10 to 20 and Comparative Examples 3 and 4 were respectively connected to each bank (4 cylinders) of the engine, the endurance test was carried out. The results are shown in Tables 3 and 4.

### (2) Measurement of CO-NOx cross-point purifying rate

In the same manner as in case of the monolithic catalysts of Examples 1 to 9 and Comparative Examples 1 and 2, except that the monolithic catalysts of Examples 10 to 20 and Comparative Examples 3 and 4 were respectively connected to an in-line four-cylinder gasoline engine of 1.5 L displacement, a CO-NOx cross-point purifying rates were measured. The results are shown in Tables 3 and 4.

### (3) Measurement of HC purifying temperature

In the same manner as in case of the monolithic catalysts of Examples 1 to 9 and Comparative Examples 1 and 2, except that the monolithic catalysts of Examples 10 to 20 and Comparative Examples 3 and 4 were respectively connected to an in-line four-cylinder gasoline engine of 1.5 L, the temperature at which 50% of HC in the exhaust gas was purified was measured (purifying temperature) (°C). The results are shown in Tables 3 and 4. In Table 3 and Table 4, an amount (g) of supported Pt/Rh/Pd per 1 L of each catalyst is also shown.

**Table 3**

| No. | Layer | Composition | Amount to be supported (g/L) Pt/Rh/Pd | CO-Nox Purifying rate | HC 50% Purifying temperature |
|---|---|---|---|---|---|
| Example | Inner | Pd/gamma-Al₂O₃ + Bt/Ce_{0.50}Zr_{0.45}Y_{0.05}Oxide | 0.5/0.3/0.5 | 89.5% | 371°C |
| 10 | Outer | Pt-Rh/Zr_{0.78}Ce_{0.16}La_{0.02}Nd_{0.04}Oxide + Ca_{1,01}Ti_{0.99}Pt_{0.01},O_{3+δ} | | | |
| Example 11 | Inner | La_{1.00}Fe_{0.95}Pd_{0.05}O₃ + theta-Al₂O₃ | 0.5/0.2/0.3 | 88.4% | 353°C |
| | Outer | Pt-Rh/theta-Al₂O₃ + Pt/Ce_{0.50}Zr_{0.45}Y_{0.05}Oxide + Ca_{1.010}Zr_{0.985}Pt_{0.015}O_{3+δ} | | | |
| Example | Inner | La_{1.00}Fe_{0.95}Pd_{0.05}O₃ + theta-Al₂O₃ + Bt/Ce_{0.50}Zr_{0.45}Y_{0.05}Oxide + BaSO₄ | 0.6/0.3/03 | 96.0% | 298°C |
| 12 | Outer | Pt-Rh/Zr_{0.78}Ce_{0.16}La_{0.02}Nd_{0.04} Oxide + Ca_{1.020}Ti_{0.905}Rh_{0.015}O_{3+δ} + Ca_{1.01}Ti_{0.99}Pt_{0.01}O_{3+δ} + theta-Al₂O₃ | | | |
| Example 13 | Inner | La_{1.00}Fe_{0.95}Pd_{0.05}O₃ + theta-Al₂O₃ +Ca_{1.00}Ti_{0.98}Pt_{0.02}O₃ | 0.5/0.3/0.3 | 94.2% | 310°C |
| | Outer | Rh/Zr_{0.80}La_{0.05}Nd_{0.15}Oxide + Pt/Ce_{0.50}Zr_{0.45}Y_{0.05}Oxide + Sr_{1.00}Ti_{0.97}Rh_{0.03}O₃ + theta-Al₂O₃ | | | |
| Example 14 | Inner | La_{1.02}Fe_{0.95}Pd_{0.05}O₃₊₈" + Pt/Ce_{0.50}Zr_{0.45}Y_{0.05}Oxide + theta-Al₂O₃ | 0.3/0.3/0.3 | 97.0% | 306°C |
| | Outer | Rh/Zr_{0.777}Ce_{0.160}La_{0.020}Nd_{0.040}Rh_{0.003}Oxide + Pt/Ce_{0.50}Zr_{0.45}Y_{0.05} Oxide + Ca_{1.020}Ti_{0.985}Rh_{0.015}O_{3+δ} + Pt-Rh/theta-Al₂O₃ + Ca_{1.010}Zr_{0.985}Rt_{0.015}O_{3+δ} | | | |
| Example 15 | Inner | La_{1.00}Fe_{0.95}Pd_{0.05}O₃ + Ba_{1.00}Ce_{0.98}Pt_{0.02}O₃ + Pt/Ce_{0.50}Zr_{0.45}Y_{0.05} Oxide + BaSO₄ + theta-AL₂O₃ | 0.45/0.3/0.3 | 97.5% | 318°C |
| | Outer | Zr_{0.776}Ce_{0.159}La_{0.020}Nd_{0.040}Rh_{0.005}Oxide; + Pt/Ce_{0.50}Zr_{0.45}Y_{0.05} Oxide + Ca_{1.020}Ti_{0.985}Rh_{0.015}O_{3+δ} + Pt-Rh/gamma-Al₂O₃ + Ba_{1.00}Ce_{0.98}Pt_{0.02}O₃ | | | |
| Example 16 | Inner | La_{1.00}Fe_{0.95}Pd_{0.05}O₃ + theta-Al₂O₃ + BaSO₄ | + 0.6/0.4/4.3 | 98.0% | 285°C |
| | Outer | Pt-Bh/Zr_{0.80}Ce_{0.16}La_{0.04}Oxide + Pt/Ce_{0.50}Zr_{0.45}Y_{0.05}Oxide Ca_{0.90}Ti_{0.985}Rh_{0.015}O_{3-δ} + Ca_{0.98}Ti_{0.98}Pt_{0.02}O_{3-δ}' + gamma-Al₂O₃/ impregnated with Pt-Rh (covering layer) | | | |
| Example 17 | Inner | La_{1.00}Fe_{0.95}Pd_{0.05}O₃ + theta-Al₂O₃ | 0.6/0.2/0.3 | 92.3% | 332°C |
| | Outer | Pt-Rh/theta-Al₂O₃ + Pt/Ce_{0.50}Zr_{0.45}Y_{0.05}Oxide + Ca_{0.98}Zr_{0.98}Pt_{0.02}O_{3-δ} | | | |

**Table 4**

| No. | Layer | Composition | Amount to be supported (g/L) Pt/Rh/Pd | CO-Nox purifying rate | HC50% purifying temperature |
|---|---|---|---|---|---|
| Example 18 | Inner | La_{1.02}Fe_{0.95}Pd_{0.05}O_{3+δ''} + Ba/Pt/Ce_{0.50}Zr_{0.45}Y_{0.05}Oxide + BaSO₄ + theta-A₂O₃ | 0.4/0.3/0.3 | 97.7% | 313 °C |
| | Outer | Pt-Rh/Zr_{0.78}Ce_{0.16}La_{0.02}Nd_{0.040}Oxide+ Ba/Pt/Ce_{0.50}Zr_{0.45}Y_{0.05}Oxide+ Ca_{1.010}Zr_{0.98}Pt_{0.015}O_{3+δ}+ theta-Al₂O₃ | | | |
| Example 19 | Single layer | Rh/ Zr_{0.777} Ce_{0.160} La_{0.020} Nd_{0.040}Rh_{0.003}Oxide+ Ca_{1.00}Ti_{0.98}Rh_{0.02}O₃ + Pt/Ce_{0.50}Zr_{0.45}Y_{0.05}Oxide + Ca_{1.010}Zr_{0.985}Rt_{0.015}O_{3+δ} + theta-Al₂O₃ | 0.5/0.4/- | 88.2% | 376°C |
| Example 20 | Inner | La_{1.02}Fe_{0.95}Pd_{0.05}O_{3+δ}' | 0.3/0.4/0.3 | 97.6% | 295°C |
| | Intermediate | Ba_{1.00}Ce_{0.98}Pt_{0.02}O₃ + theta-Al₂O₃ + Ce_{0.60}Zr_{0.30}Y_{0.10} | | | |
| | Outer | Rh/Zr_{0.80}La_{0.05}Nd_{0.15}Oxide + Ca_{1.020}Ti_{0.98S}Rh_{0.015}O_{3+δ} + theta-Al₂O₃ | | | |
| Comparative Example 3 | Inner | Pd/gamma-Al₂O₃ + Ce_{0.50}Zr_{0.45}Y_{0.05}Oxide | 1.0/0-6/0.5 | 79.8% | 435°C |
| | Outer | Pt-Rh/Zr_{0.80}Ce_{0.16}La_{0.04}Oxide + Pt/Ce_{0.50}Zr_{0.45}Y_{0.05} Oxide + gamma-Al₂O₃ | | | |
| Comparative Example 4 | Single layer | Pt-Rh/theta-Al₂O₃ + Pt-Rh/Zr_{0.78}Ce_{0.16}La_{0.02}Nd_{0.04} Oxide + Pt/Ce_{0.50}Zr_{0.45}Y_{0.05}Oxide+theta-Al₂O₃ | 1.2/0.5/- | 78.2% | 462°C |

As shown in Table 3 and Table 4, according to the catalyst compositions of Examples 10 to 20, excellent catalytic activity can be attained at comparatively low temperature even after subjecting to the endurance test.

Performance evaluation of catalyst for diesel engines (Examples 21 to 23, Comparative Example 5)

### (4) Endurance test

The monolithic catalysts of Examples 21 to 23 and Comparative Example 5 were subjected to a heat treatment in an electric furnace at 700°C in the air for 24 hours and then connected to an exhaust pipe of an in-line four-cylinder common-rail gasoline engine of 3.0 L with a DI turbo, and then a endurance test was carried out by continuously running the engine for 50 hours under the conditions that a catalyst-containing gas temperature reaches 450°C.

### (5) Mode purifying rate

After running a vehicle mounted with an in-line four-cylinder common-rail gasoline engine of 3.0 L with a DI turbo in which each monolithic catalyst already subjected to the endurance test is connected to an exhaust pipe by carrying out the procedure of a EUROIV exhaust gas regulation mode test of an European exhaust gas measuring test method on a chassis dynamometer, amounts of CO, HC, NOx and PM (particulate matter) discharged were measured by using a dilution tunnel. Also in case of loading no catalyst, the same test was carried out and amounts of CO, HC, NOx and PM discharged were measured. Thus, purification rates (%) due to loading of the catalyst ware determined.

**Table 5**

| No. | Layer | composition | Amount of Pt supported (g/L) | Mode purifying rate (%) | | | |
|---|---|---|---|---|---|---|---|
| | | | | CO | HC | NOx | PM |
| Example 21 | Single layer | Ba_{1.01}Ce_{0.34}Zr_{0.50}Y_{0.10}Pt_{0.06}O_{3+δ'} + gamma-Al₂O₃ | 2.0 | 69 | 81 | 11 | 34 |
| Example 22 | Single layer | Ca_{1.00}Zr_{0.96}Pt_{0.04}O₃ + gamma-Al₂O₃ | 2.0 | 64 | 77 | 12 | 27 |
| Example 23 | Single layer | Ca_{1.00}Ti_{0.97}Pt_{0.03}O₃ + gamma-Al₂O₃ | 2.0 | 61 | 73 | 17 | 25 |
| Comparative Example 5 | layer | Pt/gamma-Al₂O₃ | 2.0 | 41 | 44 | | 16 |

As shown in Table 5, according to the catalyst compositions of Examples 21 to 23, excellent catalytic activity can be attained with respect to removal of toxic substances (CO, HC, NOx and PM) to be discharged from diesel engines.

### Reference Example 43

### (Production of Ca_{0.98}Zr_{0.98}Pt_{0.02}O_{3·δ}' powder)

An aqueous slurry was prepared by the same procedure of Reference Example 28, except for charging 0.098 mol, in terms of Ca, of calcium isopropoxide and 0.098 mol, in terms of Zr, of zirconium isopropoxide in a 500 mL round-bottomed flask. The aqueous slurry was mixed with 0.002 mol, in terms of Pt, of an aqueous dinitrodiammine platinum nitrate solution and stirred at room temperature for 1 hour.

Next, the resulting mixture was evaporated to dryness by distilling off water under reduced pressure to obtain a precursor. The precursor was further subjected to a heat treatment (baking) in an electric furnace at 800°C in the air for 1 hour to obtain a brown powder of Pt-containing perovskite-type composite oxide having the composition of Ca_{0.98}Zr_{0.98}Pt_{0.02}O_{3-δ'}. The composite oxide has a Pt content of 2.16% by weight.

### Reference Example 44

### (Production of Ba_{1.0}Ce_{0.498}Zr_{0.448}Y_{0.05}Pt_{0.004} oxide + Pt/Ce_{0.50}Zr_{0.45}Y_{0.05} oxide powder)

A Pt-supporting Ce_{0.50}Zr_{0.45}Y_{0.05} oxide powder was prepared by impregnating the Ce_{0.50}Zr_{0.45}Y_{0.05} oxide powder repared in Reference Example 16 with an aqueous dinitrodiammine platinum nitrate solution, and drying and heating (baking) it in an electric furnace at 600°C for 3 hours.

The resulting Pt-supporting Ce_{0.50}Zr_{0.45}Y_{0.05} oxide powder was impregnated with an aqueous barium acetate solution, dried, and then subjected to a heat treatment (baking) in an electric furnace at 950°C for 3 hours to obtain a powder made of a mixed phase with a Ba_{1.0}Ce_{0.498}Zr_{0.448}Y_{0.050}Pt_{0.004} oxide powder (perovskite-type composite oxide in which Pt dissolves to form a solid solution) and Pt/Ce_{0.50}Zr_{0.45}Y_{0.05} oxide (Pt-supporting fluorite-type cerium composite oxide). The powder contained 0.05 g of Pt per 10 g of the powder.
Reference Example 45

### (Production of Pt-Rh/theta-Al₂O₃ powder)

A Pt-Rh-supporting theta-alumina powder was prepared by the same procedure of Reference Example 36, except for changing the amounts of the aqueous dinitrodiammine platinum nitrate solution and the aqueous rhodium nitrate solution to be impregnated.

The powder supports 0.1 g of Pt and 0.1 g of Rh per 70 g of the powder.

### Example 24

The La_{1.02}Fe_{0.95}Pd_{0.05}O_{3+δ}" powder prepared in Reference Example 27, the Ba_{1.0}Ce_{0.498}Zr_{0.448}Y_{0.050}Pt_{0.004} oxide + Pt/Ce_{0.50}Zr_{0.45}Y_{0.05} oxide powder prepared in Reference Example 44, the Ce_{0.50}Zr_{0.45}Y_{0.05} oxide powder prepared in Reference Example 35, and a theta-alumina powder were mixed and pulverized in a ball mill, and combined with distilled water to obtain a slurry. The slurry was applied to an inner surface of each cell of a monolithic carrier, dried, and then baked at 600°C for 3 hours to obtain an inner layer.

The inner layer was formed so that the monolithic carrier supported, per 1 liter thereof, 15 g of the La_{1.02}Fe_{0.95}Pd_{0.05}O_{3+δ"} powder (amount of supported Pd: 0.3 g), 40 g of the Ba_{1.0}Ce_{0.498}Zr_{0.448}Y_{0.050}Pt_{0.004} oxide + Pt/Ce_{0.50}Zr_{0.45}Y_{0.05} oxide powder (amount of supported Pt: 0.2 g), 60 g of the Pt-supporting Ce_{0.50}Zr_{0.45}Y_{0.05} oxide powder (amount of supported Pt: 0.1 g), and 50 g of the theta-alumina powder, respectively.

Next, the Rh/Zr_{0.777}Ce_{0.160}La_{0.20}Nd_{0.040}Rh_{0.003} oxide powder obtained in Reference Example 8, the Ca_{0.98}Zr_{0.98}Pt_{0.02} O_{3+δ"} powder obtained in Reference Example 43, and the Pt-Rh-containing theta-alumina powder obtained in Reference Example 45 were mixed and pulverized in a ball mill, and combined with distilled water to obtain a slurry. The slurry was applied to the surface of the inner layer on the monolithic carrier, dried, and then baked at 600°C for 3 hours to obtain an outer layer.

The outer layer was formed so that the monolithic carrier supports, per 1 liter thereof, 60 g of the Rh/Zr_{0.777}Ce_{0.160}La_{0.02}Nd_{0.04}Rh_{0.003} oxide powder (amount of supported Rh: 0.3 g), 4.65 g of the Ca_{0.98}Zr_{0.98}Pt_{0.02} O_{3+δ'} powder (amount of supported Pt: 0.1 g), and 70 g of the Pt-Rh-containing theta-alumina powder (amount of supported Pt: 0.1 g; amount of supported Rh: 0.1 g), respectively.

Thus, a catalyst composition comprising two coating layers was prepared. The amounts of supported Pt, Rh, and Pd of the catalyst composition as a whole are 0.5 g/L, 0.4 g/L, and 0.3 g/L, respectively.

### Comparative Example 6

The Pd-supporting gamma-alumina powder prepared in Reference Example 22 and the Ce_{0.50}Zr_{0.45}Y_{0.05} oxide powder prepared in Reference Example 16 were mixed and pulverized in a ball mill, and combined with distilled water to obtain a slurry. The slurry was applied to a inner surface of each cell of a monolithic carrier, dried, and then baked at 600°C for 3 hours to obtain an inner layer.

The inner layer was formed so that the monolithic carrier supports, per 1 liter thereof, 60 g of the Pd-supporting gamma-alumina powder (amount of supported Pd: 0.5 g) and 40 g of the Ce_{0.50}Zr_{0.45}Y_{0.05} oxide powder, respectively.

Next, the Pt-Rh- supporting Zr_{0.80}Ce_{0.16}La_{0.04} oxide powder obtained in Reference Example 15, the Pt-supporting Ce_{0.50}Zr_{0.45}Y_{0.05} oxide powder obtained in Reference Example 17, and the theta-alumina powder were mixed and pulverized in a ball mill, and combined with distilled water to obtain a slurry. The slurry was applied to the surface of the inner layer on the monolithic carrier, dried, and then baked at 600°c for 3 hours to obtain an outer layer.

The outer layer was formed so that the monolithic carrier supports, per 1 liter thereof, 20 g of the Pt-Rh-supporting Zr_{0.80}Ce_{0.16}La_{0.04} oxide powder (amount of supported Pt: 0.6 g; amount of supported Rh: 0. 6 g), 60 g of the Pt-supporting Ce_{0.50}Zr_{0.45}Y_{0.05} oxide powder (amount of supported Pt: 0.2 g), and 60 g of the gamma-alumina powder, respectively.

Thus, a catalyst composition comprising two coating layers was prepared. The amounts of supported Pt, Rh, and Pd of the catalyst composition as a whole are 0.8 g/L, 0.6 g/L, and 0.5 g/L, respectively.

### Performance evaluation (Example 24, Comparative Example 6)

### 1) Durability test

A V-type eight-cylinder gasoline engine of 4L was located on a work bench of a dynamometer, and each of the monolithic catalysts of Example 24 and Comparative Example 6 was connected to each bank (four-cylinder). With a single cycle of 30 seconds as shown in Fig. 2, the cycle was repeated for 48 hours for a durability test.

One cycle was set as follows, as shown in Fig. 2. From 0 to 5 seconds, a mixed gas of gasoline and air kept at a theoretical air-fuel ratio (A/F = 14.6) in a stoichiometric state was fed to the engine under feedback control and an internal temperature of exhaust gas purifying catalysts (catalyst beds) was set at around 850°C. From 5 to 7 seconds, while the feedback control was set open and the fuel was injected excessively and the fuel rich mixed gas (A/F = 11.2) was fed to the engine. From 7 to 28 seconds, while the feedback was kept open and an excessive amount of fuel was kept on being fed to the engine, secondary air was introduced from the outside of the engine through an inlet tube in upstream of the exhaust gas purifying catalysts whereby to cause the excessive fuel to react with the secondary air in the interior of the exhaust gas purifying catalysts so as to raise the temperature of the catalyst bed. In this time period, the highest temperature reached 1150°C and the A/F was kept 14.8, substantially at the theoretical air-fuel ratio. From the last 28 to 30 seconds, the fuel was not fed but the secondary air was fed to put the exhaust gas to the exhaust gas purifying catalysts into a lean state. The fuel was fed with being in the state where gasoline was mixed with a phosphorus compound. An entire amount of the phosphorus compound used in the endurance test was, in terms of phosphorus element, 0.41 g. The catalyst bed temperature was measured by a thermocouple inserted into the center of the honey-come carrier.

### (2) Measurement of CO-NOx cross-point purifying rate

In the same manner as in case of the monolithic catalysts of Examples 1 to 9 and Comparative Examples 1 and 2, except that the monolithic catalysts of Example 24 and Comparative Example 6 were connected to an in-line four-cylinder gasoline engine of 1.5 L, the CO-NOx purifying rates were measured. The results are shown in Table 6.

### (3) Measurement of HC purifying temperature

In the same manner as in case of the monolithic catalysts of Examples 1 to 9 and Comparative Examples 1 and 2, except that the monolithic catalysts of Example 24 and Comparative Example 6 were connected to an in-line four-cylinder gasoline engine of 1.5 L, a temperature at which 50% of hydrocarbons (HC) in the exhaust gas was purified was measured (purifying temperature) (°C). The results are shown in Table 6. In Table 6, amounts (g) of supported Pt/Rh/Pd per 1 L of each catalyst are also shown.

**Table 6**

| No. | Layer | Composition | Amount to be supported (g/L) Pt/Rh/Pd | CO-Nox purifying rate | HC50% purifying temperature |
|---|---|---|---|---|---|
| Example 24 | Inner | La_{1.02}Fe_{0.95}Pd_{0.05}O_{3+δ"}+ Ba_{1.0}Ce_{0.498}Zr_{0.448}Y_{0.050}Pt_{0.004}O₃+ Pt/Ce_{0.50}Zr_{0.45}Y_{0.05}Oxide + theta-Al₂O₃ | 0.5/0.4/0.3 | 87.9% | 381°C |
| | Outer | Rh/Zr_{0.777}Ce_{0.160}La_{0.020}Nd_{0.04}Rh_{0.003}Oxide+Ca_{0.90} Zr_{0.98}Pt_{0.02}O_{3-δ'} + Pt-Rh/theta-Al₂O₃ | | | |
| Comparative Example 6 | Inner | Pd/gamma-Al₂O₃ +Ce_{0.50}Zr_{0.45}Y_{0.05}Oxide | 0.8/0.6/0.5 | 65.3% | 473°C |
| | Outer | Pt-Rh/Zr_{0.80}Ce_{0.16}La_{0.04}Oxide+ Pt/Ce_{0.50}Zr_{0.45}Y_{0.05}Oxide + garama-Al₂O₃ | | | |

As shown in Table 6, according to the catalyst compositions of Example 24, excellent catalytic activity can be attained at a comparatively low temperature even after subjection to the endurance test.

While the illustrative embodiments of the present invention are provided in the above description, such is for illustrative purpose only and it is not to be construed restrictively. Modification and variation of the present invention which will be obvious to those skilled in the art is to be covered in the following claims.

### Industrial Applicability

Since the catalyst composition of the present invention can exhibit excellent catalytic performance over a long time even in a high temperature atmosphere, the catalytic composition of the present invention can be advantageously used for an organic synthesis reaction catalyst, a reductive reaction catalyst, a hydrogenation catalyst, a hydrogenolysis catalyst, an exhaust gas purifying catalyst for internal combustion engines such as automobile exhaust gas purifying catalyst, and the like.

## Claims

1. A catalyst composition comprising an Rh-containing perovskite-type composite oxide represented by the following general formula (I) and/or a Pt-containing perovskite-type composite oxide represented by the following general formula (II), and a thermostable oxide optionally containing a noble metal,
A¹ₓA²_{w}B¹_{1-(y+z)}B²_{y}Rh_{z}O_{3±δ} (I)
wherein A¹ represents at least one element selected from alkaline earth metals; A² represents at least one element selected from rare earth elements; B¹ represents at least one element selected from Ti, Zr, Hf, and tetravalent rare earth elements; B² represents at least one element selected from Al and transition elements (excluding tetravalent rare earth elements, Ti, Zr, Hf, and Rh); x and w represent atomic ratios satisfying the following conditions: 0.8 ≤ (x + w) ≤ 1.3 (0.6 ≤ x ≤ 1.3, and 0 ≤ w ≤ 0.4); y represents an atomic ratio satisfying the following condition: 0 ≤ y < 0.5; z represents an atomic ratio satisfying the following condition: 0 < z ≤ 0.5; δ represents an oxygen excess or an oxygen deficiency,
A³ᵣA⁴ₛB³₁₋₍ₜ₊ᵤ₎B⁴ₜPtᵤO_{3±δ}, (II)
wherein A³ represents at least one element selected from alkaline earth metals; A⁴ represents at least one element selected from rare earth elements; B³ represents at least one element selected from Ti, Zr, Hf, and tetravalent rare earth elements; B⁴ represents at least one element selected from Al and transition elements (excluding tetravalent rare earth elements, Ti, Zr, Hf, and Pt); r and s represent atomic ratios satisfying the following conditions: 0.8 ≤ (r + s) ≤ 1.3 (0.6 ≤ r ≤ 1.3, and 0 ≤ s ≤ 0.4); t represents an atomic ratio satisfying the following condition: 0 ≤ t < 0.5; u represents an atomic ratio satisfying the following condition: 0 < u ≤ 0.5; and δ' represents an oxygen excess or an oxygen deficiency.

2. The catalyst composition according to claim 1, wherein the atomic ratio z in the general formula (I) satisfies the following condition: 0 < z ≤ 0.2.

3. The catalyst composition according to claim 1, wherein the atomic ratio u in the general formula (II) satisfies the following condition: 0 < u ≤ 0.2.

4. The catalyst composition according to claim 1, wherein the thermostable oxide optionally containing a noble metal comprises a Pd-containing perovskite-type composite oxide represented by the following general formula (III),
A⁵ₚB⁵_{(1-q)}Pd_{q}O_{3±δ"} (III)
wherein A⁵ represents at least one element selected from rare earth elements and alkaline earth metals; B⁵ represents at least one element selected from Al, Si and transition elements (excluding rare earth elements and Pd); p represents an atomic ratio satisfying the following condition: p ≥ 0.8; q represents an atomic ratio satisfying the following condition: 0 < q ≤ 0.5; and δ" represents an oxygen excess or an oxygen deficiency.

5. The catalyst composition according to claim 4, wherein the atomic ratio q in the general formula (III) satisfies the following condition: 0 < q ≤ 0.2.

6. The catalyst composition according to claim 1, wherein the thermostable oxide optionally containing a noble metal comprises a zirconia composite oxide represented by the following general formula (IV),
Zr₁₋₍ₖ₊ₘ₎A⁶ₖNₘO₂₋ₙ (IV)
wherein A⁶ represents at least one element selected from rare earth elements, alkaline earth elements, Al, and Si; N represents at least one noble metal selected from Rh, Pt, and Pd; k represents an atomic ratio satisfying the following condition : 0.01 < k < 0.8; m represents an atomic ratio satisfying the following condition: 0 < m ≤ 0.2; and n represents an oxygen deficiency.

7. The catalyst composition according to claim 6, wherein the atomic ratio m in the general formula (IV) satisfies the following condition: 0 < m ≤ 0.05.

8. The catalyst composition according to claim 1, wherein the thermostable oxide optionally containing a noble metal comprises a zirconia composite oxide represented by the following general formula (V),
Zr_{1-(a+b)}CeₐR_{b}O_{2-c} (V)
wherein R represents an alkaline earth metal and/or a rare earth element (excluding Ce); a represents an atomic ratio satisfying the following condition: 0. 1 ≤ a ≤ 0.65; b represents an atomic ratio satisfying the following condition: 0 ≤ b ≤ 0.55; [1 - (a + b)] represents an atomic ratio of Zr satisfying the following condition: 0.35 ≤ [1-(a + b)] ≤ 0.9; c represents an oxygen deficiency.

9. The catalyst composition according to claim 1, wherein the thermostable oxide optionally containing a noble metal comprises a ceria composite oxide represented by the following general formula (VI),
Ce_{1-(d+e)}ZrₐLₑO_{2-f} (VI)
wherein L represents an alkaline earth metal and/or a rare earth element (excluding Ce); d represents an atomic ratio satisfying the following condition: 0.2 ≤ d ≤ 0.7; e represents an atomic ratio satisfying the following condition: 0 ≤ e ≤ 0.2; [1- (d + e)] represents an atomic ratio satisfying the following condition: 0.3 ≤ [1-(d + e)] ≤0.8; and f represents an oxygen deficiency.

10. The catalyst composition according to claim 1, wherein the thermostable oxide optionally containing a noble metal comprises an alumina.

11. The catalyst composition according to claim 10, wherein the alumina comprises a theta-alumina.

12. The catalyst composition according to claim 10, wherein the alumina comprises an alumina represented by the following general formula (VII),
(Al_{1-g}D_{g})₂O₃ (VII)
wherein D represents La and/or Ba; and g represents an atomic ratio satisfying the following condition: 0 ≤ g ≤ 0.5.

13. The catalyst composition according to claim 1, which further comprises at least one salt selected from sulfates, carbonates, nitrates, and acetates of Ba, Ca, Sr, Mg, or La.

14. The catalyst composition according to claim 1, wherein the Rh-containing perovskite-type composite oxide and/or Pt-containing perovskite-type composite oxide is further coated with a noble metal.

15. The catalyst composition according to claim 4, wherein the Pd-containing perovskite-type composite oxide is further coated with a noble metal.

16. The catalyst composition according to claim 1, which comprises a coating layer supported on a catalyst carrier,
the coating layer comprises at least an outer layer as a surface layer and an inner layer arranged inside the outer layer, and
the Rh-containing perovskite-type composite oxide and/or Pt-containing perovskite-type composite oxide and the thermostable oxide optionally containing a noble metal are contained at least one of the outer layer and the inner layer.

17. The catalyst composition according to claim 16, wherein at least one layer other than the outer layer comprises the Pd-containing perovskite-type composite oxide.

18. The catalyst composition according to claim 17, wherein the Rh-containing perovskite-type composite oxide and/or Pt-containing perovskite-type composite oxide is contained in at least one layer other than the layer comprising the Pd-containing perovskite-type composite oxide.

19. The catalyst composition according to claim 17, wherein the Rh-containing perovskite-type composite oxide and/or Pt-containing perovskite-type composite oxide is arranged outside the layer comprising the Pd-containing perovskite-type composite oxide.

20. The catalyst composition according to claim 17, wherein the layer comprising the Pd-containing perovskite-type composite oxide further comprises at least one salt selected from sulfates, carbonates, nitrates and acetates of Ba, Ca, Sr, Mg, or La.

21. The catalyst composition according to claim 16, which further comprises a covering layer containing a noble metal and being arranged on the outer layer.

22. The catalyst composition according to claim 17, wherein the coating layer comprises an intermediate layer arranged between the layer comprising the Pd-containing perovskite-type composite oxide and the layer comprising the Rh-containing perovskite-type composite oxide, and the intermediate layer comprises a ceria composite oxide.

23. The catalyst composition according to claim 1, which is an exhaust gas purifying catalyst.

24. The catalyst composition according to claim 23, which is an exhaust gas purifying catalyst for gasoline engines.

25. The catalyst composition according to claim 23, which is an exhaust gas purifying catalyst for diesel engines.
